(19) Europäisches Patentamt
European Patent Office
Office européen des brevets

(11) EP 2 535 760 B1

(12) **EUROPEAN PATENT SPECIFICATION**

(45) Date of publication and mention of the grant of the patent:
**07.11.2018 Bulletin 2018/45**

(51) Int Cl.:
***G02B 27/01*** *(2006.01)*

(21) Application number: **12170504.0**

(22) Date of filing: **01.06.2012**

(54) **Display apparatus**

Anzeigevorrichtung

Appareil d'affichage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.06.2011 JP 2011133913**

(43) Date of publication of application:
**19.12.2012 Bulletin 2012/51**

(73) Proprietor: **Sony Corporation**
**Tokyo 108-0075 (JP)**

(72) Inventors:
- **Machida, Akio**
  **Tokyo (JP)**
- **Sakamoto, Yukinari**
  **Tokyo (JP)**
- **Kuwahara, Mieko**
  **Tokyo (JP)**

(74) Representative: **D Young & Co LLP**
**120 Holborn**
**London EC1N 2DY (GB)**

(56) References cited:
**JP-A- 2006 162 767**
**US-A1- 2006 203 535**
**US-A1- 2007 159 673**
**US-A1- 2010 039 690**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 535 760 B1

## Description

FIELD

The present disclosure relates to a display apparatus. Embodiments relate more particularly to a display apparatus which uses a head mounted display (HMD).

In recent years, an augmented reality (AR) technology which synthesizes and presents, as electronic information, virtual objects or a variety of information as additional information in a real environment (or a part thereof) has been drawing attention. In order to realize this augmented reality technology, for example, a head mounted display has been studied as an apparatus which presents visual information. Further, as an application field, a work support in a real environment is expected. For example, there is a provision of technical information to an operator who provides or maintains road guide information. In particular, since the hands are not occupied by the head mounted display, the head mounted display is very convenient. Further, in a case where a user desires to enjoy a video or an image while moving outside, it is possible to simultaneously capture the video or image and an external environment in a visual field, to thereby allow a smooth movement.

A virtual image display apparatus (image display apparatus) which allows an observer to observe a two-dimensional image formed by an image forming device as an enlarged virtual image through a virtual image optical system is disclosed in JP-A-2006-162767, for example.

As shown in a conceptual diagram of Fig. 45, this image display apparatus 100' includes an image forming device 111 which includes a plurality of pixels arranged in a two-dimensional matrix form, a collimating optical system 112 which collimates light outputting from the pixels of the image forming device 111 into parallel light, and an optical device (light guide section) 120 which allows the light collimated into the parallel light by the collimating optical system 112 to be incident thereon, to be guided therein and to then be output therefrom. The optical device 120 includes a light guide plate 121 which allows the incident light to be propagated therein by total reflection and then to be output therefrom, a first deflecting section 130 (including a light reflection film of one layer, for example) which reflects the light incident on the light guide plate 121 so that the light incident on the light guide plate 121 is totally reflected inside the light guide plate 121, and a second deflecting section 140 (including a multi-layered light reflection film of a multi-layered structure, for example) which allows the light propagated inside the light guide plate 121 by total reflection to be output from the light guide plate 121. For example, if an HMD is configured by such an image display apparatus 100', it is possible to realize a light-weight and small-sized apparatus. With regard to reference numerals which represent the other components in Fig. 45, refer to an image display apparatus according to a first embodiment which will be described with reference to Fig. 1.

Further, a virtual image display apparatus (image display apparatus) which employs a hologram diffraction grating so as to allow an observer to observe a two-dimensional image formed by an image forming device as an enlarged virtual image through a virtual image optical system is disclosed in JP-A-2007-94175, for example.

As shown in a conceptual diagram of Fig. 46, this image display apparatus 300' basically includes an image forming device 111 which displays an image, a collimating optical system 112, and an optical device (light guide section) 320 which allows light displayed by the image forming device 111 to be incident thereon and to be guided to a pupil 21 of an observer. Here, the optical device 320 includes a light guide plate 321, and a first diffraction grating member 330 and a second diffraction grating member 340 which include a reflective volume hologram diffraction grating installed in the light guide plate 321. Further, light output from respective pixels of the image forming device 111 is incident on the collimating optical system 112, and a plurality of parallel light beams having different incident angles on the light guide plate 321 are generated by the collimating optical system 112 and are then incident on the light guide plate 321. The parallel light is incident and output through a first surface 322 of the light guide plate 321. On the other hand, the first diffraction grating member 330 and the second diffraction grating member 340 are mounted on a second surface 323 of the light guide plate 321 which is parallel to the first surface 322 of the light guide plate 321. With regard to reference numerals which represent the other components in Fig. 46, refer to an image display apparatus according to a third embodiment which will be described with reference to Fig. 6.

Further, as an image is displayed on the image display apparatus 100' or 300', an observer can view an external image and the displayed image in an overlapping manner.

However, in a case where a peripheral environment where the image display apparatus 100' or 300' is disposed is very bright, or according to content of the displayed image, a problem may arise that the observer Acannot give sufficient contrast to the observed image. A solution for solving this problem is disclosed in JP-A-2004-101197, for example. According to the technique disclosed in JP-A-2004-101197, the amount of incident light from the outside is controlled by a liquid crystal shutter.

Various respective aspects and features of the invention are defined in the appended claims. Combinations of features from the dependent claims may be combined with features of the independent claims as appropriate and not merely as explicitly set out in the claims.

However, in the technique disclosed in JP-A-2004-101197, since the amount of incident light from the outside is controlled by the liquid crystal shutter, power consumption is increased. That is, half the amount of external light incident on the image display apparatus 100' or 300' is blocked by the liquid crystal shutter which employs a polarizing plate. Further, JP-A-2004-101197 does not disclose a solution to the problem that it is desirable to control the amount of incident light from the outside in dependence on the intensity of illumination of the peripheral environment where the image display apparatus 100' or 300' is disposed.

US 2007/159673 A1 relates to scanned beam displays that use an image-guiding substrate optical element.

Accordingly, it is desirable to provide a display apparatus which is able to allow an observer to give high contrast to an observed image, to reduce power consumption, and to sufficiently increase the amount of external light incident on the image display apparatus.

An embodiment of the present disclosure is directed to a display apparatus (specifically, a head mounted display, HMD) including: (i) a spectacle type frame which is mounted on a head portion of an observer; and (ii) an image display apparatus which is installed in the frame, wherein the image display apparatus includes (A) an image forming device, and (B) an optical device which allows light output from the image forming device to be incident thereon, to be guided therein, and to be output therefrom, wherein a dimmer which adjusts the amount of external light incident from the outside is disposed in an area of the optical device where the light is output, wherein the dimmer includes a first transparent substrate and a second transparent substrate which faces the first substrate, a first electrode which is mounted on the first substrate, a second electrode which is mounted on the second substrate, and an electrolyte which is sealed between the first substrate and the second substrate and contains metal ions, wherein the first electrode includes a conductive material of a fine line shape, and wherein the second electrode includes a transparent electrode layer.

According to the display apparatus of the embodiment of the present disclosure, since the dimmer is a so-called electro-deposition type (also called an electric field precipitation type) which includes the first electrode including the conductive material of the fine line shape and the second electrode including the transparent electrode layer, an observer can give high contrast to an observed image, power consumption is reduced, and the amount of external light incident on the image display apparatus can be sufficiently increased.

Embodiments of the invention will now be described with reference to the accompanying drawings, throughout which like parts are referred to by like references, and in which:

Fig. 1 is a conceptual diagram illustrating an image display apparatus in a display apparatus according to a first embodiment.

Fig. 2 is a schematic diagram illustrating the display apparatus according to the first embodiment, when seen from the top.

Fig. 3A is a schematic diagram illustrating the display apparatus according to the first embodiment, when seen from the side, and Fig. 3B is a schematic diagram partially illustrating an optical device and a dimmer in the display apparatus according to the first embodiment, when seen from the front.

Figs. 4A and 4B are cross-sectional views schematically illustrating a behavior of the dimmer in the display apparatus according to the first embodiment, and Fig. 4C is a photomicrograph of a first electrode in the dimmer.

Fig. 5 is a conceptual diagram illustrating an image display apparatus in a display apparatus according to a second embodiment.

Fig. 6 is a conceptual diagram illustrating an image display apparatus in a display apparatus according to a third embodiment.

Fig. 7 is an enlarged cross-sectional view schematically illustrating a part of a reflective volume hologram diffraction grating in the display apparatus according to the third embodiment.

Fig. 8 is a conceptual diagram illustrating an image display apparatus in a display apparatus according to a fourth embodiment.

Fig. 9 is a schematic diagram illustrating a display apparatus according to a fifth embodiment, when seen from the front.

Fig. 10 is a schematic diagram illustrating the display apparatus according to the fifth embodiment, when seen from the top.

Fig. 11A is a schematic diagram illustrating a display apparatus according to a sixth embodiment, when seen from the top, and Fig. 11B is a schematic diagram illustrating a circuit which controls an illumination sensor.

Fig. 12A is a schematic diagram illustrating a display apparatus according to a seventh embodiment, when seen from the top, and Fig. 12B is a schematic diagram illustrating a circuit which controls an illumination sensor.

Fig. 13 is a diagram schematically illustrating light propagation in a light guide plate which forms an image display apparatus in a display apparatus according to an eighth embodiment.

Fig. 14 is a diagram illustrating a state where the display apparatus according to the eighth embodiment is mounted in a head portion of an observer, when seen from the top (only the image display device is shown and a frame is

not shown).

Fig. 15 is a conceptual diagram illustrating a state where the display apparatus according to the eighth embodiment is used.

Fig. 16 is a conceptual diagram illustrating a state where the display apparatus according to the eighth embodiment is used.

Fig. 17 is a conceptual diagram illustrating a controller which forms the display apparatus according to the eighth embodiment.

Figs. 18A and 18B are diagrams illustrating an example of an image signal in the eighth embodiment and a ninth embodiment.

Figs. 19A, 19B and 19C are schematic diagrams illustrating states where images displayed by an image display apparatuses for the left and right eye are shifted.

Fig. 20A is a conceptual diagram of the formats of an image signal to an image forming device and a signal to which observation position information from an observer (display apparatus) to an observation object is added, and Fig. 20B is a schematic diagram illustrating adjustment of a convergence angle corresponding to the distance from the display apparatus to the observation object.

Fig. 21A is a diagram schematically illustrating light propagation in a light guide plate which forms an image display apparatus in a display apparatus according to a tenth embodiment, and Fig. 21B is a conceptual diagram illustrating an arrangement state of the light guide plate or the like.

Fig. 22 is a schematic diagram illustrating the display apparatus according to the tenth embodiment, when seen from the side.

Fig. 23A is a diagram schematically illustrating light propagation in a light guide plate which forms an image display apparatus in a display apparatus according to an eleventh embodiment, and Fig. 23B is a conceptual diagram illustrating an arrangement state of the light guide plate or the like.

Fig. 24 is a schematic diagram illustrating a head mounted display in the related art, which is compared with the eighth embodiment, when seen from the side.

Fig. 25 is a conceptual diagram illustrating a file structure of data which forms a data group according to a twelfth embodiment.

Figs. 26A and 26B are a system configuration block diagram of a transmitter and a system configuration block diagram of a display apparatus, respectively, according to the twelfth embodiment.

Fig. 27 is a diagram illustrating the flow of a transmission process in the transmitter in the twelfth embodiment.

Fig. 28 is a diagram illustrating the flow of a reception process in the display apparatus in the twelfth embodiment.

Figs. 29A and 29B are diagrams schematically illustrating designated identification symbols, a data group, a plurality of pieces of data which form the data group, and the total display time which are content displayed in the display apparatus which forms the transmitter in the twelfth embodiment.

Figs. 30A and 30B are conceptual diagrams of a display apparatus according to a sixteenth embodiment.

Fig. 31 is a diagram schematically illustrating light propagation in a light guide plate which forms an image display apparatus, in the display apparatus according to the sixteenth embodiment.

Figs. 32A and 32B are conceptual diagrams of a display apparatus according to a seventeenth embodiment.

Fig. 33A is a schematic cross-sectional view illustrating a principled liquid lens when cut along arrow A-A in Fig. 33B, Fig. 33B is a schematic cross-sectional view illustrating the principled liquid lens when cut along arrow B-B in Fig. 33A, and Fig. 33C is a schematic cross-sectional view illustrating the principled liquid lens when cut along arrow C-C in Fig. 33A.

Figs. 34A to 34C are schematic cross-sectional views illustrating the principled liquid lens when cut along arrow C-C in Fig. 33A, which are schematic diagrams illustrating a behavior of the liquid lens.

Fig. 35 is the same schematic cross-sectional view as that of the liquid lens according to the eighteenth embodiment when cut along arrow A-A in Fig. 33B.

Figs. 36A to 36C are schematic cross-sectional views of the liquid lens according to the eighteenth embodiment when cut along arrow C-C in Fig. 35, which are schematic diagrams illustrating a behavior of the liquid lens.

Figs. 37A and 37B are schematic cross-sectional views of the liquid lens according to the eighteenth embodiment when cut along arrow C-C in Fig. 35, which are schematic diagrams illustrating a behavior of the liquid lens.

Fig. 38 is a conceptual diagram illustrating a liquid prism according to a nineteenth embodiment.

Fig. 39 is a cross-sectional view schematically illustrating a liquid lens of a Fresnel lens type for varying the focal distance of an optical system.

Fig. 40 is a plan view schematically illustrating a liquid lens of a Fresnel lens type for varying the focal distance of an optical system.

Fig. 41 is a conceptual diagram illustrating an image display apparatus according to a modification example of the display apparatus according to the third embodiment.

Fig. 42 is a conceptual diagram illustrating an image display apparatus according to another modification example

of the display apparatus according to the third embodiment.

Fig. 43 is a conceptual diagram illustrating an image display apparatus according to still another modification example of the display apparatus according to the third embodiment.

Fig. 44 is a schematic diagram illustrating parts of an optical device and a dimmer in yet still another modification example of the display apparatus according to the first embodiment or the third embodiment, when seen from the front.

Fig. 45 is a conceptual diagram illustrating an image display apparatus in a display apparatus in the related art.

Fig. 46 is a conceptual diagram illustrating an image display apparatus according to a modification example in the display apparatus in the related art.

Hereinafter, the present disclosure will be described on the basis of embodiments with reference to the accompanying drawings, but may be not limited thereto. A variety of numerical values or materials are exemplary. The description will be made in the following order.

1. Description of overall display apparatus according to the present disclosure
2. First embodiment (display apparatus according to the present disclosure)
3. Second embodiment (first modification of first embodiment)
4. Third embodiment (second modification of first embodiment)
5. Fourth embodiment (third modification of first embodiment)
6. Fifth embodiment (fourth modification of first embodiment)
7. Sixth embodiment (fifth modification of first embodiment)
8. Seventh embodiment (sixth modification of first embodiment)
9. Eighth embodiment (display apparatus 1A to display apparatus 1B according to the present disclosure)
10. Ninth embodiment (display apparatus 1C according to the present disclosure)
11. Tenth embodiment (modification of eighth embodiment and ninth embodiment)
12. Eleventh embodiment (modification of tenth embodiment)
13. Twelfth embodiment (display apparatus 3A according to the present disclosure)
14. Thirteenth embodiment (display apparatus 3B according to the present disclosure)
15. Fourteenth embodiment (display apparatus 3C according to the present disclosure)
16. Fifteenth embodiment (display apparatus 3D according to the present disclosure)
17. Sixteenth embodiment (display apparatus 2A according to the present disclosure)
18. Seventeenth embodiment (display apparatus 2B according to the present disclosure)
19. Eighteenth embodiment (display apparatus 2C according to the present disclosure)
20. Nineteenth embodiment (display apparatus 2D according to the present disclosure)
21. Twentieth embodiment (modification of sixteenth embodiment to nineteenth embodiment)
22. Twenty first embodiment (modification of sixteenth embodiment to twentieth embodiment), etc.

[Description of overall display apparatus according to the present disclosure]

In a display apparatus according to the present disclosure, it is preferable that a first substrate be disposed closer to the observer side than a second substrate. The reason will be described later.

In the display apparatus according to the present disclosure including the preferred embodiments as mentioned above, a first electrode preferably includes nanowires, and the average diameter of the nanowires is 1 $\mu$m or less, and preferably, 0.5 $\mu$m or less. The average length of the nanowires (average length in the long axis direction) is $1 \times 10^{-6}$ m or more and $5 \times 10^{-4}$ m or less, preferably, $5 \times 10^{-6}$ m or more and $2.5 \times 10^{-4}$ m or less, and more preferably, $1 \times 10^{-5}$ m or more and $1 \times 10^{-4}$ m or less. Further, the average diameter of the nanowires (average length in the short axis direction) is 1 $\mu$m ($1 \times 10^{-6}$ m) or less, as described above, but is preferably $5 \times 10^{-9}$ m or more and $5 \times 10^{-7}$ m or less, more preferably, $1 \times 10^{-8}$ m or more and $1 \times 10^{-7}$ m or less, and most preferably, $1 \times 10^{-8}$ m or more and $5 \times 10^{-8}$ m or less. If the average length of the nanowires is less than $1 \times 10^{-6}$ m, for example, when the first electrode is formed on the basis of a coating method or a printing method, contact between the nanowires becomes small and conduction becomes difficult. As a result, electric resistance of the first electrode may become high. On the other hand, if the average length of the nanowires exceeds $5 \times 10^{-4}$ m, the nanowires are easily and excessively tangled, and thus, dispersion stability may become poor. If the average diameter of the nanowires exceeds $1 \times 10^{-6}$ m, a characteristic as a conductor is improved, but haze due to light scattering becomes noticeable, and thus, transparency may be deteriorated. On the other hand, if the average diameter of the nanowires is smaller than $5 \times 10^{-9}$ m, transparency is improved, but conductivity becomes poor due to oxidation.

In the display apparatus according to the present disclosure which includes these preferred embodiments, a conductive material which forms the first electrode may include any material as long as it is a conductive material which is electrochemically stable. Specifically, a metallic material such as silver (Ag), bismuth (Bi), platinum (Pt), chrome (Cr),

aluminum (Al), cobalt (Co) or palladium (Pd) may be used. Among these materials, it is preferable to use silver (Ag) for reasons which will be described later. The first electrode may be obtained by coating or printing a material obtained by dispersing nanowires formed of a conductive material in a solvent on the first substrate and by performing a thermal treatment, or may be obtained by coating or printing a material obtained by dispersing microparticles formed of a, conductive material in a solvent on the first substrate and by performing the thermal treatment. In these cases, the first electrode is not patterned. Specifically, it is preferable that a portion of the first electrode which occupies an effective area of a dimmer not be patterned. Here, the effective area of the dimmer indicates an area which is equal to or larger than a projected image of a second deflecting section which will be described later. This is similarly applied, hereinafter. That is, it is preferable that the size of the projected image of the portion of the first electrode which is not patterned be equal to or larger than the projected image of the second deflecting section which will be described later. Here, it is preferable that a portion in which the first electrode is extracted to the outside be formed of a conductive material. Alternatively, the portion may be obtained by forming a metallic thin film on the first substrate, and then, by randomly (or irregularly or disorderedly) patterning the metallic thin film. As the conductive material, it is possible to use carbon (for example, carbon nanotubes). In this case, ink is formed using resin or solvent, and then, printing may be performed on the first substrate using this ink.

By forming the first electrode using nanowires on the basis of the coating method or the printing method, it is possible to obtain the first electrode formed of the nanowires which are randomly (or irregularly or disorderedly) distributed. As a result, as described above, it is possible to effectively prevent a diffraction phenomenon from occurring in light passing through the first electrode. Further, as described above, by setting the average diameter of the nanowires to 1 μm or less, and preferably, 0.5 μm or less, it is possible to more effectively prevent the diffraction phenomenon from occurring in the light passing through the first electrode, and to reduce light scattering intensity. For example, when a fluorescent lamp is viewed through the dimmer, in a case where the diffraction phenomenon occurs in light passing through the first electrode, there is a problem in that the fluorescent lamp is viewed with iridescent color and the viewing field becomes noticeably poor. However, by preventing the diffraction phenomenon from occurring in the light passing through the first electrode, it is possible to reliably avoid such a problem.

In the display apparatus according to the present disclosure including the preferred embodiments as mentioned above, it is preferable that a second electrode be not patterned in the effective area of the dimmer. That is, it is preferable that a portion of the second electrode which occupies the effective area of the dimmer include a transparent electrode layer which is not patterned (a so-called solid transparent electrode layer). Specifically, it is preferable that the size of a projected image of the second electrode which is not patterned be equal to or larger than the projected image of the second deflecting section which will be described later. A portion where the second electrode is extracted to the outside, or the like may be patterned.

In the display apparatus according to the present disclosure including the preferred embodiments as mentioned above, it is preferable that metal ions include silver ions, and an electrolyte include at least one type of salt (referred to as a "supporting electrolyte salt") selected from a group including LiX, NaX and KX (here, X indicates a fluorine atom, a chlorine atom, a bromine atom or an iodine atom).

Further, in the display apparatus according to the present disclosure including the preferred embodiments as mentioned above, due to precipitation of metal (for example, silver) on the second electrode and dissolution of metal (for example, silver) into the electrolyte, based on application of voltages to the first electrode and the second electrode, it is preferable that coloring and decoloring of the dimmer (specifically, an electro-deposition type dimmer) occur. If metal ions are silver ions and the second electrode is formed of silver, that is, if the metallic material which forms the second electrode and the metal ions are the same metal, it is possible to realize an electrode reaction which is electrochemically stable.

As a color development material which colors by electrochemical reduction and oxidation, and precipitation and dissolution associated therewith, metal ions are included in the electrolyte. Further, color development and decoloring are performed by the electrochemical precipitation and dissolution reactions of the metal ions, and thus, light transmittance of the dimmer is changed. In other words, an operation of the dimmer in the display apparatus according to the present disclosure may refer to an operation of generating precipitation of metal through so-called dissolution plating and an elution reaction of the precipitated metal in a reversible manner. In this way, the metal ions capable of realizing the color development and decoloring due to the electrochemical precipitation and dissolution are not particularly limiting, but in addition to the above-described silver (Ag), each ion of bismuth (Bi), copper (Cu), sodium (Na), lithium (Li), iron (Fe), chrome (Cr), nickel (Ni) and cadmium (Cd), or a combination of these ions may be used. Among them, particularly preferred metal ions are silver (Ag) and bismuth (Bi). The silver and the bismuth may easily realize a reversible reaction, and provides a high degree of discoloration in precipitation.

Further, the metal ions are included in the electrolyte, and specifically, substances including metal ions are dissolved in the electrolyte. More specifically, as the substances including metal ions, for example, at least one type of silver halide such as AgF, AgCl, AgBr or AgI, and preferably AgI or AgBr may be used, and the substances including these metal ions are dissolved in the electrolyte. As the concentration of the silver halide, for example, 0.03 to 2.0 mol/liter

may be used.

The electrolyte which includes the metal ions is sealed between the first electrode and the second electrode. Here, the electrolyte may be formed of an electrolytic solution or a polymer electrolyte. Here, as the electrolytic solution, a solution obtained by adding a metal salt or alkyl quaternary ammonium salt into a solvent may be used. Specifically, water, ethyl alcohol, isopropyl alcohol, 2-ethoxyethanol, 2-methoxyethanol, propyl carbonate, dimethyl carbonate, ethylene carbonate, γ-butyrolactone, acetonitrile, sulfolane, dimethoxy ethane, dimethylform-amide (DMF), diethylformamid (DEF), dimethyl sulfoxide (DMSO), N, N-dimethylacetamide (DMFF), N-methyl propionic acid amide (MPA), N-methyl pyrolidone (MP), dioxolane (DOL), ethylacetate (EA), tetrahydrofuran (THF), methyltetrahydrofuran (MeTHF), or a mixture thereof may be used as the electrolyte. Further, as a matrix (base) polymer used for the polymer electrolyte, a polymer material having repeated units of alkylene oxide, alkylene ions or alkylene sulfide as main backbone units, side chain units or main backbone and side chain units; copolymer including a plurality of units which are different these units; polymethyl methacrylate derivatives, polyvinylidene fluoride, polyvinylidene chloride, polyacrylonitride or polycarbonate derivatives; or a mixture thereof may be used. In a case where the electrolyte is formed of the polymer electrolyte, the electrolyte may have a single layer, or may have a layerd structure in which a plurality of polymer electrolytes are layered.

It is also possible to use matrix macromolucules which are swollen by addition of water or an organic solvent thereto. Particularly, in a case where a high response speed or the like is necessary, by adding water or the organic solvent to the matrix macromolecules, it is possible to easily move the metal ions included in the electrolyte.

In a case where hydrophilicity is necessary according to a characteristic of the matrix macromolucules and a desired electrochemical reaction, it is preferable to add water, ethyl alcohol, isopropyl alcohol, a mixture thereof, or the like. In a case where hydrophobicity is necessary, it is preferable to add propylene carbonate, dimethyl carbonate, ethylene carbonate, γ-butyrolactone, acetonitrile, sulfolane, dimethoxy ethane, ethyl alcohol, isopropyl alcohol, dimethlyform-amide, dimethyl sulfoxide, dimethylacetamide, n-methyl pyrolidone, or a mixture thereof.

As described above, the coloring and decoloring of the dimmer (specifically, electro-deposition type dimmer) occur due to precipitation of the metal on the second electrode and dissolution of the metal into the electrolyte, based on application of voltages to the first electrode and the second electrode. Here, generally, concaves and convexes are generated on a surface, which is in contact with the electrolyte, of a layer (metallic layer) formed of the metal precipitated on the second electrode, which assumes a blackish tinge, but a surface of the metallic layer which is in contact with the second electrode has a mirror surface form. Accordingly, in a case where it is used as the dimmer, it is preferable that the surface of the metallic layer which is in contact with the electrolyte be directed to an observer side. In other words, it is preferable that the first substrate be disposed closer to the observer side than the second substrate.

As described above, by adding a salt (supporting electrolyte salt) which includes a different type of ions from the type of metal ions to be precipitated and dissolved into the electrolyte, it is possible to more effectively and stably perform the electrochemical precipitation and dissolution reactions. As such a supporting electrolyte salt, it is possible to use the above-described lithium salt, kalium salt, sodium salt or tetra alkyl quaternary ammonium salt. Here, as the lithum salt, specifically, LiCi, LiBr, LiI, $LiBF_4$, $LiClO_4$, $LiPF_6$, $LiCF_3SO_3$ or the like may be used. Further, as the kalium salt, specifically, KCl, KI, KBr or the like may be used. Further, as the sodium salt, specifically, NaCl, NaI, NaBr or the like may be used. Further, as the tetra alkyl quaternary ammonium salt, specifically, boron-tetraethyl fluoride ammonium salt, percholoric acid tetraethyl ammonium salt, boron-tetrabutyl ammonium salt, percholoric acid tetrabutyl ammonium salt, tetrabutyl ammonium halide salt or the like may be used. The alkyl chain length of the above-described quaternary ammonium salt may be not uniform. The supporting electrolyte salt may be added with a concentration of approximately 1/2 to 5 times the concentration of the substances which includes metal ions, for example. Further, inorganic particles may be mixed with the electrolyte formed of the polymer electrolyte as a coloring agent.

Further, in order to effectively perform the electrochemical reaction, particularly, the precipitation and dissolution reaction of metal in a reversible manner, at least one type of additive agent such as a growth inhibitor, stress inhibitor, brightening agent, complexing agent or reducing agent may be added. As such an additive agent, an organic compound which includes a group which includes oxygen atoms or sulfuric acid atoms is preferably used. For example, it is preferable to add at least one type selected from a group which includes thio-iodine, 1-allyl-2-thio-iodine, mercaptobenzimidazole, courmarin, phthalic acid, succinic acid, salicylic acid, glycolic acid, dimethyl amine borane (DMAB), trimethyl amine borane (TMAB), tartalic acid, oxalic axid and D-glucono-1, 5-lactone. Particularly, by adding mercaptobenzimidazole (see the following structural formula) in association with mercaptoalkylimidazole, it is possible to enhance reversibility, and to obtain superior effects in long-life storability and high-temperature storability.

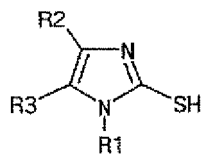

Here, R1, R2 and R3 represent an alkyl group expressed as a hydrogen atom or $C_nH_{2n+1}$ (here, n is an integer of 1 or more), respectively.

Further, when the electrochemical reaction occurs, a sub reaction other than a predetermined reaction may occur. For example, in a case where a salt which includes halide is contained in an electrolyte, the salt is oxidized from an ion status by the following reaction according to an electric potential. Further, accordingly, color development other than desired color development occurs.

$$I_2 + 2e^- \rightarrow \text{ or } \leftarrow 2I^- \ (0.536V)$$

$$Br_2 + 2e^- \rightarrow \text{ or } \leftarrow 2Br^- \ (1.065V)$$

$$Cl_2 + 2e^- \rightarrow \text{ or } \leftarrow 2Cl^- \ (1.360V)$$

Accordingly, in order to prevent occurrence of the unnecessary color development, it is necessary to suppress the above-mentioned sub reaction and to reduce the oxidized halide. In this case, it is possible to use a general reducing agent as a reducing agent, which may be added to the electrolyte as an additive agent. For example, it is preferable to use an ascorbic acid compound, trialkyl alcohol amide expressed as the following formula, or the like, as such a reducing agent.

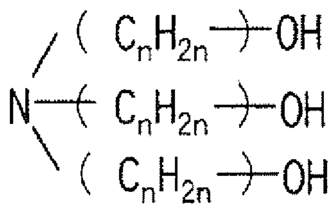

Particularly, as triethanol amine which is a kind of trialkyl alcohol amines and is expressed as the following formula is added to the electrolyte, it is possible to obtain superior effects in long-life storability and high-temperature storability.

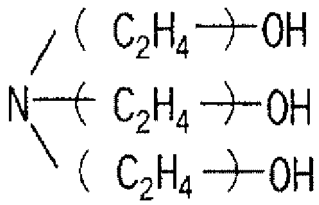

Further, in a case where the reduction reaction occurs due to the sub reaction other than the predetermined reaction, an oxidizing agent is added thereto. Accordingly, when metal is precipitated, it is preferable to add a reducing agent or an oxidizing agent for suppressing the sub reaction mainly caused by anion species which may occur in either the first electrode or the second electrode to the electrolyte.

In the dimmer in the display apparatus of the present disclosure including the variety of preferred embodiments as mentioned above, it is preferable that the distance between the first electrode and the second electrode be 20 μm to 200 μm. As the distance between the first electrode and the second electrode becomes short, electric resistance between the electrodes becomes decreased, and thus, the coloring and decoloring time is reduced and power consumption is reduced, which is preferable. However, if the distance between the first electrode and the second electrode is shorter than 20 μm, the mechanical strength is reduced, which may cause pin-holes or cracks. Further, in a case where the distance between the first electrode and the second electrode is too short, since the electric field is concentrated to be biased, color unevenness may occur thereby causing contrast unevenness when an observer views an image.

The first substrate and the second substrate are sealed by a sealant in an outer edge portion and are adhered to each other. As the sealant called a sealing agent, it is possible to use a variety of resins of a thermosetting type, photo-curing type, moisture curing type, anaerobic curing type or the like such as epoxy resin, urethane based resin, acryl based resin, vinyl acetate based resin, enthiol based resin, silicon based resin, degeneration polymer resin, or the like. Columnar structure may be included in the electrolyte, as necessary. The columnar structures are formed by columnar structures such as a cylindrical body, quadrangular prism body, elliptical cylinder body, or trapezoid cylinder body which are arranged at regular intervals on the basis of a predetermined pattern such as a lattice arrangement, to

provide strong self-maintainability (strength) between the substrates. This pattern may have the shape of stripes arranged at predetermined intervals. It is preferable that the columnar structures have an arrangement which is able to appropriately retain intervals between the substrates, such as an equal spacing arrangement, an arrangement in which intervals are gradually changed, an arrangement in which a predetermined arrangement pattern is repeated at a constant cycle, or the like, instead of a random arrangement, and have an arrangement which does not obstruct light transmission in the dimmer. Spacers may be disposed between one pair of substrates to uniformly retain gaps between the substrates. As the spacers, a spherical body made of resin or inorganic compound may be used. Further, fixed spacers in which thermoplastic resin is coated on its surface may be also preferably used. Only the columnar structures may be arranged for uniformly retaining the gaps between the substrates, both of the spacers and the columnar structures may be arranged, or only the spacers may be arranged instead of the columnar structures. In a case where the spacers is used together with the columnar structures, the diameter of the spacers is equal to or lower than the height of the columnar structures, and preferably, is equal to the height of the columnar structures. In a case where the columnar structures are not arranged, the diameter of the spacers corresponds to the thickness of gaps between one pair of substrates.

As materials which form the first substrate and the second substrate which are transparent, specifically, a transparent glass substrate such as sodalime glass or white plate glass, a plastic substrate, a plastic sheet or a plastic film may be used. Here, as the plastic, cellulose ester such as polyethylene terephthalate, polyethylene naphthalate, polycarbonate or cellulose acetate; fluoropolymer such as copolymer of polyvinylidene fluoride or polytetra fluoro ethylene and hexafuloropropylene; polyether such as polyoxymethylene, polyolefin such as polyacetal, polystyrene, polyethylene, polypropylene or methyl pentane polymer; polyimide such as polyamide imide or polyethylene imide; polyamide; polyether sulfone; polyphenylene sulfide; polyviniylidene chloride; tetraacetyl cellulose; brominated phenoxy; polyalylate; polysulfone; or the like may be used. The plastic sheet and the plastic film may have stiffness which does not allow easy bending, and may also have flexibility. In a case where the first substrate and the second substrate are formed of a transparent plastic substrate, a barrier layer formed of an inorganic material or an organic material may be formed on an inner surface thereof.

As the second electrode, it is possible to use a so-called transparent electrode. Specifically, conductive polymer such as indium-tin oxide (ITO, including Sn-doped $In_2O_3$, crystalline ITO and amorphous ITO), fluorine-doped $SnO_2$ (FTO), IFO (F-doped $In_2O_3$), antimony-doped $SnO_2$ (ATO), $SnO_2$, ZnO (including Al-doped ZnO or B-doped ZnO), indium-zinc oxide (IZO), spinel type oxide, oxide having an $YbFe_2O_4$ structure, polyanilline, polypinol, or polythiophene may be used, but these materials are not limiting. Further, it is also possible to use a material obtained by combining two or more types among the materials. The second electrode may be formed on the basis of a physical vapor deposition method (PVD method) such as vacuum deposition or sputtering, a variety of chemical vapor deposition methods (CVD method), or a variety of coating methods. Patterning of the electrode may be performed by a random method such as an etching method, a lift-off method or a method which uses a variety of masks.

The display apparatus according to the present disclosure including the variety of preferred embodiments as mentioned above may further include an illumination sensor (for convenience of description, may be referred to as a "environment illumination measuring sensor") which measures the intensity of illumination of an environment where the display apparatus is disposed, and light transmittance of the dimmer may be controlled on the basis of the measurement result of the illumination sensor (environment illumination measuring sensor).

Further, the display apparatus according to the present disclosure including the preferred embodiments as mentioned above may further include an illumination sensor (environment illumination measuring sensor) which measures the intensity of illumination of an environment where the display apparatus is disposed, and brightness of an image formed by an image forming device may be controlled on the basis of the measurement result of the illumination sensor (environment illumination measuring sensor).

Further, the display apparatus according to the present disclosure including the preferred embodiments as mentioned above may further include a second illumination sensor (for convenience of description, may be referred to as a "transmitted light illumination measuring sensor") which measures the intensity of illumination based on light passing through a dimmer from the external environment, light transmittance of the dimmer may be controlled on the basis of the measurement result of the second illumination sensor (transmitted light illumination measuring sensor).

Further, the display apparatus according to the present disclosure including the preferred embodiments as mentioned above may further include a second illumination sensor (for convenience of description, may be referred to as a "transmitted light illumination measuring sensor") which measures the intensity of illumination based on light passing through a dimmer from the external environment, and brightness of an image formed by an image forming device may be controlled on the basis of the measurement result of the second illumination sensor (transmitted light illumination measuring sensor).

Here, in the display apparatus according to the present disclosure including the second illumination sensor (transmitted light illumination measuring sensor), it is preferable that the second illumination sensor be disposed closer to the observer side than an optical device.

In the display apparatus according to the present disclosure including the variety of preferred embodiments as

mentioned above, the highest light transmittance of the dimmer may be 50% or more, and the lowest light transmittance of the dimmer may be 30% or less. The upper limit of the highest light transmittance of the dimmer may be 99%, and the lower limit of the lowest light transmittance of the dimmer may be 1%.

Further, in the display apparatus according to the present disclosure including the variety of preferred embodiments and configurations as mentioned above, when the measurement result of the illumination sensor (environment illumination measuring sensor) becomes equal to or greater than a predetermined value (for convenience of description, may be referred to as a "first illumination measurement value"), the light transmittance of the dimmer may be equal to or smaller than a predetermined value (for convenience of description, may be referred to as a "first light transmittance"). Alternately, when the measurement result of the illumination sensor (environment illumination measuring sensor) becomes equal to or smaller than a predetermined value (for convenience of description, may be referred to as a "second illumination measurement value"), the light transmittance of the dimmer may be equal to or greater than a predetermined value (for convenience of description, may be referred to as a "second light transmittance"). Further, in consideration of the intensity of illumination of the environment illumination measuring sensor, in a case where the measurement result of the transmitted light illumination measuring sensor does not reach a predetermined illumination, or in a case where finer illumination adjustment is necessary, the light transmittance of the dimmer may be adjusted while monitoring the value of the second illumination sensor (transmitted light illumination measuring sensor). Here, the first illumination measurement value may be set to 10 lux, the first transmittance may be set to any value of 1% to 30%, the second illumination measurement value may be set to 0.01 lux, and the second transmittance may be set to any value of 51% to 99%. Further, in a case where the illumination measurement value of the environment illumination measuring sensor is $1 \times 10^{-3}$ lux or less, for example, it is preferable that a drive voltage of the dimmer is increased to reduce a drive time, to increase the light transmittance of the dimmer as fast as possible.

Further, in the display apparatus according to the present disclosure including the variety of preferred embodiments and configurations as mentioned above, the dimmer may be detachably disposed or may be fixed in an area of the optical device where light is output. In order to detachably dispose the dimmer, the dimmer may be installed in the optical device, which may be connected to a control circuit image forming device which controls the light transmittance of the dimmer (for example, included in a controller which controls the image forming device) through a connector and a wire. In order to detachably dispose the dimmer, for example, the dimmer may be installed to a frame using a screw made of transparent plastic. Further, a groove may be cut in the frame and the dimmer may be then engaged with the groove. Further, a magnet may be installed in the frame, and the dimmer may be then installed to the frame. Further, a sliding section may be provided in the frame, and the dimmer may be then inserted in the sliding section. Further, a connector may be installed in the dimmer, and the dimmer may be then electrically connected to a control circuit image forming device which controls the light transmittance of the dimmer (for example, included in a controller which controls the image forming device) through the connector and a wire.

Further, in the display apparatus according to the present disclosure including the variety of preferred embodiments and configurations as mentioned above, the optical device may include (a) a light guide plate which allows incident light to be propagated therein by total reflection and then to be output therefrom, (b) a first deflecting section which deflects the light incident on the light guide plate so that the light incident on the light guide plate is totally reflected inside the light guide plate, and (c) a second deflecting section which deflects the light propagated inside the light guide plate by total reflection over a plurality of times so as to allow the light propagated inside the light guide plate by total reflection to be output from the light guide plate. Here, the term "total reflection" means total internal reflection or total reflection inside the light guide plate. Hereinafter, this meaning is similarly applied. Further, in this case, the second deflecting section may be positioned in a projected image of the dimmer, or the dimmer may be positioned in a projected image of the second deflecting section. Further, the second deflecting section may be coated by one of substrates which form the dimmer.

In the display apparatus according to the present disclosure including the variety of preferred embodiments and configurations as mentioned above, the optical device and the dimmer may be arranged in that order from the observer side, or may be arranged in the order of the dimmer and then the optical device from the observer side. Further, the illumination sensor (environment illumination measuring sensor and transmitted light illumination measuring sensor) in the display apparatus according to the present disclosure including the variety of preferred embodiments and configurations as mentioned above may include a known illumination sensor or control of the illumination sensor may be performed on the basis of a known control circuit.

In the display apparatus according to the present disclosure including the variety of preferred embodiments and configurations as mentioned above (hereinafter, may be simply referred to as "display apparatus of the present disclosure"), the optical device is a semi-transmissive type (see-through type). Specifically, by configuring at least a portion of the optical device which faces both eyes of an observer as the semi-transmissive type (see-through type), it is possible to see an outside scene through this portion of the optical device. The display apparatus may have one or two image display apparatuses.

Here, the first deflecting section may reflect the light incident on the light guide plate, and the second deflecting

section may transmit and reflect the light propagated inside the light guide plate by total reflection over a plurality of times. Further, in this case, the first deflecting section may function as a reflecting mirror, and the second deflecting section may function as a semi-transmissive mirror.

In such a configuration, the first deflecting section may be formed of metal which includes alloy, for example, or may be formed by a light reflection film (a kind of mirror) which reflects the light incident on the light guide plate or a diffraction grating (for example, hologram diffraction grating film) which diffracts the light incident on the light guide plate. Further, the second deflecting section may be formed by a multi-layered structure in which a plurality of dielectric films are layered, a half mirror, a polarized beam splitter, or a hologram diffraction grating film. Further, the first deflecting section or the second deflecting section may be arranged inside the light guide plate (inserted inside the light guide plate), but in the first deflecting section, parallel light incident on the light guide plate is reflected or diffracted so that the parallel light incident on the light guide plate is totally reflected inside the light guide plate. On the other hand, in the second deflecting section, parallel light propagated inside the light guide plate by total reflection is reflected or diffracted over a plurality of times, and then is output from the light guide plate in the state of parallel light.

Further, the first deflecting section may diffract the light incident on the light guide plate, and the second deflecting section may diffract the light propagated inside the light guide plate by total reflection over a plurality of times. Further, in this case, the first deflecting section and the second deflecting section may include a configuration of a diffraction grating element. Here, the diffraction grating element may include a reflective diffraction grating element or a transmissive diffraction grating. Further, one diffraction grating element may include the reflective diffraction grating element and the other diffraction grating element may include the transmissive diffraction grating element. Further, as the reflective diffraction grating element, a reflective volume hologram diffraction grating may be used. For convenience of description, the first deflecting section which includes the reflective volume hologram diffraction grating may be referred to as a "first diffraction grating member", and the second deflecting section which includes the reflective volume hologram diffraction grating may be referred to as a "second diffraction grating member".

Image display of a single color (for example, green) may be performed by the image display apparatus according to the present disclosure, but in a case where color image display is performed, the first diffraction grating member or the second diffraction grating member may have a layered configuration of a diffraction grating layer of P layers which includes the reflective volume hologram diffraction grating is layered, in order to match diffraction and reflection of P types of lights having wavelength bands (or wavelengths) of different P types (for example, P = 3, and three types of red, green and blue) . Interference fringes corresponding to one type of wavelength band (or wavelength) are formed in each diffraction grating layer. Further, P types of interference fringes may be formed in the first diffraction grating member or the second diffraction grating member which includes a diffraction grating layer of one layer, in order to match P types of light diffractions and reflections having P types of different wavelength bands (or wavelengths). Further, a view angle may be equally divided into three, for example, and the first diffraction grating member or the second diffraction grating member may have a layered configuration of a diffraction grating layer corresponding to each view angle. Further, with these configurations, it is possible to increase diffraction efficiency and a diffraction reception angle and to optimize a diffraction angle when light having each wavelength band (or wavelength) is diffracted and reflected in the first diffraction grating member or the second diffraction grating member.

As a material which forms the first diffraction grating member and the second diffraction grating member, a photopolymer material may be used. The material or basic structure which forms the first diffraction grating member and the second diffraction grating member which include the reflective volume hologram diffraction grating may be the same as the material or structure which forms a reflective volume hologram diffraction grating in the related art. The reflective volume hologram diffraction grating refers to a hologram diffraction grating which diffracts and reflects only positive primary diffracted light. In the diffraction grating member, the interference fringes are formed over the front surface from the inside, and a method of forming the interference fringes may be the same as a forming method in the related art. Specifically, for example, a member (for example, photopolymer material) which forms the diffraction grating member may be irradiated with object light from a first predetermined direction on one side, and at the same time, the member which forms the diffraction grating member may be irradiated with reference light from a second predetermined direction on the other side, and the interference fringes formed by the object light and the reference light may be recorded inside the member which forms the diffraction grating member. By appropriately selecting the first predetermined direction, the second predetermined direction and wavelengths of the object light and the reference light, it is possible to obtain a desired pitch and a desired inclination angle (sliding angle) of the interference fringes on the front surface of the diffraction grating member. The inclination angle of the interference fringes refers to an angle which is formed by the front surface of the diffraction grating member (or diffraction grating layer) and the interference fringes. In a case where the first diffraction grating member and the second diffraction grating member include the layered structure of the diffraction grating layers of P types which include the reflective volume hologram diffraction grating, such layering of the diffraction grating layers may be achieved by individually manufacturing the diffraction grating layers of P types and then by layering (adhering) the diffraction grating layers of P types using an ultraviolet curing adhesive, for example. Further, by manufacturing a diffraction grating layer of one layer using an adhesive photopolymer material, and then, by sequentially

attaching the adhesive photopolymer material thereon, to manufacture diffraction grating layers, the diffraction grating layers of P types may be manufactured.

Further, in the image display apparatus according to the present disclosure, the optical device may include a semi-transmissive mirror which allows light output from the image forming device to be incident thereon and to be then output toward the pupil of an observer. Here, the light output from the image forming device may be propagated in the air and may be incident on the semi-transmissive mirror. For example, the light may be propagated inside a transparent member (specifically, a member formed of the same material as the material which forms the light guide plate (which will be described later)) and may then be incident on the semi-transmissive mirror. The semi-transmissive mirror may be installed in the image forming device through this transparent member, or may be installed in the image forming device through a member different from the transparent member.

In the image forming device according to the present disclosure including the variety of preferred embodiments and configurations as mentioned above, the image forming device may have a plurality of pixels which are arranged in a two-dimensional matrix form. The configuration of the image forming device is referred to as an "image forming device of a first configuration" for convenience of description.

As the image forming device of the first configuration, for example, an image forming device which includes a reflective spatial light modulator and a light source; an image forming device which includes a transmissive spatial light modulator and a light source; or an image forming device which includes a light emitting device such as an organic EL (Electro Luminescence), an inorganic EL or a light emitting diode (LED) may be used. Among them, the image forming device which includes the reflective spatial light modulator and the light source is preferably used. As the spatial light modulator, a transmissive or reflective liquid crystal display such as a light bulb, for example, LCOS (Liquid Crystal On Silicon), or a digital micromirror device (DMD) may be used. Further, as the light source, a light emitting device may be used. Further, the reflective spatial light modulator may include a polarized beam splitter which reflects part of light from the liquid crystal display and the light source to guide it to the liquid crystal display, and transmits part of the light reflected by the liquid crystal display to guide it to an optical system. As the light emitting device which forms the light source, a red light emitting device, a green light emitting device, a blue light emitting device and a white light emitting device may be used. Further, red light, green light and blue light which are emitted from the red light emitting device, the green light emitting device and the blue light emitting device may be mixed and uniformized in brightness using a light pipe, to thereby obtain white light. As the light emitting device, for example, a semiconductor laser device, a solid laser or an LED may be used. The number of pixels may be determined on the basis of a demanded specification in the image display apparatus. As a specific value of the number of pixels, $320 \times 240$, $432 \times 240$, $640 \times 480$, $1024 \times 768$, $1920 \times 1080$, or the like may be used.

Further, in the image forming device according to the present disclosure including the variety of preferred embodiments and configurations as mentioned above, the image forming device may have a configuration which includes a light source and a scanning section which scans parallel light output from the light source. Such a configuration of the image forming device is referred to as an "image forming device of a second configuration" for convenience of description.

As the light source in the image forming device of the second configuration, a light emitting device may be used. Specifically, a red light emitting device, a green light emitting device, a blue light emitting device, and a white light emitting device may be used. Further, red light, green light and blue light which are emitted from the red light emitting device, the green light emitting device and the blue light emitting device are mixed and uniformized in brightness using a light pipe, to there obtain white light. As the light emitting device, for example, a semiconductor laser device, a solid laser or an LED may be used. The number of pixels (virtual pixels) in the image forming device of the second configuration may be determined on the basis of a demanded specification in the image display apparatus. As a specific value of the number of pixels (virtual pixels), $320 \times 240$, $432 \times 240$, $640 \times 480$, $1024 \times 768$, $1920 \times 1080$, or the like may be used. Further, in a case where color image display is performed, when the light source includes the red light emitting device, the green light emitting device and the blue light emitting device, for example, color composition is preferably performed using a cross prism. As the scanning section, MEMS (Micro Electro Mechanical Systems) which scans light emitted from the light source horizontally and vertically, for example, which has a micromirrors or Galvano mirrors which are able to rotate in two-dimensional directions may be used.

In the image forming device of the first configuration and the image forming device of the second configuration, light which is collimated into a plurality of parallel light beams using the optical system (an optical system which collimates output light into parallel light, which may be referred to as a "parallel light outputting optical system", and specifically, for example, a collimating optical system or a relay optical system) is incident to the light guide plate, but such a request of the parallel light is based on the fact that it is necessary that lightwave surface information at the time when the light is incident to the light guide plate be stored even after the light is output from the light guide plate through the first deflecting section and the second deflecting section. In order to generate a plurality of parallel light beams, specifically, for example, a light outputting section of the image forming device may be disposed at the position of the focal distance in the parallel light outputting optical system, for example. The parallel light outputting optical system has a function of converting pixel position information into angle information in the optical system of the optical device. As the parallel

light outputting optical system, an optical system which has a generally positive optical power, which individually uses a convex lens, a concave lens, a free-form surface prism and a hologram lens or a combination thereof may be used. A light shielding member which includes an opening section may be disposed between the parallel light outputting optical system and the light guide plate to prevent undesired light from being output from the parallel light outputting optical system to be incident on the light guide plate.

The light guide plate includes two parallel surfaces (a first surface and a second surface) which extend in parallel with an axis line (X axis) of the light guide plate. When a surface of the light guide plate on which light is incident is referred to as a light guide plate incident surface and a surface of the light guide plate from which light is output is referred to as a light guide plate outputting surface, the light guide plate incident surface and the light guide plate outputting surface may be formed by the first surface, or the light guide plate incident surface may be formed by the first surface and the light guide plate outputting surface may be formed by the second surface. As a material which forms the light guide plate, glass including optical glass such as quartz glass or BK7, or a plastic material (for example, PMMA, polycarbonate resin, acrylic based resin, amorphous polypropylene based resin, or styrene based resin which includes AS resin) may be used. The shape of the light guide plate is not limited to a flat plate shape, and may have a curved shape.

In the display apparatus according to the present disclosure, the frame may include a front section which is disposed in front of an observer, and two temple sections which are rotatably installed through hinges at opposite ends of the front section. An end cover section is installed at a tip end section of each temple section. The image forming device is installed in the frame. Specifically, for example, the image forming device may be installed in the temple section. Further, the front section and two temple sections may be integrally formed. That is, when the entire display apparatus according to the present disclosure is seen, the frame has the same structure as that of normal glasses. A material which forms the frame including a pad section may be formed of the same material as the material which forms the normal glasses, such as metal, alloy, plastic or a combination thereof. Further, a nose pad may be installed to the front section. That is, when the entire display apparatus according to the present disclosure is seen, an assembly of the frame and the nose pad has approximately the same structure as that of normal glasses, except that there is no rim. The nose pad may have a known configuration or structure.

Further, in the display apparatus according to the present disclosure, from the viewpoint of design or installability, it is preferable that wires (signal lines, power lines or the like) from one or two image forming devices extend outside from the tip end section of the end cover section through the temple section and the inside of the end cover section and be connected to a controller (control circuit or control section). Further, each image forming device may include a headphone section, and a headphone section wire from each image forming device may extend to the headphone section from the tip end section of the end cover section through the temple section and the inside of the end cover section. As the headphone section, for example, an inner ear type or a canal type of headphone section may be used. More specifically, it is preferable that the headphone section wire extend to the headphone section by wrapping around a rear side of an auricle from the tip end section of the end cover section. Further, an imaging device may be installed in the central part of the front section. Specifically, the imaging device may include a solid state imaging device which includes a CCD or CMOS sensor and a lens, for example. A wire from the imaging device may be connected to one image display apparatus (or image forming device) through the front section, for example, or may be included in a wire which extends from the image display apparatus (or image forming device).

Hereinafter, modification examples of the display apparatus according to the present disclosure including the variety of preferred modifications and configurations as mentioned above will be described.

However, in a case where the display apparatus includes two image display apparatuses for the left and right eye which are installed in the frame, when an observer views an external image and an image such as subtitles displayed in the image forming device in an overlapping manner, if there is a noticeable difference between a convergence angle (principal ray crossing angle on the horizontal surface, which is similarly applied to the following description) with respect to the external image (real image) and a convergence angle with respect to the image (virtual image displayed in the image display apparatus), this causes fatigue in the observer. That is, it is necessary to adjust the convergence angle depending on the observation position of the observer with respect to an observation object such as a stage or a screen.

Further, it is known that there are two types of visual cells, rods and cones in the human eye, the cones capable of accepting high resolution information are distributed in the central fovea at high density, and vision is the best in this position, whereas vision at the periphery of the retina where the rods are distributed is lower than the central vision. Thus, vision to a portion to be closely observed is high, whereas its peripheral vision is low. Here, when an image such as subtitles is overlapped with the external image, if the display position of the external image to be closely observed and the display position of the image are considerably separated from each other, it is difficult to visually recognize the image. Further, conversely, if the image is closely observed, it is difficult to visually recognize the external image. For example, if the position of a performer speaking their dialogue in a play and the display position of subtitles which indicate the part are separated from each other by a considerable margin, such a problem occurs.

In a case where a color of the external image and a display color of the image such as subtitles are similar, or in a case where the external image is complicated or fine (in other words, in a case where spatial frequency of the

external image is high), it is difficult to visually recognize the image. A solution for solving such a problem is disclosed in Japanese Patent No. 3744984, for example. However, performers in a play or a movie do not necessarily deliver spoken dialogue at all times. However, if the solution disclosed in Japanese Patent No. 3744984 is applied to the subtitle display, the subtitles are constantly displayed on an information display apparatus, which increases power consumption in the information display apparatus.

Thus, in order to optimize the convergence angle depending on the observation position of the observer with respect to the observation object, in the display apparatus which includes two image display apparatuses for the left and right eye which are installed in the frame, by controlling an image signal to an image forming device which forms at least one image display apparatus, the convergence angle may be adjusted depending on the observation position of the observer. For convenience of description, this display apparatus is referred to as a "display apparatus 1A according to the present disclosure".

In the display apparatus 1A according to the present disclosure or in display apparatuses 2A to 2D according to the present disclosure (which will be described later), the convergence angle is adjusted depending on the observation position of an observer. That is, the convergence angle corresponding to the distance from the display apparatus to an observation object is adjusted. Thus, the distance between the observation object and the observer (audience) and a virtual image distance of an image displayed by the image display apparatus may be equalized, or may be equalized as much as possible. Thus, the observer (audience) who views the observation object may view (observe) the image which is naturally displayed by the image display apparatus without particularly changing a focus, which causes little fatigue in the observer. In other words, as long as such a state is achieved, it can be said that the distance between the observation object and the observer (audience) and the virtual image distance of the image displayed by the image display apparatus are equal to each other.

Further, in order to optimize the display position of the display apparatus depending on the observation position of the observer with respect to the observation object, in the display apparatus which includes two image display apparatuses for the left and right eye which are installed in the frame, by controlling an image signal to an image forming device which forms at least one image display apparatus, the position of an image displayed in an optical device which forms at least the one image display apparatus is adjusted depending on the observation position of the observer. For convenience of description, this display apparatus is referred to as a "display apparatus 1B according to the present disclosure".

In the display apparatus 1B according to the present disclosure, since the position of the image displayed in the optical device is adjusted depending on the observation position of the observer, when the observer views an external image and the image in an overlapping manner, the display position of the external image to be closely observed and the display position of the image are not considerably separated, and thus, it is possible to visually recognize the image with ease.

Further, in order to achieve a display apparatus capable of suppressing energy consumption, after a predetermined time elapses from input of an image signal to an image forming device, image formation in the image forming device is stopped. For convenience of description, this image forming device is referred to as a "display apparatus 1C according to the present disclosure".

In the display apparatus 1C according to the present disclosure, after the predetermined time elapses from input of the image signal to the image forming device, image formation in the image forming device is stopped. That is, since the display apparatus transitions to a power save mode or a standby and pause mode after the predetermined time elapses, the problem of unnecessary power consumption in the display apparatus does not occur.

Further, in order to optimize the convergence angle depending on the observation position of the observer with respect to the observation object, in the display apparatus which includes two image display apparatuses for the left and right eye which are installed in the frame, each image display apparatus further includes an optical system (parallel light outputting optical system) which collimates light output from the image forming device into parallel light, at least one image display apparatus (that is, a right-eye image display apparatus, a left-eye image display apparatus, or two image display apparatuses for the left and right eye, this is similarly applied hereinafter) further includes a moving device which moves the light axis of the image forming device and the light axis of the optical system in the horizontal direction, and the convergence angle is adjusted by moving the light axis of the image forming device and the light axis of the optical system by the moving apparatus in the horizontal direction depending on the observation position of the observer. For convenience of description, this display apparatus is referred to as a "display apparatus 2A according to the present disclosure".

Further, in order to optimize the convergence angle depending on the observation position of the observer with respect to the observation object, in the display apparatus which includes two image display apparatuses for the left and right eye which are installed in the frame, each image display apparatus further includes an optical system (parallel light outputting optical system) which collimates light output from an image forming device into parallel light, at least one image display apparatus further includes a rotating device which rotates the image forming device and the optical system, and the incident angle of parallel light, which is output from the optical system and is incident on the optical device, with

respect to the optical device is changed by rotating the image forming device and the optical system by the rotating device depending on the observation position of the observer depending on the observation position of the observer, to adjust the convergence angle. For convenience of description, this display apparatus is referred to as a "display apparatus 2B according to the present disclosure".

Further, in order to optimize the convergence angle depending on the observation position of the observer with respect to the observation object, in the display apparatus which includes two image display apparatuses for the left and right eye which are installed in the frame, the optical system which forms at least one image display apparatus includes a liquid lens, and the convergence angle is adjusted by an operation of the liquid lens depending on the observation position of the observer. For convenience of description, this display apparatus is referred to as a "display apparatus 2C according to the present disclosure".

Further, in order to optimize the convergence angle depending on the observation position of the observer with respect to the observation object, in the display apparatus which includes two image display apparatuses for the left and right eye which are installed in the frame, the optical system which forms at least one image display apparatus includes a liquid prism, and the convergence angle is adjusted by an operation of the liquid prism depending on the observation position of the observer. For convenience of description, this display apparatus is referred to as a "display apparatus 2D according to the present disclosure".

In the display apparatus 1A or the display apparatus 1B according to the present disclosure, by controlling the image signal to the image forming device which forms at least one image display apparatus, it is possible to achieve an arbitrary combination of left and right movement, up and down movement and rotation movement of the image displayed in the optical device which forms at least one image display apparatus. In these image movements, for example, a non-display area may be secured in the optical device, and this part may be allocated for image movement.

Further, in the display apparatuses 2A to 2D according to the present disclosure, by controlling the image signal to the image forming device which forms at least one image display apparatus, it is possible to adjust the convergence angle. Here, by controlling the image signal to the image forming device which forms at least one image display apparatus, it is possible to achieve an arbitrary combination of left and right movement, up and down movement and rotation movement of the image displayed in the optical device which forms at least one image display apparatus. In these image movements, for example, a non-display area may be secured in the optical device, and this part may be allocated for image movement. In this way, in a case where the position of the image displayed in the optical device which forms at least one image display apparatus is controlled to mutually adjust the optical positions of two image display apparatuses. Specifically, in order to match images displayed by the left-eye image display apparatus and the right-eye image display apparatus in a desired virtual image distance or a virtual image position, the position of the image displayed in the optical device which forms at least one image display apparatus may be controlled. More specifically, an observer may be mounted with the display apparatus and may add a display position correction signal to the original image signal, in order to match the images displayed by the left-eye image display apparatus and the right-eye image display apparatus in the desired virtual image distance or the virtual image position. Further, the display position correction signal may be stored in the display apparatus (specifically, in a controller provided in the display apparatus) . With such a configuration, it is possible to adjust the position of the image displayed in the optical device depending on the observation position of the observer. Thus, when the observer views an external image and the image in an overlapping manner, the display position of the external image to be closely observed and the display position of the image are not considerably separated from each other, and it is thus possible to visually recognize the image with more ease.

Further, in the display apparatus 1A or the display apparatus 1B according to the present disclosure including the preferred embodiments as mentioned above, information relating to the observation position of the observer (hereinafter, referred to as "observation position information of the observer"), in addition to the image signal to the image forming device, may be transmitted to the display apparatus from the outside, and a position measuring section which measures the observation position of the observer may be further included.

Further, in the display apparatuses 2A to 2D according to the present disclosure including the preferred embodiments as mentioned above, in addition to the image signal to the image forming device, the observation position information of the observer may be given to the display apparatus in advance. Further, the observation position information of the observer may be transmitted to the display apparatus from the outside, and a position measuring section which measures the observation position of the observer may be further included.

Here, in the embodiment where the observation position information of the observer is transmitted to the display apparatus from the outside, the observation position information of the observer may be transmitted to the display apparatus (specifically, in the controller included in the display apparatus) in a wireless manner. In the embodiment where the position measuring section which measures the observation position of the observer is further included, as the position measuring section, specifically, a camera or imaging device having an auto focusing function (for example, a distance measuring device of an active type which irradiates an observation object with infrared ultrasonic waves or the like and detects the distance according to the time taken until reflected waves return and the irradiation angle, or a camera or imaging device which has a distance measuring device of a passive type), or a distance measuring device

for a camera having an auto focusing function (a distance measuring device of an active type) may be used. Further, a button or a switch may be installed in the display apparatus to manually set the distance from the display to the observation object. Further, the observation position information of the observer may be set in the display apparatus. Further, the observation position information of the observer may be given to the display apparatus from a personal computer, or for example, seat information or theater information of a barcode format printed in a ticket (hall information, theater information or the like, which is similarly applied to the cases in the following description), or seat information or theater information included in ticket information displayed on a mobile phone may be read by an appropriate method, and the observation position information of the observer based on the seat information or theater information may be assigned to the display apparatus by an appropriate method.

In the display apparatus 1C according to the present disclosure, in order to stop image formation in the image forming device, that is, in order to enter a power save mode or a standby and pause mode (hereinafter, may be generalle referred to as "power save mode or the like") in the display apparatus, for example, a signal indicating an image display time in the image forming device or a signal indicating the image formation stop in the image forming device may be added to the image signal. As a predetermined time, for example, a time taken for a normal person to read subtitles displayed in the image forming device or a subtitle display time determined according to the length of lines in advance may be used.

In the display apparatuses 2A to 2D according to the present disclosure including the preferred embodiments as mentioned above. Further, after a predetermined time elapses after the image signal is input to the image forming device, image formation in the image forming device may be stopped. Further, accordingly, since the display apparatus may enter the power save mode or the standby and pause mode after the predetermined time elapses, the problem of power or energy waste in the display apparatus does not occur.

Further, in the display apparatuses 1A to 1C and the display apparatuses 2A to 2D according to the present disclosure including the preferred embodiments as mentioned above, in addition to the image signal to the image forming device, a brightness signal of an image to be displayed in an optical device may be transmitted to the display apparatus from the outside. In such a case, the brightness signal may be transmitted to the display apparatus from the outside in a wireless manner.

Further, in the display apparatuses 1A to 1C and the display apparatuses 2A to 2D according to the present disclosure including the variety of preferred embodiments as mentioned above, the image displayed in the optical device is configured by characters by the image signal. Here, the image signal (may be referred to as "character data") for displaying characters as an image is digitalized data, and may be created in advance by an operator or a process through a computer or the like. The format of the character data may be appropriately selected depending on a display apparatus or system to be used, and for example, may be text data configured by character strings or image data using character strings as images.

In the display apparatuses 1A to 1C according to the present disclosure and the display apparatuses 2A to 2D according to the present disclosure, in order to reduce the burden of fatigue of pupils of the observer, which is generated by continuously watching images (for example, subtitles or virtual images) displayed in a predetermined position, the positions of images (image positions) formed by two optical devices or the distances (image distances), from two optical devices, of the images (for example, subtitles or virtual images) formed by two optical devices may be changed with time. Here, the change in the image position or the image distance with time means that the horizontal image position is changed, for example, once every five to ten minutes, for example, by + 2 pixels or - 1 pixel in the image forming device, for example, for one to three minutes, and then returns to the original position.

In the display apparatus 1A or the display apparatus 1B according to the present disclosure, the observer is mounted with the display apparatus. In order to match images displayed by the display apparatuses for the left and right eye in a desired virtual image distance or a virtual image position, a display position correction signal may be added to the original image signal. Further, the display position correction signal may be stored in the display apparatus (specifically, in the controller included in the display apparatus), or the image signal obtained by adding the display position correction signal to the original image signal may be transmitted to the display apparatus. Further, in the display apparatuses 1A to 1C according to the present disclosure and the display apparatuses 2A to 2D according to the present disclosure including the variety of preferred embodiments as mentioned above, the image signal may be transmitted to the display apparatus in a wireless manner. Here, in such a case, the image signal is received by a controller, for example, and a process for image display is performed in the controller. Further, the image signal may be stored in the display apparatus (controller), and in this case, the display position correction signal may be transmitted to the display apparatus. Further, the position of the image displayed in the optical device which forms at least one image display apparatus is controlled to adjust the optical positions of two image display apparatuses. Specifically, in order to match the images displayed by the image display apparatuses for the left and right eye in the predetermined virtual image distance or the virtual image position, the position of the image displayed in the optical device which forms at least one image display may be controlled. The controller (control circuit or control section) may be configured by a known circuit.

In the display apparatuses 1A to 1C and the display apparatuses 2A to 2D according to the present disclosure

including the variety of preferred embodiments or configurations as mentioned above, the controller included in the display apparatus may include a storage section; a data group which is configured by a plurality of image signals (for example, character data) for image display may be stored in the storage section; a data identification symbol may be assigned to each image signal which forms the data group; a designated identification symbol and display time information may be transmitted from the outside to the controller at a predetermined time interval; the controller may receive an image signal where the transmitted designated identification symbol and the data identification symbol match with each other from the storage section; and the image based on the image signal may be displayed in the display apparatus during the time corresponding to the transmitted display time information. The "time corresponding to the display time information" may be set to the "predetermined time" in the display apparatus 1C according to the present disclosure. Such a configuration may be referred to as a "display apparatus 3A according to the present disclosure", for convenience of description.

In the display apparatus 3A according to the present disclosure, the designated identification symbol and the display time information are transmitted from the outside to the controller at a predetermined time interval. The controller receives an image signal where the transmitted designated identification symbol and the data identification symbol match with each other from the storage section, and the image based on the image signal is displayed in the image forming device during the time corresponding to the transmitted display time information. Accordingly, in a case where the controller fails in reception of the designated identification symbol and/or the display time information transmitted from the outside, the reception of the designated identification symbol and the display time information may be performed again or repeatedly, and thus, it is possible to reliably receive the designated identification symbol and the display time information. As a result, for example, even in a case where the designated identification symbol and the display time information are received in a plurality of display apparatuses, it is possible to reliably display the same images in the plurality of display apparatus at the same time, and to reliably prevent the problem that an image is not displayed in the display apparatuses.

In the display apparatuses 1A to 1C and the display apparatuses 2A to 2D according to the present disclosure including the variety of preferred embodiments or configurations as mentioned above, the controller included in the display apparatus may include a storage section; a data group which is configured by a plurality of image signals (for example, character data) for image display may be stored in the storage section; a data identification symbol may be assigned to each image signal which forms the data group; each image signal may be configured by a plurality of pieces of display data having different sizes; a designated identification symbol is transmitted from the outside to the controller; in the controller, in the image signal where the transmitted designated identification symbol and the data identification symbol match with each other, one piece of display data having different sizes among the plurality of pieces of display data having different sizes may be read from the storage section depending on the distance between the observation object and the display apparatus; and the image based on one piece of display data having different sizes may be displayed in the display apparatus. Such a configuration may be referred to as a "display apparatus 3B according to the present disclosure", for convenience of description.

In the display apparatus 3B according to the present disclosure, in the controller, since one piece of display data having different sizes among the plurality of pieces of display data having different sizes, in the image signal where the transmitted designated identification symbol and the data identification symbol match with each other, is read from the storage section depending on the distance between the observation object and the display apparatus and the image based on one piece of display data having different sizes is displayed in the image forming device, it is possible to prevent unbalance from occurring between the size of the observation object viewed and the size of the image.

In the display apparatuses 1A to 1C and the display apparatuses 2A to 2D according to the present disclosure including the variety of preferred embodiments or configurations as mentioned above, the controller included in the display apparatus may include a storage section; a data group which is configured by a plurality of image signals (for example, character data) for image display may be stored in the storage section; a data identification symbol may be assigned to each image signal which forms the data group; each image signal may be configured by a plurality of pieces of display data having different languages; a designated identification symbol is transmitted from the outside to the controller; in the controller, in the image signal where the transmitted designated identification symbol and the data identification symbol match with each other, one piece of display data having different sizes among the plurality of pieces of display data having different sizes may be read from the storage section; and the image based on one piece of display data having different languages may be displayed in the display apparatus. Such a configuration may be referred to as a "display apparatus 3C according to the present disclosure", for convenience of description. As a method of selecting a certain language as a display language, for example, a method of manually selecting the display language by installing a button or a switch in the controller may be used.

In the display apparatus 3C according to the present disclosure, in the controller, since one piece of display data having different languages among the plurality of display data having different languages, in the image data where the transmitted designated identification symbol and the data identification symbol match with each other, is read from the storage section and the image based on one piece of display data having different languages is displayed in the

image forming device, it is possible to easily perform image display by a language to be used by the observer (audience).

Further, in the display apparatuses 1A to 1C and the display apparatuses 2A to 2D according to the present disclosure including the variety of preferred embodiments or configurations as mentioned above, the controller included in the display apparatus may include a storage section; a data group which is configured by a plurality of image signals (for example, character data) for image display may be stored in the storage section; a data identification symbol may be assigned to each image signal which forms the data group; a designated identification symbol may be transmitted from the outside to the controller; in the controller, the image signal where the transmitted designated identification symbol and the data identification symbol match with each other may be read from the storage section; and data processing may be performed depending on the distance between the observation object and the display apparatus to display the image based on the image signal (where the data processing is performed) in the display apparatus in a state where the convergence angle is controlled, for example. Such a configuration may be referred to as a "display apparatus 3D according to the present disclosure", for convenience of description. Here, image processing for the image signal input to the image forming device which forms at least one image display apparatus may be performed on the basis of the distance from the display apparatus to the observation object.

In the display apparatus 3D according to the present disclosure, the convergence angle corresponding to the distance from the display apparatus to the observation object is adjusted, and thus, it is possible to make the distance between the observation object and the observer (audience) and the virtual image distance of the image (subtitles) displayed by the image display apparatus be equalized, or be equal to each other as much as possible. Further, the observer (audience) who views the observation object can naturally view (observe) the image displayed by the image display apparatus, without changing a focus.

In the display apparatuses 2A to 2D according to the present disclosure including the variety of preferred embodiments or configurations, the size of a display screen (image display area) displayed in the optical device, the field angle of the display screen (image display area), and the resolution of the display screen may be changed depending on the observation position of the observer and the distance between the observation object and the display apparatus. Such a configuration may be referred to as a "display apparatus 2E according to the present disclosure", for convenience of description.

The display apparatuses 2A to 2E according to the present disclosure may be appropriately combined with each other. Further, the display apparatuses 3A to 3D according to the present disclosure may be appropriately combined with each other. In the display apparatuses 2A to 2E and the display apparatuses 3A to 3D according to the present disclosure, the controller may have a known circuit configuration, and the storage section may be a known storage section, for example, a memory card. Further, the designated identification symbol and the display time information may be transmitted from the transmitter in a wireless manner, in which the transmitter may include the display apparatus, and the designated identification symbol, the data group, the total display time of each image signal and each display data may be displayed in the display apparatus, but the present disclosure is not limited thereto. For example, the designated identification symbol and the display time information may be transmitted from the transmitter in a wired manner. The transmitter which transmits the designated identification symbol to the controller may be a known transmitter, and the display apparatus included in the transmitter may be a known display apparatus.

Depending on the observation position of the observer, the moving device is operated in the display apparatus 2A according to the present disclosure, the rotating device is operated in the display apparatus 2B according to the present disclosure, the liquid lens is operated in the display apparatus 2C according to the present disclosure, and the liquid prism is operated in the display apparatus 2D according to the present disclosure. These operations are controlled by control signals from the controller on the basis of the observation position information of the observer.

In the display apparatus 2A according to the present disclosure, the optical axis of the image forming device and the optical axis of the optical system are relatively moved in the horizontal direction (X axis direction) by the moving device. Specifically, in a state where the position relationship between the optical axis of the image forming device and the optical axis of the optical system in one image display apparatus is fixed, the position of the optical axis of the image forming device and the position of the optical axis of the optical system in the other image display apparatus may be relatively moved in the horizontal direction (X axis direction). Further, the position of the optical axis of each of two image display apparatuses and the position of the optical axis of the optical system may be relatively moved in the horizontal direction (X axis direction) . In such a configuration, an incident angle (an angle formed by a central indicent light ray to be described later and the YZ plane, which will be hereinafter referred to as a "YZ plane incident angle") with respect to the optical device, of the parallel light which is output from the optical system and is incident on the optical device, is changed. Further, in such a configuration, any one of the image forming device and the optical system may be mounted on a movement guide section which includes a rack gear section, and may be moved on the movement guide section by a motor and pinion gear. Further, any one of the image forming device and the optical system may be mounted on the movement guide section and may be moved on the movement guide section by a piezoelectric element or an ultrasonic wave motor.

In the display apparatus 2B according to the present disclosure, the image forming device and the optical

system are rotated by the rotating device. Specifically, in a state where the position relationship between the optical axis of the image forming device and the optical axis of the optical system in each of two image display apparatuses is fixed, at least one image display apparatus may be rotated by operation of a piezoelectric element, a motor or an ultrasonic wave motor, using the Z axis as a rotation axis. In such a configuration, the YZ plane incident angle, with respect to the optical device, of the parallel light which is output from the optical system and is incident on the optical device is changed.

In the display apparatus 2C according to the present disclosure, the liquid lens is operated. Here, the liquid lens which forms the optical system may include a known liquid lens using an electrowetting phenomenon. According to the operation of the liquid lens, while constantly maintaining the relationship between the optical axis of the optical system and the Y axis, it is possible to move the optical axis of the optical system in the horizontal direction (X axis direction), or it is possible to change the angle of the optical axis of the optical system with respect to the YZ plane. Thus, the YZ plane incident angle, with respect to the optical device, of the parallel light which is output from the optical system and is incident on the optical device is changed.

In the display apparatus 2D according to the present disclosure, the liquid prism is operated. Here, the liquid prism which forms a part of the optical system may include a known liquid prism using the electrowetting phenomenon. According to the operation of the liquid prism, it is possible to change the angle of the optical axis of the optical system with respect to the YZ plane. In such a configuration, the YZ plane incident angle, with respect to the optical device, of the parallel light which is output from the optical system and is incident on the optical device is changed.

Here, the number of data groups is substantially arbitrary, and the number of image signals (for example, character data) which form the data group and the number of display data which forms the image signal (character data) are also substantially arbitrary. As a data structure of the image signal or the display data, for example, text data formed of character strings may be used, or image data obtained by converting character strings into an image may be used. As the display data having different display sizes, text data formed of character strings having different font sizes may be used, or image data obtained by converting character strings into an image may be used. The display language in the display data is substantially arbitrary. The image signal may be obtained by performing a predetermined signal processing for the display data.

The designated identification symbol and the data identification symbol may employ any symbol, as long as they are symbols capable of identifying the image signal, and for example, may employ numerals, alphabets, or a combination of numerals and alphabets.

The designated identification symbol and the display time information are transmitted to the controller from the outside at the predetermined time interval. Here, if the total display time is $T_{total}$, the display time information is $T_{Inf}$, and the predetermined time interval is $T_{int}$, the relationship can be expressed as $T_{Inf}(m) = T_{total} - (m-1) \times T_{int}$. Here, "m" is a positive integer, and represents the number of times of transmissions of the designated identification symbol and the display time information to the transmitter from the outside. For example, if $T_{total}$ = 10.0 seconds and $T_{int}$ = 0.1 seconds, the display time information $T_{Inf}(m)$ when the designated identification symbol and the display time information are transmitted to the controller from the outside for the first time (m = 1) is $T_{Inf}(1)$ = 10.0 seconds. Further, the display time information $T_{Inf}(m)$ when the designated identification symbol and the display time information are transmitted to the controller from the outside for the second time (m = 2) and for the eleventh time (m = 11) are $T_{Inf}(2)$ = 9.9 seconds and $T_{Inf}(11)$ = 9.0 seconds. Further, during the time corresponding to the display time information $T_{Inf}(m)$, an image based on the image signal or one piece of display data is displayed in the image forming device.

Here, in a case where the image display is started in the image forming device, even though the same designated identification symbol and different time display information are thereafter transmitted to the controller from the outside, the controller may ignore these designated identification symbol and time display information and may continuously display the image. In such an operation, in the controller, a flag (reception completion flag) may be generated. On the other hand, in a case where the controller fails in reception of the designated identification symbol and/or the display time information from the transmitter, from the first time to the (m' -1) -th time, due to any reason, and firstly succeeds in reception of the designated identification symbol and the display time information from the outside for the m' -th time, during the time of $T_{Inf}(m') = T_{total} - (m' - 1) \times T_{int}$, an image based on the image signal or one piece of display data may be displayed in the image forming device.

The transmission of the designated identification symbol and the display time information for the first time (m = 1) may be indicated by an operator, may be indicated under the control of a computer or the like, or may be indicated by movement of an observation object, change in voice of a performer who is the observation object, change in an environment where the observation object is disposed (for example, change in illumination or sound) or the like.

Light rays which are output from the center of the image forming device and pass through a node of the optical system on the side of the image forming device are called "central light rays". A light ray which is perpendicularly incident on the optical device, among the central light rays, is called a "central incident light ray". Further, a point where the central incident light ray is incident on the optical device is represented as an optical device central point, an axis line which passes through the optical device central point and is parallel to an axis line direction of the optical device is represented as the X axis, and an axis line which passes through the optical device central point and matches with a

normal line of the optical device is represented as the Y axis. The horizontal direction in the display apparatus according to the present disclosure is a direction parallel to the X axis, and may be referred to as an "X axis direction". Here, the optical system is disposed between the image forming device and the optical device, and collimates the light which is output from the image forming device into parallel light. Further, light flux which is collimated as parallel light by the optical system is incident on the optical device, is guided therein and is then output therefrom. A central point of the first deflecting section is referred to as an "optical device central point".

In the display apparatuses 1A to 1C and the display apparatuses 2A to 2D according to the present disclosure, although not limiting in the image display apparatus, the central incident light ray may intersect with the XY plane at an angle ($\theta$) other than 0 degree. Accordingly, it is possible to reduce the limitation to the installation angle of the image display apparatus when the image display apparatus is installed in the installation section of the spectacle type frame, and to obtain a high degree of freedom in design. Further, in this case, the central incident light ray may be included in the YZ plane, which is preferable from the point of view of easy handling, setting or installation of the image display apparatus. Further, the optical axis of the optical system may be included in the YZ plane, and may intersect with the XY plane at an angle other than 0 degree. Further, the optical axis of the optical system may be parallel to the YZ plane and the XY plane, and may pass through a position spaced from the center of the image forming device. Further, when it is assumed that the XY plane coincides with the horizontal plane, the angle $\theta$ where the central incident light ray intersects with the XY plane may be an elevation angle. That is, the central incident light ray may be directed to the XY plane from below the XY plane, and may collide with the XY plane. Further, in this case, the XY plane preferably intersects with the vertical plane at an angle other than 0 degree, and the XY plane more preferably intersects with the vertical plane at an angle $\theta'$. The maximum value of the angle $\theta'$ may be 5 degrees, which is not limiting. Here, the horizontal plane is a plane in which the line of vision ("horizontal line of vision of an observer") when the observer views an object (for example, an object on an infinitely distant side in the horizontal direction such as a skyline or sealine) which is disposed in the horizontal direction and two pupils of the observer which are horizontally positioned are included. Further, the vertical plane is a plane which is perpendicular to the horizontal plane. Further, when the observer views an object (for example, an object on an infinitely distant side in the horizontal direction such as a skyline or sealine) which is disposed in the horizontal direction, a central incident light ray which is output from the optical device and is incident on the pupils of the observer may form a depression angle. As the depression angle with reference to the horizontal plane, for example, 5 to 45 degrees may be used.

The display apparatus according to the present disclosure including the variety of modification examples as mentioned above may be used in, for example, display of moving images or still images; display of subtitles in a movie or the like; display of explanatory notes or closed captions relating to images which are synchronized with the images; or display of a variety of explanations relating to observation objects, or explanatory notes or the like for describing their content, progress, background or the like, in plays or Kabukis, Nohs, Noh farces, operas, concerts, ballets, various plays, amusement parks, art museums, sightseeing areas, tourist resorts, visitor information. Further, the display apparatus may function as a character display apparatus, and may be used in display of a variety of explanations, marks, symbols, signs, emblems, designs or the like in operation, manipulation, maintenance, disassembly or the like of observation objects such as a variety of apparatuses; display of a variety of explanations, marks, symbols, signs, emblems, designs or the like relating to observation objects such as people or goods; or display of closed captions. In plays or Kabukis, Nohs, Noh farces, operas, concerts, ballets, various plays, amusement parks, art museums, sightseeing areas, tourist resorts, visitor information or the like, characters may be displayed in the display apparatus as images relating to the observation objects at an appropriate timing. Specifically, for example, an image signal is transmitted to the display apparatus by operation of an operator or under the control of a computer or the like, on the basis of a predetermined schedule or time allocation, according to the progress of a movie, play or the like, and a designated identification symbol is transmitted to the controller, so that an image is displayed in the display apparatus. Further, in a case where a variety of explanations relating to observation objects such as a variety of apparatuses, or people or goods is performed, by installing an imaging device in the display apparatus, by imaging the observation objects such as a variety of apparatuses, or people or goods by the imaging device, and by analyzing the photographed content in the display apparatus, it it possible to display the variety of explanations relating to the observation objects such as a variety of apparatuses, or people or goods, which are created in advance, in the display apparatus. Further, the display apparatus according to the present disclosure may be used as a stereopsis display apparatus. In this case, as necessary, a polarizing plate or a polarizing film may be detachably installed in the optical device, or may be attached to the optical device.

As described above, the image signal input to the image forming device may include brightness data (brightness information) or chromaticity data (chromaticity information) relating to images to be displayed, or both of the brightness data and the chromaticity data, in addition to the image signal (for example, character data). The brightness data may be brightness data corresponding to brightness of a predetermined area which includes an observation object when seen through the optical device, and the chromaticity data may be chromaticity data corresponding to chromaticity of the predetermined area which includes the observation object when seen through the optical device. In this way, by including the brightness data relating to an image, it is possible to control the brightness (luminance) of an image to be

displayed. Further, by including the chromaticity data relating to the image, it is possible to control the chromaticity (color) of the image to be displayed. Further, by including the brightness data and the chromaticity data relating to the image, it is possible to control the brightness (luminance) and the chromaticity (color) of the image to be displayed. In a case where the brightness data is brightness data corresponding to the brightness of the predetermined area which includes the observation object when seen through the optical device, as the value of brightness of the predetermined area which includes the observation object when seen through the optical device becomes high, the value of brightness data may be set so that the value of brightness of an image becomes high (that is, so that the image is displayed brightly). Further, in a case where the chrominance data is chrominance data corresponding to the chrominance of the predetermined area which includes the observation object when seen through the optical device, the value of chrominance data may be set so that the chrominance of the predetermined area which includes the observation object when seen through the optical device and the chrominance of the image to be displayed form an approximately complementary color relationship. Here, complementary colors represent a set of colors having the relationship of opposite positions in the color circle. For example, red and green, yellow and violet, blue and orange, or the like form the complementary colors. As understood from colors which cause a chromaticity decrease as in light which becomes white and an article which becomes black when a specific color and different colors are mixed with each other at an appropriate ratio, the complementarity of a visual effect when colors are arranged in parallel is different from the complementarity of a visual effect when colors are mixed with each other. These colors are called, the complementary colors, contrast colors or opponent colors. Here, whereas the opponent colors directly indicate a color which is opposite to a complementary color, the range of colors indicated by the complementary colors is slightly broad. Combination of the complementary colors has a synergy effect of using the mutual colors, which is called a complementary color harmony.

[First embodiment]

The first embodiment relates to a display apparatus according to the present disclosure. Fig. 1 is a conceptual diagram illustrating an image display apparatus according to the first embodiment. Fig. 2 is a schematic diagram illustrating the display apparatus (specifically, head mounted display (HMD)) according to the first embodiment, when seen from the top. Fig. 3A is a schematic diagram illustrating the display apparatus, when seen from the side, and Fig. 3B is a schematic diagram partially illustrating an optical device and a dimmer, when seen from the front. Figs. 4A and 4B are cross-sectional views schematically illustrating a behavior of the dimmer in the display apparatus according to the first embodiment, and Fig. 4C is a photomicrograph of a first electrode in the dimmer.

An image display apparatus 100, 200, 300, 400 or 500 according to the first embodiment, or any one of second to seventh embodiments (which will be described later) includes (A) an image forming device 111 or 211, (B) an optical device 120, 320 or 520 which allows light output from the image forming device 111 or 211 to be incident thereon, to be guided therein and to be output therefrom, and (C) an optical system (parallel light outputting optical system) 112 or 254 which collimates the light output from the image forming device 111 or 211 into parallel light, wherein light flux which is collimated as parallel light by the optical system 112 or 254 is incident on the optical device 120, 320 or 520, is guided therein and is then output therefrom.

Further, the display apparatus according to the first embodiment, or any one of the second to seventh embodiments (which will be described later) includes (i) a spectacle type frame 10 which is mounted in a head part of an observer (for example, audience), and (ii) an image display apparatus 100, 200, 300, 400 or 500 which is installed in the frame 10. The display apparatus according to the first embodiment, or any one of the second to seventh embodiments (which will be described later) is a binocular type including two image display apparatuses, but may be a monocular type including one image display apparatus. Further, the image forming device 111 or 211 displays a single color image.

Further, in the first embodiment, or any one of the second to seventh embodiments (which will be described later), in an area of the optical device 120, 320 or 520 where light is output, a dimmer 700 which adjusts the amount of external light incident from the outside is disposed. The dimmer 700 includes a first transparent substrate 701 and a second transparent substrate 703 which is opposite to the first substrate 701; a first electrode 702 which is installed on the first substrate 701; a second electrode 704 which is installed on the second substrate 703; and an electrolyte 705 which includes metal ions, which is sealed between the first substrate 701 and the second substrate 703. The first electrode 702 is formed of a conductive material of a fine wire shape, and the second electrode 704 is formed of a transparent electrode layer.

Specifically, the dimmer 700 which is a kind of light shutter is fixed to the optical device 120, 320 or 520 (specifically, a light guide plate 121 or 321 or a semi-transmissive mirror 520). Further, the dimmer 700 is disposed in an area of the optical device 120, 320 or 520 on an opposite side to the observer. Further, the first substrate 701 is disposed closer to the observer side than the second substrate 703. The first electrode 702 is formed of nanowires, and the average diameter of the nanowires is 1 μm or less. More specifically, the conductive material which forms the first electrode 702 is silver (Ag), and the first electrode 702 is formed of silver nanowires. The average length of the silver nanowires (length in the long axis direction) and the average diameter of the nanowires (length in the short axis direction)

are $4 \times 10^{-4}$ m and $5 \times 10^{-7}$ m, respectively. As shown in Fig. 4C, the first electrode 702 is formed by randomly (irregularly or disorderedly) arranging sliver nanowires, but is schematically shown in a layered state in the figure. Metal ions include silver (Ag) ions, and the electrolyte 705 includes a supporting electrolyte salt made of LiI. By forming the metal ions with silver ions and by forming the second electrode 704 of silver, that is, by forming the metallic material which forms the second electrode 704 and the metal ions with the same metal, it is possible to realize an electrode reaction which is electrochemically stable. The first substrate 701 and the second substrate 703 are formed of a glass material with a thickness of 0.4 mm, and an interval between the first substrate 701 and the second substrate 703 is 100 $\mu$m. The second electrode 704 includes a transparent electrode formed of indium tin oxide (ITO), and is formed on the basis of a combination of a PVD method called a sputtering method and a lift-off method. The first electrode 702 is not patterned, and the second electrode 704 is not also patterned. These electrodes are so-called solid electrodes. Specifically, portions of the first electrode 702 and the second electrode 704 which occupy an effective area of the dimmer 700 are not patterned. Here, the effective area of the dimmer 700 indicates an area which is equal to or larger than a projected image of a second deflecting section 140 or 340 (which will be described later). More specifically, the sizes of the projected images of the portion of the first electrode 702 and the portion of the second electrode 704 which are not patterned are larger than the projected image of the second deflecting section 140 or 340. Here, a portion in which the first electrode 702 is extracted to the outside is formed of a different conductive material (not shown) . Further, a portion in which the second electrode 704 is extracted to the outside is patterned. Further, the first electrode 702 and the second electrode 704 are connected to a controller 18 through a connector and a wire (not shown). Outer edge portions of two sheets of substrates 701 and 703 are sealed by a sealant 706. Further, the first substrate 701 of the dimmer 700 is fixed to the light guide plate 121 by a sealing member 722, and a gap is formed between the first substrate 701 and the light guide plate 121. The first substrate 701 of the dimmer 700 has approximately the same length as that of the light guide plate 121, and the first substrate 701 of the dimmer 700 is fixed to the light guide plate 121 by the sealing member 722. The sealing member 722 is disposed in an outer edge portion of the first substrate 701. This configuration is similarly applied to the following embodiments.

The first electrode 702 may be obtained by printing a material obtained by dispersing silver nanowires in a solvent on the first substrate 701 on the basis of a screen printing method, and by performing a thermal treatment therefor.

1 part by mass of polyether having a molecular mass of about 350, 000, 10 parts by mass of dimethylsulfoxide (DMSO), 1.7 parts by mass of sodium iodide and 1.7 parts by mass of silver iodide are mixed and heated at the temperature of 120°C, to thereby prepare a uniform solution. Then, triethanolamine, courmarin (see the following formula) and benzoimidazol (see the following formula) are added to the solution, to thereby obtain the electrolyte 705. Per one liter of the solution, 10 grams of triethanolamine, 1.5 grams of courmarin, and 1.5 grams of benzoimidazol are added.

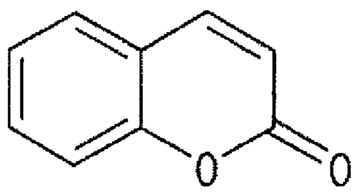

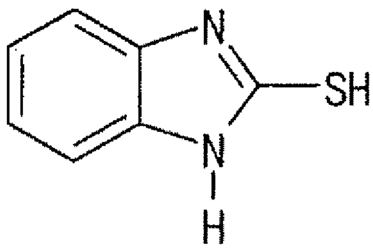

Further, the first substrate 701 on which the first electrode 702 is formed and the second substrate 703 on which the second electrode 704 is formed are sealed in their outer edge portions using an olefin based sealing agent 706. Spacers (not shown) formed of spherical beads made of plastic and having an average particle diameter of 100 $\mu$m are included in the sealing agent 706 by 10 volume %. An opening section (inlet) is formed in a portion of the sealing agent. Further, by vacuum-injecting the electrolyte 705 which includes AgI through the opening section formed in the sealing agent into a cell obtained by combining the first substrate 701 and the second substrate 703 as described above, and then, by sealing the opening section, the dimmer 700 is obtained.

Due to precipitation of silver on the second electrode 704 and dissolution of silver into the electrolyte 705, based on application of voltages to the first electrode 702 and the second electrode 704, coloring and decoloring of the dimmer (specifically, electro-deposition type dimmer) occur. Accordingly, it is possible to control light transmittance of the dimmer

700. Specifically, if a relatively positive voltage is applied to the first electrode 702 and a relatively negative voltage is applied to the second electrode 704, on the second electrode 704, silver is precipitated on the basis of the reaction of $Ag^+ + e^- \rightarrow Ag$, and thus, a thin silver layer is formed on the second electrode 704. Accordingly, the light transmittance in the dimmer 700 is decreased (see Fig. 4A). On the other hand, if a relatively negative voltage is applied to the first electrode 702 and a relatively positive voltage is applied to the second electrode 704, the reaction of $Ag \rightarrow Ag^+ + e^-$ occurs, and thus, silver precipitated on the second electrode 704 is dissolved into the electrode 705. Accordingly, the second electrode 704 which is in a coloring state enters a transparent state. Accordingly, the light transmittance in the dimmer 700 is increased (see Fig. 4B). The light transmittance in the dimmer 700 may be controlled on the basis of the values of voltages applied to the first electrode 702 and the second electrode 704 and an application time thereof. The voltage application to the first electrode 702 and the second electrode 704 may be performed as an observer operates a control knob installed in the controller 18. That is, as the observer observes an image from the optical device 120 or 320 and adjusts the light transmittance of the dimmer 700, contrast of the image may be improved. As a result of the variety of tests, it is preferable that the highest light transmittance of the dimmer 700 be 50% or more (preferably, 50% or more and 99% or less), and the lowest light transmittance of the dimmer 700 be 30% or less (preferably, 1% or more and 30% or less).

The optical device 120 or 320 according to the first embodiment, or any one of the second to fourth embodiments and the sixth and seventh embodiments (which will be described later) includes (a) a light guide plate 121 or 321 which allows incident light to be propagated therein by total reflection and then to be output therefrom, (b) a first deflecting section 130 or 330 which deflects the light incident on the light guide plate 121 or 321 so that the light incident on the light guide plate 121 or 321 is totally reflected inside the light guide plate 121 or 321, and (c) a second deflecting section 140 or 340 which deflects the light propagated inside the light guide plate 121 or 321 by total reflection over a plurality of times so as to allow the light propagated inside the light guide plate 121 or 321 by total reflection to be output from the light guide plate 121 or 321. Further, the second deflecting section 140 and 340 is disposed in the projected image of the dimmer 700. Further, the second deflecting section 140 or 340 is coated by one of the substrates which form the dimmer 700. The optical device 120 or 320 is a see-through type (semi-transmissive type).

Here, in the first embodiment, the first deflecting section 130 and the second deflecting section 140 are disposed inside the light guide plate 121. Further, the first deflecting section 130 reflects light incident on the light guide plate 121 and the second deflecting section 140 transmits and reflects the light propagated inside the light guide plate 121 by total reflection over a plurality of times. That is, the first deflecting section 130 functions as a reflecting mirror, and the second deflecting section 140 functions as a semi-transmissive mirror. More specifically, the first deflecting section 130 installed in the light guide plate 121 is formed by a light reflection layer (a kind of mirror) which is formed of aluminum (Al) and reflects the light incident on the light guide plate 121. On the other hand, the second deflecting section 140 provided inside the light guide plate 121 is formed by a multi-layered structure in which a plurality of dielectric films are layered. The dielectric film includes a $TiO_2$ film which is a high dielectric constant material and a $SiO_2$ film which is a low dielectric constant material, for example . The multi-layered structure in which the plurality of dielectric films are layered is disclosed in JP-A-2005-521099. In the figure, 6-layered dielectric films are shown, but this is not limiting. A thin piece formed of the same material as the material which forms the light guide plate 121 is interposed between the dielectric films. In the first deflecting section 130, parallel light incident on the light guide plate 121 is reflected (or diffracted) so that the parallel light incident on the light guide plate 121 is totally reflected inside the light guide plate 121. On the other hand, in the second deflecting section 140, the parallel light propagated inside the light guide plate 121 by total reflection is reflected (or diffracted) over a plurality of times, and is output from the light guide plate 121 toward the pupil 21 of an observer in the state of parallel light.

The first deflecting section 130 may be installed by cutting a portion 124 of the light guide plate 121 where the first deflecting section 130 is to be installed to form an inclination surface on which the first deflecting section 130 is to be formed in the light guide plate 121, by forming a light reflection film on the inclination surface by vacuum deposition, and then, by allowing the cut portion 124 of the light guide plate 121 to adhere to the first deflecting section 130. Further, the second deflecting section 140 may be installed by manufacturing a multi-layered structure obtained by layering a plurality of combinations of the same material (for example, glass) as the material which forms the light guide plate 121 and an dielectric film (which may be formed by vacuum deposition, for example), by cutting a portion 125 of the light guide plate 121 where the second light deflecting section 140 is to be installed to form an inclination surface, by allowing the multi-layered structure to adhere to the inclination surface, and by performing polishing or the like to shape its appearance. Thus, it is possible to obtain the optical device 120 in which the first deflecting section 130 and the second deflecting section 140 are installed inside the light guide plate 121.

Here, in the first embodiment, or any one of the second to fourth embodiments and the sixth and seventh embodiments (which will be described later), the light guide plate 121 or 321 formed of an optical glass or plastic material includes two parallel surfaces (a first surface 122 or 322 and a second surface 123 or 323) which extend in parallel in the light propagation direction (X axis) inside the light guide plate 121 or 321 by total reflection. The first surface 122 or 322 is opposite to the second surface 123 or 323. Further, parallel light is incident through the first surface 122 or 322

corresponding to a light incident surface, is propagated inside by total reflection, and is then output through the first surface 122 and 322 corresponding to a light outputting surface. Here, the configuration is not limited thereto, and thus, the light incident surface may be formed by the second surface 123 or 323, and the light outputting surface may be formed by the first surface 122 or 322.

In the first embodiment or the third embodiment (which will be described later), the image forming device 111 is an image forming device of a first configuration, and includes a plurality of pixels which are arranged in a two-dimensional matrix form. Specifically, the image forming device 111 includes a reflective spatial light modulator 150 and a light source 153 which includes a light emitting diode which emits white light. Each image forming device 111 is accommodated in a housing 113 (indicated by a dashed line in Fig. 1), and an opening section (not shown) is formed in the housing 113. Light is output from the optical system 112 (parallel light outputting optical system, collimating optical system) through the opening section. The reflective spatial light modulator 150 includes a liquid crystal display (LCD) 151 formed by LCOS which is a light bulb, and a polarized beam splitter 152 which reflects part of light from the light source 153 to guide the reflected light to the liquid crystal display 151 and transmits part of the light reflected by the liquid crystal display 151 to guide the transmitted light to the optical system 112. The liquid crystal display 151 includes a plurality of (for example, 640 × 480) pixels (liquid crystal cells) which are arranged in the two-dimensional matrix form. The polarized beam splitter 152 has a known structure. Non-polarized light which is emitted from the light source 153 collides with the polarizing beam splitter 152. In the polarizing beam splitter 152, a P-polarized component passes therethrough and is output to the outside. On the other hand, an S-polarized component is reflected in the polarized beam splitter 152, is incident on the liquid crystal display 151, is reflected inside the liquid crystal display 151, and then is output from the liquid crystal display 151. Here, in the light output from the liquid crystal display 151, a large amount of P-polarized components are included in light output from pixels which display "white", and a large amount of S-polarized components are included in light output from pixels which display "black". Accordingly, the P-polarized components in the light which is output from the liquid crystal display 151 and collides with the polarizing beam splitter 152 pass through the polarized beam splitter 152 and are guided to the optical system 112. On the other hand, the S-polarized components are reflected in the polarized beam splitter 152 and return to the light source 153. The optical system 112 includes a convex lens, for example. The image forming device 111 (more specifically, the liquid crystal display 151) is disposed in the position of the focal distance in the optical system 112 in order to generate parallel light.

The frame 10 includes a front section 11 which is arranged in front of an observer, two temple sections 13 which are rotatably installed at opposite ends of the front section 11 through hinges 12, and an end cover section 14 (also referred to as a tip, earmuff or ear pad) which is installed in a tip end section of each temple section 13. Further, a nose pad (not shown) is installed. That is, an assembly of the frame 10 and the nose pad basically has approximately the same structure as in normal glasses. Further, each housing 113 is detachably installed in the temple section 13 by an installation member 19. The frame 10 is formed of metal or plastic. Each housing 113 may be installed the temple section 13 by the installation member 19 so as not to able to be detached from the temple section 13. Further, with respect to an observer who owns and wears glasses, each housing 113 may be detachably installed at the temple section of a frame owned by the observer by the installation member 19. Further, each housing 113 may be installed outside the temple section 13, or may be installed inside the temple section 13.

Further, a wire (signal line, power line or the like) 15 which extends from one image forming device 111A extends outside from the tip end section of the end cover section 14 through the temple section 13 and the inside of the end cover section 14, and is connected to a controller (control circuit, control section) 18. Further, each of the image forming devices 111A and 111B includes a headphone section 16, and a headphone section wire 17 which extends from each of the respective image forming devices 111A and 111B extends to the headphone section 16 from the tip end section of the end cover section 14 through the temple section 13 and the inside of the end cover section 14. More specifically, the headphone section wire 17 extends to the headphone section 16 so as to wrap around a rear side of an auricle from the tip end section of the end cover section 14. With such a configuration, without giving an impression that the headphone section 16 or the headphone section wire 17 are disorderedly arranged, it is possible to achieve a clean display apparatus.

In the display apparatus according to the first embodiment, since the dimmer includes a so-called electro-deposition type dimmer, which includes the first electrode formed of the conductive material of the fine line shape and the second electrode formed of the transparent electrode layer, it is possible to provide a display apparatus capable of giving high contrast to an image observed by an observer and sufficiently increasing the amount of external light incident on the image display apparatus with less power consumption. Further, by forming the first electrode 702 using silver nanowires on the basis of the printing method, it is possible to obtain the first electrode 702 obtained by randomly (irregularly or disorderedly) arranging silver nanowires, and thus, it is possible to effectively prevent light passing through the first electrode 702 from generating the diffraction phenomenon. Further, by setting the average diameter of silver nanowires as described above, it is possible to further effectively prevent light passing through the first electrode 702 from generating the diffraction phenomenon and to reduce light scattering intensity.

[Second embodiment]

The second embodiment is a modification example of the first embodiment. Fig. 5 is a conceptual diagram illustrating the image display apparatus 200 in a display apparatus (head mounted display) according to the second embodiment. In the second embodiment, the image forming device 211 includes an image forming device of a second configuration. That is, the image forming device 211 includes a light source 251, and a scanning section 253 which scans parallel light emitted from the light source 251. More specifically, the image forming device 211 includes (i) the light source 251, (ii) a collimating optical system 252 which collimates light output from the light source 251 into parallel light, (iii) the scanning section 253 which scans parallel light output from the collimating optical system 252, and (iv) a relay optical system 254 which relays parallel light scanned by the scanning section 253 and then outputs the result. The entire image forming device 211 is accommodated in a housing 213 (indicated by a dashed line in Fig. 5), an opening section (not shown) is formed in the housing 213, and light is output from a relay optical system 254 through the opening section. Further, each housing 213 is detachably installed in the temple section 13 by the installation member 19.

The light source 251 includes a light emitting device which emits white color. Further, light emitted from the light source 251 is incident on the collimating optical system 252 which has a positive optical power as a whole, and is then output as parallel light. Further, this parallel light is reflected by a total reflection mirror 256, and is subject to horizontal scanning and vertical scanning by the scanning section 253 which includes a MEMS in which micromirrors are arranged to be able to rotate in two-directional directions and incident parallel light is able to be scanned in a two-directional manner, to become a kind of two-dimensional image to generate virtual pixels (in which the number of pixels may be the same as in the first embodiment, for example) . Further, light from the virtual pixels passes through the relay optical system (parallel light outputting optical system) 254 which is formed by a known relay optical system, and light flux which is collimated into parallel light is incident on the optical device 120.

Since the optical device 120 which allows light flux collimated into parallel light by the relay optical system 254 to be incident thereon, to be guided therein, and to be then output therefrom has the same configuration or structure as that of the optical device described in the first embodiment, its detailed description will be omitted. Further, since the display apparatus according to the second embodiment has substantially the same configuration or structure as that of the display apparatus in the first embodiment except that the image forming device 211 of a different type is used as described above, its detailed description will be omitted.

[Third embodiment]

The third embodiment is a modification example of the first embodiment. Fig. 6 is a conceptual diagram illustrating the image display apparatus 300 in a display apparatus (head mounted display) according to the third embodiment. Further, Fig. 7 is an enlarged cross-sectional view schematically illustrating a part of a reflective volume hologram diffraction grating. In the third embodiment, in a similar way to the first embodiment, the image forming device 111 includes an image forming device of a first configuration. Further, a display apparatus 320 has substantially the same basic configuration or structure as that of the optical device 120 in the first embodiment, except that a first deflecting section and a second deflecting section of a different configuration or structure are used.

In the third embodiment, the first deflecting section and the second deflecting section are disposed on a front surface (specifically, a second surface 323 of a light guide plate 321) of the light guide plate 321. Further, the first deflecting section diffracts light incident on the light guide plate 321, and the second deflecting section diffracts light propagated inside the light guide plate 321 by total reflection over a plurality of times. Here, the first deflecting section and the second deflecting section include a diffraction grating element, specifically, a reflective diffraction grating element, and more specifically, a reflective volume hologram diffraction grating. In the following description, a first deflecting section formed by the reflective volume hologram diffraction grating is referred to as a "first diffraction grating member 330", and a second deflecting section formed by the reflective volume hologram diffraction grating is referred to as a "second diffraction grating member 340", for convenience of description.

Further, in the third embodiment or the fourth embodiment (which will be described later), the first diffraction grating member 330 and the second diffraction grating member 340 have a configuration in which one diffraction grating layer is layered. Interference fringes corresponding to one type of wavelength band (or wavelength) are formed in each diffraction grating layer made of a photopolymer material, which is manufactured by a method in the related art. The pitch of the interference fringes formed on the diffraction grating layer (diffraction optical element) is constant, and the interference fringes are linear and are in parallel with the Z axis. Here, axis lines of the first diffraction grating member 330 and the second diffraction grating member 340 are in parallel with the X axis, and normal lines thereof are in parallel with the Y axis.

Fig. 7 is an enlarged cross-sectional view schematically illustrating a part of the reflective volume hologram diffraction grating. Interference fringes having an inclination angle $\phi$ are formed in the reflective volume hologram diffraction grating. Here, the inclination angle $\phi$ represents an angle formed by the front surface of the reflective volume

hologram diffraction grating and the interference fringes. The interference fringes are formed over the front surface from the inside of the reflective volume hologram diffraction grating. The interference fringes satisfy the Bragg condition. Here, the Bragg condition refers to a condition which satisfies the following formula (A). In formula (A), m is a positive integer, $\lambda$ is a wavelength, d is the pitch of a grating surface (interval of a virtual flat surface including interference fringes in the normal line direction), and $\Theta$ is a complementary angle of an incident angle to interference fringes. Further, in a case where light enters the diffraction grating member at an incident angle $\psi$, the relationship between $\Theta$, the inclination angle $\phi$ and the incident angle $\psi$ is shown as formula (B).

$$m \cdot \lambda = 2 \cdot d \cdot \sin(\Theta) \quad \text{(A)}$$

$$\Theta = 90° - (\phi + \psi) \quad \text{(B)}$$

As described above, the first diffraction grating member 330 is disposed (attached to) on the second surface 323 of the light guide plate 321, and parallel light incident on the light guide plate 321 is diffracted and reflected so that parallel light incident on the light guide plate 321 through the first surface 322 is totally reflected inside the light guide plate 321. Further, as described above, the second diffraction grating member 340 is disposed (attached to) on the second surface 323 of the light guide plate 321, and parallel light propagated inside the light guide plate 321 by total reflection is diffracted and reflected a plurality of times and is output from the light guide plate 321 through the first surface 322 as the parallel light is.

Further, in the light guide plate 321, the parallel light is propagated therein by total reflection, and then is output therefrom. Here, since the light guide plate 321 is thin and the optical path inside the light guide plate 321 is long, the number of total reflections up to the second diffraction grating member 340 varies according to each field angle. More specifically, in parallel light incident on the light guide plate 321, the number of reflections of parallel light incident at an angle in a direction which is close to that of the second diffraction grating member 340 is smaller than the number of reflections of parallel light incident on the light guide plate 321 at an angle in a direction which is distant from that of the second diffraction grating member 340. This is because parallel light which is diffracted and reflected in the first diffraction grating member 330, which is parallel light incident on the light guide plate 321 at the angle in the direction which is close to that of the second diffraction grating member 340, has a small angle formed with respect to the normal line of the guide plate 321 when light propagated inside the light guide plate 321 collides with an inner surface of the light guide plate 321, compared with parallel light incident on the light guide plate 321 at an angle in the reverse direction. Further, the shape of interference fringes formed inside the second diffraction grating member 340 and the shape of interference fringes formed inside the first diffraction grating member 330 have a symmetric relationship with respect to a virtual surface perpendicular to the axis line of the light guide plate 321. A structure may be used in which surfaces of the first diffraction grating member 330 and the second diffraction grating member 340 which do not face the light guide plate 321 are coated by a transparent resin plate or a transparent resin film to prevent damage to the first diffraction grating member 330 and the second diffraction grating member 340. Further, a transparent protection film may be attached to the first surface 322 to protect the light guide plate 321.

The light guide plate 321 according to the fourth embodiment (which will be described later) basically includes the same configuration or structure as that of the light guide plate 321 as described above.

Since the display apparatus according to the third embodiment basically has substantially the same configuration or structure as that of the display apparatus according to the first embodiment, except that the optical device 320 of a different structure is used as described above, its detailed description will be omitted.

[Fourth embodiment]

A fourth embodiment is a modification example of the third embodiment. Fig. 8 is a conceptual diagram illustrating an image display apparatus in a display apparatus (head mounted display) according to the fourth embodiment. An optical source 251, a collimating optical system 252, a scanning section 253, a parallel light outputting optical system (relay optical system) 254, and the like in the image display apparatus 400 according to the fourth embodiment have the same configuration or structure (image forming device of a second configuration) as that of the second embodiment. Further, an optical device 320 in the fourth embodiment has the same configuration or structure as that of the optical device 320 in the third embodiment. Since the display apparatus according to the fourth embodiment has substantially the same configuration or structure as that of the display apparatus according to the first embodiment, except for the above-described differences, its detailed description will be omitted.

[Fifth embodiment]

A fifth embodiment is a modification example according to the first to fourth embodiments. Fig. 9 is a schematic diagram illustrating a display apparatus according to the fifth embodiment, when seen from the front. Fig. 10 is a schematic diagram illustrating the display apparatus according to the fifth embodiment, when seen from the top.

In the fifth embodiment, an optical device 520 which forms the image display apparatus 500 includes a semi-transmissive mirror which allows light output from image forming devices 111A and 111B to be incident thereon and to be then output therefrom toward the pupil 21 of an observer. In the fifth embodiment, the light output from the image forming devices 111A and 111B is propagated inside a transparent member 521 such as a glass plate or a plastic plate and is then incident on the optical device 520 (semi-transmissive mirror), but may be propagated in the air and may be then incident on the optical device 520. Further, the image forming device may be the same as the image forming device 211 described in the second embodiment.

Each of the image forming devices 111A and 111B is installed in the front section 11 using beads, for example. Further, the member 521 is installed in each of the image forming devices 111A and 111B, the optical device 520 (semi-transmissive mirror) is installed in the member 521, and a dimmer 700 is installed in the optical device 520 (semi-transmissive mirror). Since the display apparatus according to the fifth embodiment has substantially the same configuration or structure as that of the display apparatus according to the first to fourth embodiments, except for the above-described differences, its detailed description will be omitted.

[Sixth embodiment]

A sixth embodiment is a modification example of the first embodiment. Fig. 11A is a schematic diagram illustrating a display apparatus according to the sixth embodiment, when seen from the top, and Fig. 11B is a schematic diagram illustrating a circuit which controls an illumination sensor.

The display apparatus according to the sixth embodiment further includes an illumination sensor (environment illumination measuring sensor) 711 which measures the intensity of illumination of an environment where the display apparatus is disposed, and light transmittance of the dimmer 700 is controlled on the basis of the measurement result of the illumination sensor (environment illumination measuring sensor) 711. Additionally or independently, brightness of an image formed by the image forming device 111 or 211 is controlled on the basis of the measurement result of the illumination sensor (environment illumination measuring sensor) 711. The environment illumination measuring sensor 711 having a known configuration or structure may be disposed in an outer end section of the optical device 120 or 320, for example. The environment illumination measuring sensor 711 is connected to a controller 18 through a connector and a wire (not shown). A circuit which controls the environment illumination measuring sensor 711 is included in the controller 18. The circuit which controls the environment illumination measuring sensor 711 includes an illumination operation circuit which receives a measurement value from the environment illumination measuring sensor 711 and calculates the intensity of illumination, a comparison operation circuit which compares the value of the intensity of illumination calculated by the illumination operation circuit with a reference value, and an environment illumination measuring sensor control circuit which controls the dimmer 700 and/or the image forming device 111 or 211 on the basis of the value obtained by the comparison operation circuit. These circuits may include a known circuit. In control of the dimmer 700, the light transmittance of the dimmer 700 is controlled, whereas in control of the image forming device 111 or 211, the brightness of the image formed by the image forming device 111 or 211 is controlled. The light transmittance of the dimmer 700 and the brightness of the image in the image forming device 111 or 211 may be independently controlled or may be correlatively controlled.

For example, when the measurement result of the illumination sensor (environment illumination measuring sensor) 711 is equal to or greater than a predetermined value (a first measured illumination value), the light transmittance of the dimmer 700 is equal to or smaller than a predetermined value (a first light transmittance). On the other hand, when the measurement result of the illumination sensor (environment illumination measuring sensor) 711 is equal to or smaller than a predetermined value (a second measured illumination value), the light transmittance of the dimmer 700 is equal to or greater than a predetermined value (a second light transmittance). Here, as the first measured illumination value, 10 lux may be used, and as the first light transmittance, any value of 1% to 30% may be used. Further, as the second measured illumination value, 0.01 lux may be used, and as the second light transmittance, any value of 51% to 99% may be used.

The illumination sensor (environment illumination measuring sensor) 711 according to the sixth embodiment may be applied to the display apparatuses according to the second to fifth embodiments. Further, in a case where the display apparatus includes an imaging device, the illumination sensor (environment illumination measuring sensor) 711 may be configured by a light receiving element for exposure measurement included in the imaging device.

In the display apparatus according to the sixth embodiment or the seventh embodiment (which will be described later), the light transmittance of the dimmer is controlled on the basis of the measurement result of the illumination sensor

(environment illumination measuring sensor) 711, and the brightness of the image formed by the image forming device is controlled on the basis of the measurement result of the illumination sensor (environment illumination measuring sensor). Further, the light transmittance of the dimmer is controlled on the basis of the measurement result of a second illumination sensor (transmitted light illumination measuring sensor), and the brightness of the image formed by the image forming device is controlled on the basis of the measurement result of the second illumination sensor (transmitted light illumination measuring sensor). Thus, it is possible to give high contrast to the image observed by an observer, and to optimize an observation state of the image depending on the intensity of illumination of a peripheral environment where the display apparatus is disposed.

[Seventh embodiment]

A seventh embodiment is a modification example of the first embodiment. Fig. 12A is a schematic diagram illustrating a display apparatus according to the seventh embodiment, when seen from the top, and Fig. 12B is a schematic diagram illustrating a circuit which controls an illumination sensor.

The display apparatus according to the seventh embodiment further includes a second illumination sensor (transmitted light illumination measuring sensor) 712 which measures the intensity of illumination based on light passing through the dimmer from the external environment, that is, which measures whether environmental light passing through the dimmer is adjusted to a desired intensity of light to be incident, and the light transmittance of the dimmer 700 is controlled on the basis of the measurement result of the second illumination sensor (transmitted light illumination measuring sensor) 712. Further, additionally or independently, the brightness of an image formed by the image forming device 111 or 211 is controlled on the basis of the measurement result of the second illumination sensor (transmitted light illumination measuring sensor) 712. The transmitted light illumination measuring sensor 712 having a known configuration or structure is disposed closer to the side of an observer, than optical device 120, 320 or 520. Specifically, the transmitted light illumination measuring sensor 712 may be disposed on an inner surface of the housing 113 or 213. The transmitted light illumination measuring sensor 712 is connected to the controller 18 through a connector or a wire (not shown). A circuit which controls the transmitted light illumination measuring sensor 712 is included in the controller 18. The circuit which controls the transmitted light illumination measuring sensor 712 includes an illumination operation circuit which receives a measurement value from the transmitted light illumination measuring sensor 712 and calculates the intensity of illumination, a comparison operation circuit which compares the value of the intensity of illumination calculated by the illumination operation circuit with a reference value, and a transmitted light illumination measuring sensor control circuit which controls the dimmer 700 and/or the image forming device 111 or 211 on the basis of the value obtained by the comparison operation circuit. These circuits may include a known circuit. In control of the dimmer 700, the light transmittance of the dimmer 700 is controlled, whereas in control of the image forming device 111 or 211, the brightness of the image formed by the image forming device 111 or 211 is controlled. The light transmittance of the dimmer 700 and the brightness of the image in the image forming device 111 or 211 may be independently controlled or may be correlatively controlled. Further, in a case where the measurement result of the transmitted light illumination measuring sensor 712 cannot be controlled up to a desired intensity of illumination in consideration of the intensity of illumination of the environment illumination measuring sensor 711, that is, in a case where the measurement result of the transmitted light illumination measuring sensor 712 is not the desired intensity of illumination, or in a case where further fine illumination adjustment is necessary, the light transmittance of the dimmer may be adjusted while monitoring the value of the transmitted light illumination measuring sensor 712.

The second illumination sensor (transmitted light illumination measuring sensor) 712 according to the seventh embodiment may be applied to the display apparatuses in the second and fifth embodiments as described above. Further, the second illumination sensor (transmitted light illumination measuring sensor) 712 according to the seventh embodiment or the environment illumination measuring sensor 711 according to the sixth embodiment may be combined. In this case, the light transmittance of the dimmer 700 and the brightness of the image in the image forming device 111 or 211 may be independently controlled or may be correlatively controlled, using a variety of tests.

[Eighth embodiment]

In the following eighth to twenty first embodiments, modification examples of the display apparatuses according to the first to seventh embodiments will be described. In the drawings relating to the eighth to twenty first embodiments, a dimmer is not shown.

The eighth embodiment is a modification example of the display apparatuses according to the first to seventh embodiments. Specifically, the eighth embodiment relates to a display apparatus 1A and a display apparatus 1B according to the present disclosure, and more specifically, to a display apparatus (subtitle display apparatus) which displays subtitles. Fig. 13 is a diagram schematically illustrating light propagation in a light guide plate which forms an image display apparatus in the display apparatus according to the eighth embodiment. Further, Fig. 14 is a diagram illustrating

a status where the display apparatus according to the eighth embodiment is mounted in a head portion of an observer, when seen from the top (only the image display device is shown and a frame is not shown). Figs. 15 and 16 are conceptual diagrams illustrating a state where the display apparatus according to the eighth embodiment is used. Further, Fig. 17 is a conceptual diagram illustrating a controller 18 which forms the display apparatus according to the eighth embodiment. Fig. 18A is a diagram illustrating an example of an image signal in the eighth embodiment.

In the eighth embodiment, or any one of the ninth to fifteenth embodiments (which will be described later), a point where a central incident light ray CL which is perpendicularly incident on the optical device 120, 320 or 520 among light rays (central light rays) which are output from the center of the image forming device 111 or 211 and pass through a node of the optical system 112 or 254 on the side of the image forming device is incident on the optical device 120, 320 or 520 is represented as an optical device central point O, an axis line parallel to an axis line direction of the optical device 120, 320 or 520 is represented as the X axis, and an axis line which passes through the optical device central point O and matches a normal line of the optical device 120, 320 or 520 is represented as the Y axis. The central point of the first deflecting section 130 or 330 is the optical device central point O.

An imaging device (not shown) which includes a solid state imaging device and a lens (which are not shown), which includes a CCD or CMOS sensor, is installed by an appropriate installation member (not shown) in a central portion of the front section 11. A signal from the imaging device is transmitted to the image forming device 111A or 211 through a wire (not shown) which extends from the imaging device.

The wire (signal line, power line or the like) 15 is connected to the controller (control circuit) 18, as described above. An image signal (for example, character data) is transmitted to the controller 18 in a wireless manner. Further, in the controller 18, a process for image display (for example, subtitle display) is performed in the image signal (character data) . The controller 18 may be configured by a known circuit.

As shown in Fig. 17, the controller 18 includes a command receiving circuit 18A which receives an image signal (including a command) transmitted in a wireless manner through a character data wireless transmitter 32 (which will be described later); a signal processing circuit 18B which receives the image signal from the command receiving circuit 18A and performs a variety of analyses and processes; a timing adjusting circuit 18C which receives a variety of pieces of data from the signal processing circuit 18B and transmits a variety of signals; and a transmitting circuit 18D which receives the variety of signals from the timing adjusting circuit 18C, adjusts a timing to reproduce an image from a display position, and transmits the image signal to each image forming device 111 (111A or 111B) or 211 through the wire 15. The controller 18 further includes a timing generating section 18E which generates a timing signal for displaying the received image signal. The timing adjustment is performed in the timing adjusting circuit 18C, on the basis of a variety of timing blocks and timing signals from the timing generating circuit 18E.

As shown in Fig. 18A, the image signal includes "SYNC" which is a command start flag, "MSG_ID" which is a command type specifying ID, "LENG" which is data indicating the length of the entire command, "POS_X" which is data indicating a horizontal display start position of an image, "POS_Y" which is data indicating a vertical display start position of an image, "DATA" which is data on an image to be displayed, and "FCS" which is a command error check.

Hereinafter, the image (for example, subtitle) display in the display apparatus according to the eighth embodiment will be described.

That is, in the display apparatus according to the eighth embodiment, by controlling image signals (character data, input image signals and input image data) input to the image display apparatus 111 or 211 which forms at least one image display apparatus (two image display apparatuses for the left and right eye 100, 200, 300, 400 or 500 in the eighth embodiment), the convergence angle is adjusted depending on the observation position of an observer, or the position of an image displayed in the optical device which forms at least one image display apparatus is adjusted depending on the observation position of the observer. In the eighth embodiment, the convergence angle and the position of the image are adjusted depending on the observation position of the observer, but only any one thereof may be performed.

Specifically, the image signal is transmitted to the controller 18 in a wireless manner (or in a wired manner as necessary). Further, in the controller 18, the process for image display with respect to the image signal is performed, and an image (subtitle) is generated in the image forming device 111 or 211, on the basis of data "DATA". The image finally reaches both eyes of the observer (audience) mounted with the display apparatus, through the optical system 112 or 254 and the optical device 120, 320 or 520.

Further, in order to match (overlap) the images displayed by the image display apparatuses 100, 200, 300, 400 or 500 for the left and right eye with a desired position (for example, a desired position of a stage or a screen), images displayed in the optical devices 120, 320 or 520 are shifted horizontally and vertically and are rotated through the controller 18, specifically, using a switch (not shown) which is disposed in the controller 18. That is, for example, the image displayed in each optical device 120, 320 or 520 is shifted horizontally and vertically and is rotated so that a point "A" shown in Fig. 14 is disposed in a desired location. In this way, by an operation of the switch disposed in the controller 18, the image signal is controlled. That is, a display position correction signal is generated in the controller 18, and the display position correction signal is added to the image signal.

Fig. 19A is a schematic diagram illustrating a state where the images displayed by the image display apparatuses 100, 200, 300, 400 or 500 for the left and right eye are horizontally shifted in the desired position, Fig. 19B is a schematic diagram illustrating a state where the images are vertically shifted, and Fig. 19C is a schematic diagram illustrating a state where the images are shifted in a rotation manner. Here, a figure on the right side in Figs. 19A to 19C shows an image displayed by the right-eye image display apparatus 100, 200, 300, 400 or 500, and a figure on the left side in Figs. 19A to 19C shows an image displayed by the left-eye image display apparatus 100, 200, 300, 400 or 500. Further, a dotted line in the right-side figure in Figs. 19A to 19C shows an overlapped image displayed by the left eye image display apparatus 100, 200, 300, 400 or 500.

Here, in order to horizontally move the image (character), a signal which changes the horizontal position of the image based on an image signal by + i pixels or - i pixels may be generated in the controller 18 as the display position correction signal, or a signal which changes a timing of a horizontal sync signal by + i pixels or - i pixels may be generated in the controller 18. Further, a signal which changes the timing of the horizontal sync signal by + i pixels or - i pixels may be generated in the controller 18. Further, in order to vertically move the image (character), a signal which changes the vertical position of the image based on the image signal by + j pixels or - j pixels may be generated in the controller 18 as the display position correction signal, or a signal which changes a timing of a vertical sync signal by + j pixels or - j pixels may be generated in the controller 18. That is, these shifts can be realized by delaying or quickening the memory reading position of the image in timing, or by shifting the timings of the vertical sync signal and the horizontal sync signal. Further, in order to rotate the image (character), a signal for rotating the image based on a known method may be generated in the controller 18 as the display position correction signal.

Further, the display position correction signal when the images displayed by the image display apparatus 100, 200, 300, 400 or 500 for the left and right eye are matched (overlapped) in the desired position is stored in the controller 18. Such an operation may be performed by using a button (not shown) installed in the controller 18, for example. Further, it is sufficient if such an operation is performed once after an observer takes one’s seat. Further, a kind of test pattern which is a combination of a line which extends in the horizontal direction, a line which extends in the vertical direction and a line which extends in the inclination direction, as shown in Figs. 19A and 19B, may be used in this operation. In this way, the position of the image displayed in the optical device 120, 320 or 520 which forms at least one image display apparatus 100, 200, 300, 400 or 500 is controlled, and thus, it is possible to adjust the mutual positions of two images in two image display apparatuses 100, 200, 300, 400 or 500. That is, it is possible to adjust the convergence angle and the position of an image depending on the observation position of the observer.

As described above, the display position correction signal is stored in the controller (control circuit and control section) 18. An image signal (character data) reproduced by a character data reproducing device 31 or an image data and character data reproducing device 31’ having a known configuration is transmitted to the controller 18 through a character data wireless transmitter 32 in a wireless manner. A transmission start of the image signal may be performed by operation of an operator or under the control of a computer or the like, on the basis of a predetermined schedule or time allocation, according to the progress of a movie, play or the like. Further, a process for image display with respect to the image signal is performed in the controller 18. That is, the display position correction signal is added to the image signal (specifically, data "POS_X" and "POS_Y") in the controller 18. In this way, by controlling the image signal to the image forming device 111 or 211 which forms at least one image display apparatus (two image display apparatuses for the left and right eye 100, 200, 300, 400 or 500 in the eighth embodiment) on the basis of the distance from the display apparatus to the observation object, that is, by adjusting the horizontal distance (interval) between two images obtained by two image display apparatuses for the left and right eye 100, 200, 300, 400 or 500, it is possible to adjust the convergence angle corresponding to the distance from the display apparatus to the observation object. Specifically, for example, as the distance from the display apparatus to the observation object becomes long, the convergence angle may be decreased. Further, by moving in parallel two images obtained by two image display apparatuses for the left and right eye 100, 200, 300, 400 or 500, it is possible to adjust the position of the image displayed in the optical device 120, 320 or 520 which forms the image display apparatus 100, 200, 300, 400 or 500 depending on the observation position of the observer. Specifically, for example, in a case where the observation object is vertically disposed in a position at a certain angle with respect to the display apparatus (for example, in a posture where the observer looks up at the screen when the observer takes a front seat in the cinema), by moving the position of the displayed image (subtitle) upward, when the observer views the external image (observation object) and the image in an overlapping manner, the display position of the external image to be closely observed and the display position of the image are not considerably separated, and thus, it is possible to visually recognize the image with ease. Further, a performance is performed according to a scenario which is determined in advance in a movie, stage or the like. Accordingly, it is possible to predict the image (observation object) on the screen or the stage when the images are overlapped. Further, it is also possible to predict the position of a performer or the like in the screen or the stage, on the basis of a sound source such as a performer speaking their dialogue. Thus, by adjusting the position of the image displayed in the optical device 120, 320 or 520 which forms the image display apparatus 100, 200, 300, 400 or 500 depending on the observation position of the observer on the basis of this prediction, it is possible to display the image (subtitle) in a position with good visibility

in the optical device 120, 320 or 520.

Further, in addition to the image signal to the image forming device 111 or 211, the observation position information (distance information) from the observer (display position) to the observation object may be transmitted to the display apparatus from the outside. Fig. 20A is an example of a conceptual diagram of the format of such a signal. In such a configuration, a signal (display position correction signal, convergence angle control signal) which changes the horizontal position of the image based on the image signal by + k pixels or - k pixels, on the basis of the observation position information (distance information), may be generated in the controller 18. Further, the change in the convergence angle and the virtual image distance when the horizontal position of the image is changed by one pixel may be checked in advance, and their relationship may be stored in the controller 18. To this signal may be added a display position correction signal which changes the horizontal position of the image by + i pixels or - i pixels, a display position correction signal which changes the vertical position of the image by + j pixels or - j pixels, and a display position correction signal for rotation of the image, and the result may be transmitted to the image forming device 111 or 211. In this way, by moving two images obtained by two image display apparatuses for the left and right eye 100, 200, 300, 400 or 500 according to the observation position information (or the amount of horizontal image shift), it is possible to arrange the virtual image in the desired position. That is, by adjusting the horizontal distance (interval) between two images displayed by the optical devices 120, 320 or 520 which form the image display apparatuses 100, 200, 300, 400 or 500, it is possible to adjust the convergence angle corresponding to the distance from the display apparatus to the observation object. Further, by moving in parallel two images obtained by two image display apparatuses for the left and right eye 100, 200, 300, 400 or 500, it is possible to arrange the virtual image in the desired position. That is, it is possible to adjust the position of the image displayed in the optical device 120, 320 or 520 which forms the image display apparatus 100, 200, 300, 400 or 500 depending on the observation position of the observer.

The adjustment of the convergence angle corresponding to the distance from the display to the observation object will be described on the basis of Fig. 20B. Here, the virtual image distance of the image (character) based on the image signal displayed by the image display apparatus is represented as "a", and the convergence angle (X axis direction) with respect to the image at that time is represented as "$\alpha$". Further, "y" represents a convergence angle in an image which is distant from the virtual image distance "a" by "c", and "$\beta$" represents a convergence angle in an image which is close to the virtual image distance "a" by "b" . Further, the distance between right and left pupils is represented as "D". Here, if D = 61.5 mm, a = 4000 mm, $\alpha$ = 53 minutes (53').

One pixel in the image forming device is defined as 3 minutes (3'). Here, if the image display position is horizontally shifted to the inside by one pixel from a predetermined position, $\beta$ = 56 minutes (56'), b = 225 mm. On the other hand, if the image display position is horizontally shifted to the outside by one pixel from the predetermined position, y = 50 minutes (50') and c = 228 mm. Further, in a case where a = 8000 mm, if the image is shifted by one pixel, the virtual image distance can be shifted by about 1 m.

In this way, by shifting the image display position in the horizontal direction from the predetermined position by a desired number of pixels, it is possible to adjust the convergence angle. In other words, by controlling the image signal to the image forming device 111 or 211 which forms the two image display apparatus for the left and right eye 100, 200, 300, 400 or 500 by the display position correction signal, it is possible to correctly adjust the convergence angle corresponding to the distance from the display position to the observation object. As a result, it is possible to make the distance between the observation object and the observer (audience) and the virtual image distance of the image (subtitle) displayed by the image display apparatus be equalized, or be equal to each other as much as possible. Further, the observer (audience) who views the observation object can naturally view the image displayed by the image display apparatus, without changing a focus.

It is preferable that the virtual image distance a and the convergence angle $\alpha$ establish the following relationship: $a \times \tan(a/2) = D/2$.

Here, D (unit: mm) satisfies $56 \leq D \leq 74$, for example. In a case where the value of $\alpha$ is 0, the value of "a" is infinite. Here, the virtual image distance a and the convergence angle $\alpha$ should not be necessarily independently calculated according to the movement speed of the observer. That is, as the correspondence relationship of any one of them is defined, the other thereof may be automatically determined.

A position measuring section (distance measuring device) which measures the distance from the display apparatus to the observation object may be further provided, and observation position information (distance information) may be obtained by the position measuring section (distance measuring device) . As the position measuring section (distance measuring device), for example, an image device having an auto focusing function (an imaging device having a distance measuring device of a passive type) may be used. Further, a button or a switch may be installed in the controller 18 to manually set the distance from the display to the observation object. With such a configuration, an appropriate display position correction signal is generated in the controller 18, and the display position correction signal is added to the image signal. Further, the display apparatus in which the convergence angle, the position of an image (subtitle) displayed in the optical apparatus, the virtual image position, and the virtual image distance are set in advance according to the position of an observer (audience) who takes one's seat in a cinema, a theater or the like may be lent

to the observer (audience). In such a configuration, an appropriate display position correction signal is determined in advance and is stored in the controller 18, and the display position correction signal is added to the image signal.

In a case where the display apparatus is used in a theater, for example, an explanatory note for describing the content, progress, background or the like in a performance may be displayed in the display apparatus as images. In this case, the virtual image distance should be set to a desired distance. That is, the distance between the observation position and the observer (audience) and the virtual image distance of the image (or subtitle) displayed by the image display apparatus are changed according to the position where the audience takes one's seat. Accordingly, it is possible to optimize the virtual image distance depending on the position of the audience. In the display apparatus according to the eighth embodiment, as described above, since the convergence angle corresponding to the distance from the display apparatus to the observation object is optimized, the virtual image distance is optimized depending on the position of the audience. Further, there is a case where the virtual image distance should be changed according to scenes. In this case, the observation position information (distance information) from the observer (display apparatus) to the observation object is transmitted from the outside to the display apparatus, thereby easily dealing with this demand.

Further, the observer (audience or user) may set the virtual image distance to a desired distance or may set the virtual image position to a desired position. Specifically, a switch or a button may be installed in the controller 18 and the observer may operate the switch or the button, to thereby dispose a virtual image in a desired distance or position. For example, in a case where the background is changed, it is possible to randomly change the virtual image distance or the virtual image position. Such an operation may be automatically performed on the basis of an image signal, for example, or may be appropriately performed by the observer when observing the observation object. Specifically, in the controller 18, this operation is an operation which adds a display position correction signal and a convergence angle control signal to the image signal. Further, this operation is an operation which operates a moving device 40 (which will be described later) . Thus, the audience can reliably read the image (for example, characters such as subtitles), for example, without movement of one's eyes. Thus, it is possible to easily display an image (for example, subtitles or the like, more specifically, subtitles or the like based on a different language, for example) suitable for each audience at the same time.

The image signal is digitalized data, which is created in advance before display. The display position of the image may be a position where it is not obstructed when the observation object is viewed. Further, specifically as described above, the image display is transmitted to the controller 18 in a wireless manner by the character data wireless transmitter 32 according to a predetermined schedule, time allocation or the like, or according to the progress of the observation object, and, under the control of a computer (not shown) provided in the character data generating device 31 or the image data and character data reproducing device 31'.

In the display apparatus according to the eighth embodiment, if brightness data or chromaticity data relating to characters to be displayed, in addition to character data, are included as the image signal, it is possible to reliably prevent visual recognition of characters of an image (for example, subtitles or the like) from being obstructed depending on the background of the characters. As the brightness data, brightness data corresponding to brightness of a predetermined area (for example, a lower area corresponding to 1/3 of the entire stage) including the observation object (characters, background, or the like) viewed through the image display apparatus may be used. Further, as the chromaticity data, chromaticity data corresponding to chromaticity of a predetermined area including the observation object viewed through the image display apparatus may be used. In particular, if brightness of a screen, a stage or the like viewed over a semi-transmissive (see-through type) optical device and brightness or color balance of characters displayed in the optical device are not in a constant range, it may be difficult to satisfactorily observe the subtitle, screen, stage or the like. However, it is possible to adjust the brightness or color of characters to be displayed according to the screen, stage or the like, and to visually satisfactorily recognize the characters. That is, it is possible to reliably prevent visual recognition of the characters for description or the like of the observation object or the like viewed by the observer (audience) from being obstructed depending on the background of the characters. Further, in the display apparatus according to the eighth embodiment, for example, characters (for example, an explanatory note relating to situations or the background of play, an explanatory note relating to performers, conversation of performers, or the like) relating to the observation object may be displayed in the image display apparatus 100, 200, 300, 400 or 500, at an appropriate timing. Specifically, for example, the character data may be transmitted to the image display apparatus 100, 200, 300, 400 or 500 according to the progress of play, by operation of an operator or under the control of a computer or the like, and the characters may be displayed in the image display apparatus 100, 200, 300, 400 or 500.

Further, if the virtual image position is fixed, eyes may get tired. It is because if the focus is fixed, movement of the eye ball becomes less. Thus, by appropriately changing the virtual image distance or the virtual image position, an effect of reducing fatigue of eyes is obtained. That is, the virtual image position formed by two optical devices or the distance (virtual image distance), from two optical devices, of the virtual image formed by two optical devices may be changed with time. Specifically, the position of the image in the horizontal direction may be changed, for example, once every five minutes, for example, by + two pixels in the image forming device, for example, for one minutes, and then may return to the original position.

[Ninth embodiment]

A ninth embodiment relates to the display apparatus 1C according to the present disclosure. Since a basic configuration or structure of the display apparatus according to the ninth embodiment may be the same as the basic configuration or structure of the display apparatus according to the eighth embodiment, its detailed description will be omitted.

In the display apparatus according to the ninth embodiment, after a predetermined time elapses after the image signal is input to the image forming device, image formation in the image forming device is stopped. In order to stop the image formation in the image forming device, that is, in order to enter a power save mode or the like in the display apparatus, a signal indicating an image display time in the image forming device or a signal indicating the image formation stop in the image forming device is added to the image signal.

Fig. 18B is a diagram illustrating an example of the image signal in the ninth embodiment. "TIME" which is data indicating an image display time, which is a signal indicating an image display time in the image display apparatus, is added to the image signal in the eighth embodiment shown in Fig. 18A. In the controller 18, an image (subtitle) is displayed in the image display apparatus by the time length (T seconds) of the data "TIME", and then, the image (subtitle) display is stopped in the image display apparatus. Further, only the command receiving circuit 18A is operated, and the display apparatus enters a power save mode or the like in which operations of the signal processing circuit 18B, the timing adjusting circuit 18C, the transmitting circuit 18D and the timing generating circuit 18E are stopped according to commands from the command receiving circuit 18A. Further, if the command receiving circuit 18A receives an image signal again, the operations of the signal processing circuit 18B, the timing adjusting circuit 18C, the transmitting circuit 18D and the timing generating circuit 18E are restarted, on the basis of commands from the command receiving circuit 18A.

In this way, in the display apparatus according to the ninth embodiment, after the predetermined time elapses after the image signal is input to the image forming device, the image formation in the image forming device is stopped. That is, since the display apparatus enters the power save mode or the like after the predetermined time elapses, the problem of power waste in the display apparatus does not occur.

[Tenth embodiment]

A tenth embodiment is a modification example of the image display apparatus according to the eighth embodiment or the ninth embodiment. Figs. 21A and 21B are conceptual diagrams illustrating an arrangement state of the light guide plate or the like which forms the image display apparatus in the display apparatus according to the tenth embodiment, and Fig. 22 is a schematic diagram illustrating the display apparatus according to the tenth embodiment, when seen from the side.

In the eighth embodiment or the ninth embodiment, as shown in Fig. 13, in the image display apparatus 100 or 300, the central incident light ray CL which is output from the center of the image forming device 111 or 211 and passes through the node of the optical system 112 or 254 on the side of the image forming device perpendicularly collides with the light guide plate 121 or 321. That is, the central incident light ray CL is incident on the light guide plate 121 or 321 at an incident angle of 0 degrees. Further, in this case, the center of the displayed image coincides with a normal direction of the first surface 122 or 322 of the light guide plate 121 or 321.

That is, in the image display apparatus represented by the image display apparatus 100, as shown in Fig. 13, the central incident light ray CL which is output from the center of the image forming device 111 or 211 which is disposed on the optical axis of the collimating optical system 112 is converted into approximately parallel light by the collimating optical system 112, and then is perpendicularly incident on the first surface (incident surface) 122 of the light guide plate 121. Further, the central incident light ray CL travels along a propagation direction A while being totally propagated between the first surface 122 and the second surface 123 by the first deflecting section 130. Subsequently, the central incident light ray CL is reflected and diffracted by the second deflecting section 140, is perpendicularly output from the first surface 122 of the light guide plate 121, and then reaches the pupil 21 of the observer (audience).

In the display apparatus of the see-through type, when the observer (audience) views the observation target which is positioned in the horizontal direction, in order not to interfere with the optical device 120, 320 or 520, it is preferable to shift the optical device 120, 320, or 520 downward for arrangement, with reference to the line of vision (horizontal line of vision of the observer) of the observer in the horizontal direction. In such a case, the entire image display apparatus 100 or 300 is arranged below the horizontal line of vision of the observer. However, in such a configuration, as shown in Fig. 24, it is necessary to incline the entire image display apparatus 100 by an angle θ". Due to the relationship with the installation section (temple section) of the spectacle type frame for installation on the head portion of the observer, the angle θ" at which the image display apparatus 100 is inclined may be limited, or the degree of freedom in design may be reduced. Thus, in order to prevent obstruction to the horizontal line of vision of the observer, it is desirable to provide an image display apparatus which is able to be arranged with a high degree of freedom and has a high degree of freedom in design.

In the tenth embodiment, the central incident light ray CL intersects with the XY plane at an angle (θ) other than 0 degrees. Further, the central incident light ray CL is included in the YZ plane. Further, in the tenth embodiment or the eleventh embodiment (which will be described later), an optical axis of the optical system 112 or 254 is included in the YZ plane, and intersects with the XY plane at an angle other than 0 degrees, specifically, at an angle θ (see Figs. 21A and 21B). Further, in the tenth embodiment or the eleventh embodiment (which will be described later), when it is assumed that the XY plane coincides with the horizontal plane, the angle θ where the central incident light ray CL intersects with the XY plane is an elevation angle. That is, the central incident light ray CL is directed to the XY plane from the lower side of the XY plane, and collides with the XY plane. Further, the XY plane intersects with the vertical plane at an angle other than 0, specifically, at the angle θ.

In the tenth embodiment, θ is 5°. More specifically, in such a configuration, the central incident light ray CL (indicated by a dashed line in Fig. 22) is included in the horizontal plane. Further, the optical device 120, 320 or 520 is inclined by the angle θ with respect to the horizontal plane. In other words, the optical device 120, 320 or 520 is inclined by an angle (90 - θ) with respect to the horizontal plane. Further, a central incident light ray CL' (indicated by a dotted line in Fig. 22) output from the optical device 120, 320 or 520 is inclined by the angle 2θ with respect to the horizontal plane. That is, when the observer views an object disposed on an infinitely distant side in the horizontal direction, the central incident light ray CL' which is output from the optical device 120, 320 or 520 and is incident on the pupil of the observer forms an depression angle θ' (= 2θ) (see Fig. 22). The angle formed by the central incident light ray CL' and the normal line of the optical device 120, 320 or 520 is θ. In Fig. 21A or Fig. 23A (which will be described later), a point where the central incident light ray CL' is output from the optical device 120, 320 or 520 is indicated as "O'", axial lines parallel to the X axis, the Y axis and the Z axis which pass through the point "O'" are expressed as the X' axis, the Y' axis, and the Z' axis.

In the image display apparatus according to the tenth embodiment, the central incident light ray CL intersects with the XY plane at the angle (θ) other than 0 degrees. Here, the central incident light ray CL' which is output from the optical device and is incident on the pupil of the observer (audience) forms the depression angle θ', in which the relationship of θ' = 2θ is established. On the other hand, in the example shown in Fig. 24, in a case where the same depression angle is to be obtained, it is necessary to incline the entire image display apparatus by the angle θ". Here, the relationship between θ" and θ' is θ" = 2θ. As a result, the example shown in Fig. 24, the optical device should be inclined by 2θ with respect to the vertical plane. On the other hand, in the tenth embodiment, the optical device may be inclined by θ with respect to the vertical plane, and the image forming device may be maintained in the horizontal direction. Accordingly, it is possible to reduce the limitation to the installation angle of the image display apparatus when the image display apparatus is installed in the installation section of the spectacle type frame, and to obtain a high degree of freedom in design. Further, since the inclination of the optical device with respect to the vertical plane is smaller than that of the example shown in Fig. 24, a phenomenon that external light is reflected by the optical device and is incident on the pupil of the observer (audience) hardly occurs. Thus, it is possible to perform image display with high quality.

Since the display apparatus according to the tenth embodiment has the same configuration or structure as that of the display apparatus according to the eighth embodiment or the ninth embodiment, except for the above-described differences, its detailed description will be omitted.

[Eleventh embodiment]

An eleventh embodiment is a modification example of the image display apparatus according to the tenth embodiment. Figs. 23A and 23B are conceptual diagrams illustrating an arrangement state of the light guide plate or the like which forms the image display apparatus according to the eleventh embodiment. Here, in the eleventh embodiment, the optical axis of the optical system (parallel light outputting optical system or collimating optical system) 112 is parallel to the YZ plane and the XY plane, and passes through a position which is separated from the center of the image forming device 111 or 211. With such a configuration, the central incident light ray CL is included in the YZ, and intersects with the XY plane at the elevation angle θ. Since the display apparatus according to the eleventh embodiment has the same configuration or structure as that of the display apparatus according to the eighth to tenth embodiments, except for the above-described difference, its detailed description will be omitted.

[Twelfth embodiment]

Twelfth to fifteenth embodiments are modification examples of the display apparatuses described with reference to the eighth to eleventh embodiments. The twelfth embodiment relates to a display apparatus 3A according to the present disclosure. A basic configuration or structure of the display apparatus according to the twelfth embodiment or any one of the thirteenth to fifteenth embodiments has the same configuration or structure as the display apparatuses described in the eighth to eleventh embodiments, its detailed description will be omitted.

In the display apparatus according to the twelfth embodiment, conversation or the like of performers in a play

is displayed in the display apparatus as subtitles. A data group is stored in a storage section (not shown) which includes a memory card provided in a controller 618 having a known circuit configuration. Here, in the twelfth embodiment, the data group is an assembly of character data which is image data in which a character string is converted into an image, obtained by editing conversation or the like of performers scene by scene, for example. The file format of the image data (image signal) is fundamentally arbitrary. Fig. 25 is a conceptual diagram illustrating a file structure of an image signal (character data) which forms the data group. Here, a designated identification symbol is assigned to each character data which forms the data group. The designated identification symbol includes numerals, for example.

Figs. 26A and 26B are a system configuration block diagram of a transmitter 651 (transmitting section) and a system configuration block diagram of a controller 618 in the display apparatus, respectively, according to the twelfth embodiment. Fig. 27 is a diagram illustrating the flow of a transmission process in the transmitter 651 in the twelfth embodiment. Further, Fig. 28 is a diagram illustrating the flow of a reception process in the controller 618 in the twelfth embodiment.

For example, a personal computer 652 and a display apparatus 653 having a known liquid crystal display are provided in the transmitter 651 having a known circuit configuration. Further, as shown in Figs. 29A and 29B, for example, designated identification symbols, a plurality of pieces of character data which form the data group, a total display time of each character data, and brightness information are displayed in the display apparatus 653. Further, an area where display data which forms the character data (data indicating different sizes, or data indicating different languages) is displayed is formed in the display apparatus 653, and further, an area where the number of display apparatuses which receive the variety of information from the transmitter 651 is displayed is also formed. Further, an area where the ratio of display time information $T_{Inf}$ to total display time $T_{total}$ is indicated by a "crossbar" is also formed. In the "display area for designated identification symbols or the like", a cursor is disposed in a hatched portion, which indicates a row in which a display color is reversed.

Further, immediately before a certain conversation of a performer in a play is started, a designated identification symbol and display time information are transmitted to the controller 618 from the outside at predetermined time intervals. The time corresponding to the display time information corresponds to the predetermined time in the display apparatus 1C according to the present disclosure and the display apparatus 3A according to the present disclosure. Specifically, for example, as an operator operates a pointing device or a keyboard (not shown) provided in the personal computer 652, the designated identification symbols displayed in the display apparatus 653, the plurality of character data which form the data group, and the row in which the total display time of each character data is displayed are designated, and thus, the personal computer 652 reads the designated identification symbol and the total display time which are designated, obtains display time information, creates a display packet, and transmits the designated identification symbol and the display time information together with a sync signal to the controller 618 in the display apparatus. As the pointing device, for example, a joystick, a pointing stick (track pointer), a touchpad, a touch panel, a stylus pen, a data glove, a track ball, a pen tablet, a mouse, a light pen, or a joy pad may be used.

Specifically, as described above, the display time information $T_{Inf}$ can be expressed as $T_{Inf}(m) = T_{total} - (m-1) \times T_{int}$, using the total display time $T_{total}$ and the predetermined time interval $T_{int}$. Further, the designated identification symbol and the display time information $T_{Inf}$ are transmitted to the controller 618 from the outside (transmitter 651) at the predetermined time interval $T_{int}$. For example, if $T_{total}$ = 10.0 seconds and $T_{int}$ = 0.1 seconds, the display time information $T_{Inf}$ (m) when the designated identification symbol and the display time information are transmitted to the controller 618 from the outside (transmitter 651) for the first time (m = 1) is $T_{int}$ (1) = 10.0 seconds.

In the transmitter 651, it is checked whether $T_{Inf}$ = 0 (second). In a case where $T_{Inf}$ is not 0 second, $T_{Inf}$ is reduced by $T_{int}$ (specifically, 0.1 second) as a timer waiting time. Further, after $T_{int}$ (specifically, 0.1 second) elapses, the designated identification symbol and the display time information $T_{Inf}$ (2) are transmitted again, using $T_{Inf}$ (2) = 9.9 seconds. This process is repeated until $T_{Inf}$ = 0 (second).

In the controller 618, if the designated identification symbol and the data identification symbol are received, character data in which the transmitted designated identification symbol and data identification symbol match each other is read from the storage section. Further, during the time corresponding to the transmitted display time information $T_{Inf}$, an image based on the character data is displayed in the image forming device 111 or 211. In a case where the image display is started in the image forming device 111 or 211, even though the same designated identification symbol and different time display information $T_{Inf}$ are transmitted to the controller 618 from the outside (transmitter 651), the controller 618 ignores these designated identification symbol and time display information $T_{Inf}$ to continuously display the image. In such an operation, in the controller 618, a flag (reception completion flag) may be generated. On the other hand, in a case where the controller 618 fails in reception of the designated identification symbol and/or the display time information $T_{Inf}$ from the transmitter 651, from the first time to the (m'-1)-th time, due to some reasons, and firstly succeeds in reception of the designated identification symbol and the display time information $T_{Inf}$ (m') from the transmitter 651 for the m'-th time, during the time of $T_{Inf}(m') = T_{total} - (m' - 1) \times T_{int}$, an image based on the character data is displayed in the image forming device 111 or 211.

In this way, in the twelfth embodiment, even in a case where the controller 18 fails in reception of the designated

identification symbol and/or the display time information transmitted from the outside, the reception of the designated identification symbol and the display time information may be performed again or repeatedly. Thus, it is possible to reliably receive the designated identification symbol and the display time information. As a result, for example, even in a case where the designated identification symbol and the display time information are received in a plurality of display apparatuses, it is possible to reliably display the same images in the plurality of display apparatus at the same time, and to reliably prevent the problem that image is not displayed in the display apparatuses.

In the twelfth embodiment, in a state where the brightness is controlled by brightness information, it is possible to display the image in the image forming device 111 or 211. Specifically, by transmitting the brightness information about an image to be displayed in the optical device, in addition to the designated identification symbol and the display time information, to the display apparatus from the outside (transmitter 651), it is possible to enhance visibility of the displayed image.

In the twelfth embodiment (or the thirteenth to fifteenth embodiments to be described later as necessary), the data group which includes a plurality of pieces of character data for displaying images (for example, subtitles) may be stored in the storage section provided in the controller 18; a data identification symbol may be assigned to each of character data which forms the data group; the controller 18 may receive the designated identification symbol and the display time information transmitted from the outside at a predetermined time interval, and may read character data where the transmitted designated identification symbol and the data identification symbol match each other from the storage section; and the image based on the character data may be displayed in the image forming device during the time corresponding to the transmitted display time information.

[Thirteenth embodiment]

A thirteenth embodiment relates to a display apparatus 3B according to the present disclosure. In the thirteenth embodiment, the display apparatus and the image forming device in the twelfth embodiment may be applied. Here, in the thirteenth embodiment, in order to set the distance between the observation object and the display apparatus, a switch button (see Fig. 26B) or a switch is installed in the controller 618. Further, by manually operating the switch button or the switch according to the seat of the observer (audience), the distance from the display apparatus to the observation object is set. As an example, as the distance from the display apparatus to the observation object, four types of distance settings such as "short distance", "middle distance", "long distance" and "distant distance" may be used.

In a similar way to the twelfth embodiment, in the display apparatus in the thirteenth embodiment, the data group which includes the plurality of pieces of character data is stored in the storage section provided in the controller 618, and the data identification symbol is assigned to each character data which forms the data group.

Here, differently from the twelfth embodiment, each character data includes a plurality of pieces of display data having different display sizes. Specifically, in the thirteenth embodiment, as the display data having different display sizes, image data may be used in which a character string having different font sizes is converted into an image. The data structure of one piece of display data having different sizes may be set to the same as that shown in Fig. 25, and in a similar way to the twelfth embodiment, the data identification symbol is assigned to each character data.

In a similar way to the twelfth embodiment, in the thirteenth embodiment, the designated identification symbol is transmitted to the controller 618 from the outside (transmitter 651). Further, in the controller 618, in the character data where the transmitted designated identification symbol and the data identification symbol match each other, one piece of display data having different sizes among the plurality of pieces of display data having different sizes is read from the storage section depending on the distance between the observation object and the display apparatus, specifically, depending on the distance from the display apparatus to the observation object which is set by operating the switch button or the switch installed in the controller 618, and the image based on one piece of display data having different sizes is displayed in the image forming device.

In a similar way to the twelfth embodiment, in the thirteenth embodiment, an image display method may be employed in which the designated identification symbol and the display time information $T_{Inf}$ are transmitted to the controller 618 from the outside (transmitter 651) at the predetermined time interval $T_{int}$ and the image is displayed in the image forming devices during the time corresponding to the transmitted display time information $T_{Inf}$.

The distance information from the display apparatus to the observation object may be transmitted to the display apparatus from the outside in a wireless manner. Further, the display apparatus may further include a distance measuring device which measures the distance from the display apparatus to the observation object to obtain the distance information by the distance measuring device. As the distance measuring device, for example, an imaging device may include an image device with an auto focusing function (an imaging device having a distance measuring device of a passive type).

In this way, in the display apparatus according to the thirteenth embodiment, in the controller 18, since one piece of display data having different sizes from the plurality of pieces of display data having different sizes, in the character data where the transmitted designated identification symbol and the data identification symbol match each other, is read from the storage section depending on the distance between the observation object and the display

apparatus, and the image based on one piece of display data having different sizes is displayed in the image forming device, it is possible to prevent unbalance from occurring between the size of the observation object viewed and the size of the image.

In the display apparatus according to the thirteenth embodiment, the data group which includes a plurality of pieces of character data may be stored in the storage section provided in the controller 18; a data identification symbol may be assigned to each of character data which forms the data group; each character data may include the plurality of pieces of display data having different sizes; the controller 18 may receive the designated identification symbol transmitted from the outside and may read one piece of display data having different sizes among the plurality of pieces of display data having different sizes from the storage section, in character data where the transmitted designated identification symbol and the data identification symbol match each other, depending to the distance between the observation object and the display apparatus; and the image based on one piece of display data having different sizes may be displayed in the image forming device.

Further, the display apparatus according to the twelfth embodiment and the display apparatus according to the thirteenth embodiment may be combined with each other. That is, in the display apparatus according to the twelfth embodiment as described above, each character data may include the plurality of pieces of display data having different sizes; the controller 18 may read one piece of display data having different sizes among the plurality of pieces of display data having different sizes from the storage section, among character data where the transmitted designated identification symbol and the data identification symbol match each other, depending to the distance between the observation object and the display apparatus; and the image based on one piece of display data having different sizes may be displayed in the image forming device.

[Fourteenth embodiment]

A fourteenth embodiment relates to a display apparatus 3C according to the present disclosure. In the fourteenth embodiment, the display apparatus and the image forming device in the twelfth embodiment may be applied. Further, in a similar way to the twelfth embodiment, in the display apparatus of the fourteenth embodiment, the data group which includes the plurality of pieces of character data is stored in the storage section provided in the controller 618, and the data identification symbol is assigned to each character data which forms the data group.

Here, differently from the twelfth embodiment, each character data includes a plurality of pieces of display data having different languages. For example, as the languages, Chinese, Korean, English and the like may be used. Specifically, in the fourteenth embodiment, as the display data having different languages, image data may be used in which a character string having different languages is converted into an image. The data structure of one piece of display data having different languages may be set to the same as that shown in Fig. 25, and in a similar way to the twelfth embodiment, the data identification symbol is assigned to each character data.

In a similar way to the twelfth embodiment, in the fourteenth embodiment, the designated identification symbol is transmitted to the controller 618 from the outside (transmitter 651). Further, in the controller 618, in the character data where the transmitted designated identification symbol and the data identification symbol match each other, one piece of display data having different languages among the plurality of display data having different languages is read from the storage section, and the image based on one piece of display data having different languages is displayed in the image forming device. The switch button (see Fig. 26B) or the switch may be installed in the controller 618 to manually select the display language.

In this way, in the display apparatus according to the fourteenth embodiment, in the controller 18, since one piece of display data having different languages among the plurality of display data having different languages, in the character data where the transmitted designated identification symbol and the data identification symbol match each other, is read from the storage section and the image based on one piece of display data having different languages is displayed in the image forming device, it is possible to easily perform image display by a language to be used by the observer (audience).

In the fourteenth embodiment, the display apparatus in the twelfth embodiment as described above may be also applied. Specifically, in a similar to the twelfth embodiment, in the fourteenth embodiment, in the controller 618, in the character data where the transmitted designated identification symbol and the data identification symbol match each other, one piece of display data having different languages among the plurality of display data having different languages is read from the storage section, and the image based on one piece of display data having different languages is displayed in the image forming device. That is, the designated identification symbol and the display time information $T_{Inf}$ are transmitted to the controller 618 from the outside (transmitter 651) at a predetermined time interval $T_{int}$, and during the time corresponding to the transmitted display time information $T_{Inf}$, the image is displayed in the image forming device.

Further, the display apparatus according to the fourteenth embodiment and the display apparatus according to the thirteenth embodiment may be combined with each other. That is, each display data having different sizes may include the plurality of display data having different languages; in the controller 618, in the character data where the

transmitted designated identification symbol and the data identification symbol match each other, one piece of display data having different sizes among the plurality of pieces of display data having different sizes may be selected depending on the distance between the observation object and the display apparatus; in one piece of display data having different sizes, one piece of display data having different languages among the plurality of pieces of display data having different languages may be read from the storage section; the image based on one piece of display data having different languages may be displayed in the image forming device. Further, in this case, the designated identification symbol and the display time information $T_{Inf}$ are transmitted to the controller 618 from the outside (transmitter 651) at a predetermined time interval $T_{int}$, and during the time corresponding to the transmitted display time information $T_{Inf}$, the image is displayed in the image forming device.

In the display apparatus according to the fourteenth embodiment, the data group which includes a plurality of pieces of character data may be stored in the storage section provided in the controller 18; a data identification symbol may be assigned to each of character data which forms the data group; each character data may include the plurality of pieces of display data having different display languages; the controller 18 may receive the designated identification symbol transmitted from the outside and may read one piece of display data having different languages among the plurality of pieces of display data having different languages from the storage section, in character data where the transmitted designated identification symbol and the data identification symbol match each other; and the image based on one piece of display data having different languages may be displayed in the image forming device. Further, the display apparatus according to the twelfth embodiment and the display apparatus according to the fourteenth embodiment may be combined with each other. That is, in the display apparatus according to the twelfth embodiment as described above, each character data may include the plurality of pieces of display data having different display languages; the controller 18 may read one piece of display data having different languages among the plurality of pieces of display data having different languages from the storage section, in the character data where the transmitted designated identification symbol and the data identification symbol match each other; and the image based on one piece of display data having different languages may be displayed in the image forming device.

Further, the display apparatus according to the thirteenth embodiment and the display apparatus according to the fourteenth embodiment may be combined with each other. That is, in the display apparatus according to the thirteenth embodiment as described above, each display data having different sizes may include the plurality of display data having different languages; the controller 18 may select one piece of display data having different sizes among the plurality of pieces of display data having different sizes, in the character data where the transmitted designated identification symbol and the data identification symbol match each other, depending on the distance between the observation object and the display apparatus; the controller 18 may read one piece of display data having different languages among the plurality of pieces of display data having different languages, in one piece of display data having different sizes, from the storage section; the image based on one piece of display data having different languages may be displayed in the image forming device.

Further, the display apparatus according to the twelfth embodiment and the display apparatuses according to the thirteenth and fourteenth embodiments may be combined with each other. That is, in the display apparatus according to the twelfth embodiment as described above, each display data having different sizes may include the plurality of display data having different languages; the controller 18 may select one piece of display data having different sizes among the plurality of pieces of display data having different sizes, in the character data where the transmitted designated identification symbol and the data identification symbol match each other, depending on the distance between the observation object and the display apparatus; the controller 18 may read one piece of display data having different languages among the plurality of pieces of display data having different languages, in one piece of display data having different sizes, from the storage section; and the image based on one piece of display data having different languages may be displayed in the image forming device.

[Fifteenth embodiment]

A fifteenth embodiment relates to a display apparatus 3D according to the present disclosure. In the fifteenth embodiment, the display apparatus and the image forming device according to the twelfth embodiment as described above may be applied.

Further, in a similar way to the twelfth embodiment, in the fifteenth embodiment, the data group which includes the plurality of pieces of character data is stored in the storage section provided in the controller 618, and the data identification symbol is assigned to each character data which forms the data group. Each character data has the same data structure as that in the twelfth embodiment as described above, and the data identification symbol is assigned in a similar way to Figs. 12A and 12B.

In a similar way to the twelfth embodiment, in the fifteenth embodiment, the designated identification symbol is transmitted to the controller 618 from the outside (transmitter 651). Further, in the controller 618, the character data where the transmitted designated identification symbol and the data identification symbol match each other is read from

the storage section, and the data processing is performed depending on the distance between the observation object and the display apparatus, and thus, the image based on the character data is displayed in the image forming device in a state where the convergence angle is controlled. The image processing for the character data input to the image forming device which forms at least one image display apparatus may be performed on the basis of the distance from the display apparatus from the observation object, but in the fifteenth embodiment, the image processing for the character data input to the image forming devices which forms both image display apparatuses is performed.

That is, in the display apparatus according to the fifteenth embodiment, the data group which includes a plurality of pieces of character data may be stored in the storage section provided in the controller 18; the data identification symbol may be assigned to each of character data which forms the data group; the controller 18 may receive the designated identification symbol transmitted from the outside and may read character data where the transmitted designated identification symbol and the data identification symbol match each other from the storage section; the data processing may be performed depending on the distance between the observation object and the display apparatus; and the image based on the character data may be displayed in the image forming device in a state where the convergence angle is controlled.

In the fifteenth embodiment, the display apparatus according to the twelfth embodiment as described above may be also applied. Specifically, in a similar way to the twelfth embodiment, in the fifteenth embodiment, in the controller 618, the character data where the transmitted designated identification symbol and the data identification symbol match each other is read from the storage section, and the image based on the character data is displayed in the image forming device. Further, the designated identification symbol and the display time information $T_{Inf}$ are transmitted to the controller 618 from the outside (transmitter 651) at a predetermined time interval $T_{int}$, and during the time corresponding to the transmitted display time information $T_{Inf}$, the image is displayed in the image forming device.

Further, the display apparatus according to the thirteenth embodiment and the display apparatus according to the fifteenth embodiment may be combined with each other. That is, in the display apparatus according to the thirteenth embodiment as described above, each character data may include the plurality of pieces of display data having different display sizes; the controller 18 may read one piece of display data having different sizes among the plurality of pieces of display data having different sizes from the storage section, among character data where the transmitted designated identification symbol and the data identification symbol match each other, depending to the distance between the observation object and the display apparatus; the data processing may be performed depending on the distance between the observation object and the display apparatus; and the image based on one piece of display data having different sizes may be displayed in the image forming device in a state where the convergence angle is controlled.

Further, the display apparatus according to the thirteenth embodiment and the display apparatuses according to the fourteenth and fifteenth embodiments may be combined with each other. That is, in the display apparatus according to the thirteenth embodiment as described above, each display data having different sizes may include the plurality of display data having different languages; the controller 18 may select one piece of display data having different sizes among the plurality of pieces of display data having different sizes, in the character data where the transmitted designated identification symbol and the data identification symbol match each other, depending on the distance between the observation object and the display apparatus; the controller 18 may read one piece of display data having different languages among the plurality of pieces of display data having different languages, in one piece of display data having different sizes, from the storage section; the data processing may be performed depending on the distance between the observation object and the display apparatus; and the image based on one piece of display data having different languages may be displayed in the image forming device in a state where the convergence angle is controlled.

Further, the display apparatus according to the fourteenth embodiment and the display apparatus according to the fifteenth embodiment may be combined with each other. That is, in the display apparatus according to the fourteenth embodiment as described above, each character data may include the plurality of pieces of display data having different display languages; the controller 18 may read one piece of display data having different languages among the plurality of pieces of display data having different languages from the storage section, in the character data where the transmitted designated identification symbol and the data identification symbol match each other, depending on the distance between the observation object and the display apparatus; the data processing may be performed depending on the distance between the observation object and the display apparatus; and the image based on one piece of display data having different languages may be displayed in the image forming device in a state where the convergence angle is controlled.

[Sixteenth embodiment]

A sixteenth embodiment is a modification example of the display apparatus according to any one of the first to seventh embodiments. Specifically, the sixteenth embodiment relates to the display apparatus 2A according to the present disclosure, and more specifically, to the display apparatus (subtitle display apparatus) which displays subtitles. Figs. 30A and 30B are conceptual diagrams illustrating the display apparatus and the image forming device in the display apparatus in the sixteenth embodiment. Here, Fig. 30A schematically shows a state before the optical axis of the image

forming device and the optical axis of the optical system are moved in the horizontal direction (X axis direction), and Fig. 30B schematically shows a state after the optical axis of the image forming device and the optical axis of the optical system are moved in the horizontal direction (X axis direction). Further, Fig. 31 is a diagram schematically illustrating light propagation in the light guide plate which forms the image display apparatus, in the display apparatus according to the sixteenth embodiment. The conceptual diagram in a state where the display apparatus according to the sixteenth embodiment is used is the same as shown in Figs. 15 and 16, and the conceptual diagram in a state where the controller which forms the display apparatus according to the sixteenth embodiment is used is the same as shown in Fig. 17. Further, an example of the image signal in the sixteenth embodiment is the same as shown in Fig. 18A.

In the display apparatus (subtitle display apparatus) according to the sixteenth embodiment or the display apparatus according to any one of the seventeenth to twenty first embodiment (which will be described later), the moving device 40, the rotating device 43, the liquid lens 44 and the liquid prism 45 are operated depending on the observation position of the observer, but these operations are controlled by the control signals from the controller 18 on the basis of the observation position information (or the amount of horizontal image shift) of the observer. Here, as the observation position information of the observer, for example, information about the position of the seat taken by the observer (audience) in the cinema, theater or the like, or information about the theater may be used.

Further, in the display apparatus 100, 200, 300, 400 or 500 according to the sixteenth embodiment or the seventeenth embodiment, the optical axis of the image forming device 111 (111A or 111B) or 211 and the optical axis of the optical system 112 or 254 are relatively moved in the horizontal direction (X axis direction) by the moving device 40. Specifically, as shown in the conceptual diagrams of Figs. 30A, 30B and 31, the position of the optical axis of the image forming device 111 or 211 in each of two image display apparatuses 100, 200, 300, 400 or 500 and the position of the optical axis of the optical system 112 or 254 may be relatively moved in the horizontal direction (X axis direction). That is, any one (for example, optical system 112 or 254) of the image forming device 111 or 211 and the optical system 112 or 254 is mounted on a movement guide section 42 which includes a rack gear section, and is moved on the movement guide section 42 by a motor and pinion gear 41. Further, any one of the image forming device and the optical system may be mounted on the movement guide section and may be moved on the movement guide section by a piezoelectric element or an ultrasonic wave motor. In such a configuration, the YZ plane incident angle, with respect to the optical devices 120, 320 or 520, of the parallel light which is output from the optical system 112 or 254 and is incident on the optical device 120, 320 or 520 is changed. That is, the angle of the optical axis of the optical system 112 or 254 with respect to the YZ plane is changed. In Fig. 31, the central incident light ray before the optical axis of the image forming device 111 or 211 and the optical axis of the optical system 112 or 254 are moved in the horizontal direction (X axis direction) is indicated by a solid line, and the central incident light ray after the optical axis of the image forming device 111 or 211 and the optical axis of the optical system 112 or 254 are moved in the horizontal direction (X axis direction) is moved is indicated by a dotted line. Here, by moving the image forming device 111 or 211 and the optical system 112 or 254 to the state shown Fig. 30B from the state shown in Fig. 30A, the value of the convergence angle becomes large, and the virtual image distance becomes short. That is, the virtual image approaches the observer (audience). That is, for example, the image forming device 111 or 211 and the optical system 112 or 254 are relatively moved in the horizontal direction (X axis direction) so that the point "A" shown in Fig. 14 becomes the desired position. In the movement of the image forming device 111 or 211, the entire image forming device 111 or 211 may be moved, or a part (for example, liquid crystal display 151, scanning section 253, or the like) of the components of the image forming device 111 or 211 may be moved.

Here, information about the observation position of the observer (observation position information of the observer) is assigned in advance to the display apparatus from a personal computer, for example. Further, for example, seat information or theater information of a barcode format printed in a ticket, or seat information or theater information included in ticket information displayed on a mobile phone may be read by an appropriate method, and the observation position information of the observer based on the seat information or theater information may be assigned to the display apparatus by an appropriate method. Further, on the basis of the observation position information of the observer, the controller 18 operates the motor and pinion gear 41 or the like to relatively move the image forming device 111 or 211 and/or the optical system 112 or 254 in the horizontal direction (X axis direction), thereby adjusting the convergence angle. Specifically, for example, as the distance from the display apparatus to the observation object becomes distant, the convergence angle may be decreased. When the distance from the display apparatus to the observation object is infinite, the convergence angle becomes zero.

In this way, by moving two images obtained by two image display apparatuses for the left and right eye 100, 200, 300, 400 or 500, on the basis of the observation position information (or the amount of horizontal image shift), it is possible to arrange the virtual image in the desired position. That is, by adjusting the horizontal distance (interval) between two images displayed by the optical devices 120, 320 or 520 which form the image display apparatuses 100, 200, 300, 400 or 500, or the YZ plane incident angle, it is possible to adjust the convergence angle corresponding to the distance from the display apparatus to the observation object.

[Seventeenth embodiment]

A seventeenth embodiment relates to the display apparatus 2B according to the present disclosure. Figs. 32A and 32B are conceptual diagrams of a display apparatus according to the seventeenth embodiment. In the display apparatus according to the seventeenth embodiment, at least one image forming device (in the seventeenth embodiment, each of two image display apparatuses of right and left eyes) further includes the rotating device 43 which rotates the image forming devices 111 or 211 and the optical system 112 or 254. The image forming device 111 or 211 and the optical system 112 or 254 are rotated by the rotating device 43 depending on the observation position of the observer, to thereby change the incident angle (YZ plane incident angle), with respect to the optical device 120 or 320, of the parallel light which is output from the optical system 112 or 254 and is incident on the optical device 120 or 320, that is, to change the angle of the optical axis of the optical system 112 or 254 with respect to the YZ plane, thereby adjusting the convergence angle (principal ray crossing angle on the horizontal plane) . Here, by moving the image forming device 111 or 211 and the optical system 112 or 254 to the state shown Fig. 32B from the state shown in Fig. 32A, the value of the convergence angle becomes large, and the virtual image distance becomes short. That is, the virtual image approaches the observer (audience).

The image forming device 111 or 211 and the optical system 112 or 254 are rotated by the rotating device 43. Specifically, in a state where the relationship between the optical axis of the image forming device 111 or 211 in each of two image display apparatuses and the optical axis of the optical system 112 or 254 is fixed, at least one image display apparatus may be rotated by operating a piezoelectric element, a motor or an ultrasonic wave motor, using the Z axis arranged in an appropriate position as a rotation axis. In such a configuration, the YZ plane incident angle, with respect to the optical device 120 or 320, of the parallel light which is output from the optical system 112 or 254 and is incident on the optical device 120 or 320 is changed. That is, the angle of the optical axis of the optical system 112 or 254 with respect to the YZ plane is changed. As necessary, the optical device 120 or 320 may be rotated together.

[Eighteenth embodiment]

An eighteenth embodiment relates to the display apparatus 2C according to the present disclosure. In the display apparatus according to the eighteenth embodiment, the optical system 112 or 254 which forms at least one image display apparatus (in the eighteenth embodiment, each of two image display apparatuses for the left and right eye) includes a liquid lens 44, and adjusts the convergence angle (principal ray crossing angle on the horizontal plane) by operation of the liquid lens 44, depending on the observation position of the observer. The liquid lens 44 which forms the optical system 112 or 254 includes a known liquid lens using an electrowetting phenomenon. According to the operation of the liquid lens 44, while constantly maintaining the relationship between the optical axis of the optical system 112 or 254 and the Y axis, it is possible to move the optical axis of the optical system 112 or 254 in the horizontal direction (X axis direction), or it is possible to change the angle of the optical axis of the optical system with respect to the YZ plane. Thus, the YZ plane incident angle, with respect to the optical device 120 or 320, of the parallel light which is output from the optical system 112 or 254 and is incident on the optical device 120 or 320 is changed. That is, the angle of the optical axis of the optical system 112 or 254 with respect to the YZ plane is changed.

The principle of the liquid crystal lens 44 will be described with reference to principle diagrams of Figs. 33A to 33C and Figs. 34A to 34C. Fig. 33A is a schematic cross-sectional view taken along arrow A-A in Fig. 33B, Fig. 33B is a schematic cross-sectional view (here, a first liquid is not shown) taken along arrow B-B in Fig. 33A, and Fig. 33C is a schematic cross-sectional view taken along arrow C-C in Fig. 33A. Further, Figs. 34A to 34C are schematic cross-sectional views taken along arrow C-C in Fig. 33A. The shape of the liquid lens in cross-section along the XY plane is schematic, and is different from the actual shape.

The liquid lens (referred to as a "principled liquid lens) illustrated in the principle diagrams of Figs. 33A to 33C and Figs. 34A to 34C includes a housing. The housing includes a first side member 51; a second side member 52 which is opposite to the first side member 51; a third side member 53 which connects one end portion of the first side member 51 and one end portion of the second side member 52; a fourth side member 54 which connects the other end portion of the first side member 51 with the other end portion of the second side member 52; a top plate 55 which is installed on the top of the first side member 51, the second side member 52, the third side member 53 and the fourth side member 54; and a bottom plate 56 which is installed on the bottom of the first side member 51, the second side member 52, the third side member 53 and the fourth side member 54. Thus, one lens chamber is configured by the housing. The lens chamber is occupied by a first liquid 65 and a second liquid 66 which form the liquid lens which is a cylindrical lens in which its axial line extends in a direction (z direction) where the first side member 51 and the second side member 52 extend.

Further, a first electrode (hereinafter, simply referred to as a "first electrode 61") which forms the liquid lens is installed on an inner surface of the portion of the top plate 55, a second electrode (hereinafter, simply referred to as a "second electrode 62") which forms the liquid lens is installed on an inner surface of the first side member 51, and a

third electrode (hereinafter, simply referred to as a "third electrode 63") which forms the liquid lens is installed on an inner surface of the second side member 52. Here, in the state shown in Figs. 33A to 33C, voltages are not applied to the first electrode 61, the second electrode 62 and the third electrode 63.

If appropriate voltages are applied to the first electrode 61, the second electrode 62 and the third electrode 63 in this state, the state of an interface between the first liquid 65 and the second liquid 66 is changed into the state shown in Figs. 34A, 34B or 34C. Here, the state shown in Fig. 34A represents a state when the same voltage is applied to the second electrode 62 and the third electrode 63, and the shape of the liquid lens formed in the lens chamber cut on the xy plane is symmetric with reference to an optical axis OA. Further, the states shown in Fig. 34B and Fig. 34C represent states when different voltages are applied to the second electrode 62 and the third electrode 63, and the shape of the liquid lens formed in the lens chamber cut on the xy plane is not symmetric with reference to the optical axis OA. The electric potential difference between the second electrode 62 and the third electrode 63 is large in the state shown in Fig. 34C, compared with the state shown in Fig. 34B. As shown in Figs. 34B and 34C, according to the electric potential difference between the second electrode 62 and the third electrode 63, it is possible to change optical power of the liquid lens, and to move the optical axis OA (indicated by a dotted line) of the liquid lens in the y direction perpendicular to the z direction. Further, by arranging the plurality of liquid lenses shown in the principle diagrams and by appropriately controlling the voltages to be applied to the second electrode 62 and the third electrode 63 of the respective lenses, it is possible to move the optical axis of the entire liquid lens, to change the inclination of the optical axis of the entire liquid lens, and to configure the entire liquid lens by a Fresnel lens.

Fig. 35, Figs. 36A to 36C, and Figs. 37A and 37B are schematic cross-sectional view illustrating a practical liquid lens 44 according to the eighteenth embodiment. Fig. 35 is a schematic cross-sectional view taken along arrow A-A in Fig. 33B. Figs. 36A to 36C and Figs. 37A and 37B are schematic cross-sectional views taken along arrow C-C in Fig. 35. Further, the schematic cross-sectional view taken along arrow B-B in Fig. 35 is the same as that in Fig. 33B.

The liquid lens 44 includes (A) the housing 50 which includes the first side member 51, the second side member 52 which is opposite to the first side member 51, the third side member 53 which connects one end portion of the first side member 51 and one end portion of the second side member 52, the fourth side member 54 which connects the other end portion of the first side member 51 and the other end portion of the second side member 52, the top plate 55 which is installed on the top of the first side member 51, the second side member 52, the third side member 53 and the fourth side member 54, the bottom plate 56 which is installed on the bottom of the first side member 51, the second side member 52, the third side member 53 and the fourth side member 54; and (B) (M-1) partition wall members 57 which are arranged between the first side member 51 and the second side member 52 in parallel.

Further, in the liquid lens 44 according to the eighteenth embodiment, M (5) lens chambers 58 ($58_1$, $58_2$, $58_3$, $58_4$ and $58_5$) are arranged. Here, each of the lens chambers 58 ($58_1$, $58_2$, $58_3$, $58_4$ and $58_5$) is occupied by the first liquid 65 and the second liquid 66 which form the liquid lens which is the cylindrical lens in which the direction of the axial line is in parallel with the direction where the partition wall member 57 extends.

The first lens chamber $58_1$ includes the first side member 51, the third side member 53, and the first partition wall member 57, the fourth side member 54, the top plate 55 and the bottom plate 56. Further, the first electrode 61 is installed on the inner surface of the portion of the top plate 55 which forms the first lens chamber $58_1$, the second electrode 62 is installed on the inner surface of the portion of the first side member 51 which forms the first lens chamber $58_1$, and the third electrode 63 is installed on the inner surface of the portion of the first partition wall member 57 which forms the first lens chamber $58_1$.

Further, the (m+1)-th lens chamber $58_{(m+1)}$ includes the m-th (here, m = 1, 2, ..., M-2) partition wall member 57, the third side surface member 53, the (m+1)-th partition wall member 57, the fourth side member 54, the top plate 55 and the bottom plate 56. Further, the first electrode 61 is installed on the inner surface of the portion of the top plate 55 which forms the (m+1) -th lens chamber $58_{(m+1)}$, the second electrode 62 is installed on the inner surface of the portion of the m-th partition wall member 57 which forms the (m+1)-th lens chamber $58_{(m+1)}$, and the third electrode 63 is installed on the inner surface of the portion of the (m+1)-th partition wall member 57 which forms the (m+1)-th lens chamber $58_{(m+1)}$.

Further, the m-th lens chamber $58_M$ (= $58_5$) includes the (M-1)-th partition wall member 57, the third side surface member 53, the second side member 52, the fourth side member 54, the top plate 55 and the bottom plate 56. Further, the first electrode 61 is installed on the inner surface of the top plate 55 which forms the M-th lens chamber $58_M$ (= $58_5$), the second electrode 62 is installed on the inner surface of the portion of the (M-1)-th partition wall member 57 which forms the M-th lens chamber $58_M$ (= $58_5$), and the third electrode 63 is installed on the inner surface of the portion of the second side member 52 which forms the M-th lens chamber $58_M$ (= $58_5$).

In the shown example, the first electrode 61 is installed in each lens chamber, but one sheet of first electrode 61 may be installed on the inner surface of the top plate 55.

In the liquid lens 44 according to the eighteenth embodiment, a water repellent treatment is performed on at least each front surface of the first side member 51, the second side member 52 and the partition wall member 57 where the interface between the first liquid 65 and the second liquid 66 is disposed. Further, the bottom of the partition wall

member 57 extends to the bottom plate 56, and the top of the partition wall member 57 extends to the top plate 55. The appearance of the housing 50 is a rectangular shape having a long side in the z direction and a short side in the y direction. Further, light is incident through the bottom plate 56, and is output through the top plate 55.

The first liquid 65 and the second liquid 66 are insoluble and unmixing, and the interface between the first liquid 65 and the second liquid 66 forms a lens surface. Here, the first liquid 65 has conductive properties and the second electrode 66 has insulation properties. The first electrode 61 is in contact with the first liquid 65, the second electrode 62 is in contact with the first liquid 65 and the second liquid 66 through an insulating film 64, and the third electrode 63 is in contact with the first liquid 65 and the second liquid 66 through the insulating film 64. Further, the top plate 55, the bottom plate 56 and the first electrode 61 are formed of transparent materials with respect to light which is incident on the liquid lens 44.

More specifically, the top plate 55, the bottom plate 56, the first side member 51, the second side member 52, the third side member 53, the fourth side member 54 and the partition wall member 57 are made of resin such as glass or acryl based resin. Further, the first liquid 65 having conductive properties is formed of aqueous solution of lithium chloride, in which its density is 1.06 gram/cm3, and its refraction index is 1.34. On the other hand, the second liquid 66 having insulating properties is formed of silicon oil (TSF437 made in Momentive Performance Materials Japan LLC.), in which its density is 1.02 gram/$cm^3$, and its refraction index is 1.49. Further, the first electrode 61 is formed of ITO, and the second electrode 62 and the third electrode 63 are formed of metal such as gold, aluminum, copper or silver. Further, the insulating film 64 is formed of a metallic oxide such as polyparaxylene, tantalum oxide or titanium oxide. A water repellent layer (not shown) is formed on the insulating film 64. The water repellent layer is formed of polyparaxylene or fluorine based polymer. It is preferable that a hydrophilic treatment be performed on the front surface of the first electrode 61 and a water repellent treatment be performed on the inner surface of the third side member 53 and the fourth side member 54.

Further, in the eighteenth embodiment, in order to form the optical system 112 or 254, two liquid lenses 44 shown in Fig. 35 are overlapped. Specifically, two liquid lenses 44 are overlapped so that the y direction of the lower liquid lens 44 and the y direction of the upper liquid lens 44 are orthogonal to each other, and the z direction of the lower liquid lens 44 and the z direction of the upper liquid lens 44 are orthogonal to each other. Further, for example, two overlapped liquid lenses 44 are disposed in the position of the optical system 112 shown in Fig. 1 so that the y direction of the lower liquid lens 44 is in parallel with the X axis direction and the x direction thereof is in parallel with the Y axis direction.

The first electrode 61, the second electrode 62 and the third electrode 63 are connected to an external control circuit through a connecting section (not shown) to be supplied with desired voltages. Further, if voltages are applied to the first electrode 61, the second electrode 62 and the third electrode 63, the lens surface formed by the interface between the first liquid 65 and the second liquid 66 is changed from a convex state shown in Fig. 36A to a concave state shown in Fig. 36B. The change state of the lens surface is changed according to voltages applied to the electrodes 61, 62 and 63, on the basis of the Lippman-Young method. In the example shown in Fig. 36B, the same voltage is applied to the second electrode 62 and the third electrode 63. Thus, the shape of the liquid lens formed in the lens chamber cut on the xy plane is symmetric with reference to the optical axis of the liquid lens. Such a control may be performed with respect to the upper liquid lens 44 among two overlapped liquid lenses 44.

Further, the states shown in Fig. 36C and Figs. 37A and 37B represent states when different voltages are applied to the second electrode 62 and the third electrode 63, and the shape of the liquid lens formed in the lens chamber cut on the xy plane is not symmetric with reference to the optical axis of the liquid lens. Here, in the state shown in Fig. 36C, the liquid lens 44 is formed by a Fresnel lens. Such a control may be performed with respect to the upper liquid lens 44 among two overlapped liquid lenses 44.

On the other hand, in the states shown in Figs. 37A and 37B, the optical axis of the liquid lens is moved in the y direction (X axial direction) which is orthogonal to the z direction. By moving the optical axis of the liquid lens to the state shown in Fig. 37A or 37B, it is possible to change a travel direction of light output from the liquid lens 44 or to control the inclination of the optical axis of the entire liquid lens 44 with respect to the x direction. That is, by performing such a control for the lower liquid lens 44 among two overlapped liquid lenses 44, it is possible to move the optical axis of the liquid lens in the X axis direction or to incline the optical axis of the liquid lens with respect to the Y axis direction. Further, according to the electric potential difference between the second electrode 62 and the third electrode 63, it is possible to change optical power of the liquid lens. Here, in the state shown in Fig. 37A, the same voltage is applied to the respective second electrodes 62, and the same voltage is applied to the respective third electrodes 63. On the other hand, in the state shown in Fig. 37B, different voltages are applied to the respective second electrodes 62 and the respective third electrodes 63 to form the entire liquid lens 44 by a Fresnel lens.

When voltages are applied to the first electrode 61, the second electrode 62 and the third electrode 63 and a cylindrical lens shows optical power, the optical power in the cylindrical lens on the xz plane (or plane which is in parallel with the xz plane) is substantially 0, and the optical power in the cylindrical lens on the xy plane is a finite value. Here, the "optical axis of the entire liquid lens" is a line which connects the centers of curvature of two virtual optical surfaces

of a virtual lens (one sheet of lens as the entire liquid lens 44) obtained as the entire liquid lens 44 when the liquid lens 44 is cut on the xy plane.

The second electrodes 62 may be connected to a common wire; the third electrodes 63 may be connected to a common wire; the same voltage may be applied to the respective second electrodes 62; and the same voltage may be applied to the respective third electrodes 63. Further, the second electrodes 62 may be connected to a common wire and the third electrodes 63 may be connected to individual wires to be individually supplied with different voltages; the third electrodes 63 may be connected to a common wire and the second electrodes 62 may be connected to individual wires to be individually supplied with different voltages; or the second electrodes 62 and the third electrodes 63 may be respectively connected to individual wires to be individually supplied with different voltages.

[Nineteenth embodiment]

A nineteenth embodiment relates to a display apparatus 2D according to the present disclosure. In the display apparatus according to the nineteenth embodiment, the optical system 112 or 254 which forms at least one image display apparatus (in the nineteenth embodiment, each of two image display apparatuses for the left and right eye) includes a liquid prism 45, and adjusts the convergence angle (principal ray crossing angle on the horizontal plane) by operation of the liquid prism 45, depending on the observation position of the observer. The liquid prism 45 which forms a part of the optical system 112 or 254 includes a known liquid prism using the electrowetting phenomenon. According to the operation of the liquid prism 45, it is possible to change the angle of the optical axis of the optical system 112 or 254 with respect to the YZ plane. Thus, the YZ plane incident angle, with respect to the optical device 120 or 320, of the parallel light which is output from the optical system 112 or 254 and is incident on the optical device 120 or 320 is changed. That is, the angle of the optical axis of the optical system 112 or 254 with respect to the YZ plane is changed.

As shown in a conceptual diagram of Fig. 38, since a configuration or structure of the liquid prism 45 is the same as the configuration or structure of the principled liquid lens shown in Figs. 33A to 33C, its detailed description will be omitted. However, the liquid prism 45 is different from the principled liquid lens in that a flat inclined surface of the prism, instead of the lens surface, is formed by the interface between the first liquid 65 and the second liquid 66. Such a configuration may be achieved by appropriate selection of the first liquid 65 and the second liquid 66. Further, for example, the liquid prism 45 may be arranged between the optical system 112 and the light guide plate 121 in the display apparatus shown in Fig. 1 so that the y direction is in parallel with the X axis direction and the x direction is in parallel with the Y axis direction.

[Twentieth embodiment]

A twentieth embodiment is a modification example of the display apparatuses according to the sixteenth to nineteenth embodiments. In the display apparatus according to the twentieth embodiment, by controlling the image signal (character data, input image signal or input image data) to the image forming device 111 (111A or 111B) or 211 which forms at least one image display apparatus (in the twentieth embodiment, each of the two image display apparatuses for the left and right eye 100, 200, 300, 400 or 500), in addition to adjustment of the convergence angle in the sixteenth to nineteenth embodiments, further fine adjustment of the convergence angle depending on the observation angle of the observer is performed, or the position of the image displayed in the optical device which forms at least one image display apparatus is adjusted depending on the observation position of the observer. In the twentieth embodiment, the adjustment of the convergence angle and the adjustment of the position of the image depending on the observation position of the observer are performed together, but only any one adjustment may be performed.

Specifically, an image signal for test is transmitted to the controller 18 in a wireless manner (in a wired manned as necessary) . Then, in the controller 18, a process for image display with respect to the image signal is performed, and an image (subtitles) is generated in the image forming apparatus 111 or 211 on the basis of the image signal for test. This image finally reaches both eyes of an observer (audience) who is mounted with the display apparatus, through the optical system 112 or 254 and the optical devices 120, 320 or 520.

Further, in order to match (overlap) the images displayed by the image display apparatuses for the left and right eye 100, 200, 300, 400 or 500 with a desired position (for example, a desired position of a stage or a screen), the images displayed in the optical devices 120, 320 or 520 are moved horizontally and vertically and are rotated through the controller 18, specifically, through a switch (not shown) which is disposed in the controller 18. That is, for example, the image displayed in the optical device 120, 320 or 520 is moved horizontally and vertically and is rotated so that the point "A" shown in Fig. 14 reaches a desired position. In this way, the image signal is controlled (corrected) by operation of the switch which is disposed in the controller 18 . A display position correction signal is generated in the controller 18, and is added to the image signal.

A state where the images displayed by the image display apparatuses for the left and right eye 100, 200, 300, 400 or 500 are shifted horizontally, a state where the images are shifted vertically, and a state where the images are

rotated, in a desired position, are the same as shown the states in Figs. 19A, 19B and 19C. Further, the same operation or process as in the eighth embodiment may be performed to move the image (characters). In this way, by controlling the position of the image displayed in the optical device 120, 320 or 520 which forms at least one image display apparatus 100, 200, 300, 400 or 500, it is possible to adjust the positions of two images in two image display apparatuses 100, 200, 300, 400 or 500. That is, it is possible to perform further fine adjustment of the convergence angle and the adjustment of the position of the image depending on the observation position of the observer together. In addition to the image signal to the image forming device 111 or 211, the observation position information (distance information) from the observer to the observation object is transmitted to the display apparatus from the outside. An example of the conceptual diagram of the format of such a signal is the same as that shown in Fig. 20B.

In this way, by shifting the image display position from the desired position by desired pixels, it is possible to perform further fine adjustment of the convergence angle. In other words, by controlling the image signal to the image forming device 111 or 211 which forms two image display apparatuses for the left and right eye 100, 200, 300, 400 or 500 by the display position correction signal, it is possible to perform further fine adjustment of the convergence angle according to the distance from the display apparatus to the observation object. As a result, it is possible to further finely equalize the distance between the observation object and the observer (audience) and the virtual image distance of the image (subtitles) displayed by the image display apparatus.

In the twentieth embodiment or the twenty first embodiment (which will be described later), the size of a display screen (image display area) displayed in the optical device, the field angle of the display screen (image display area), and the resolution of the display screen may be changed depending on the observation position of the observer and the distance between the observation object and the display apparatus, under the control of the controller 18.

[Twenty first embodiment]

A twenty first embodiment is a modification example of the display apparatuses according to the sixteenth to twentieth embodiments. Since a basic configuration or structure of the display apparatus according to the twenty-first embodiment may be the same as the basic configuration or structure of the display apparatuses according to the sixteenth to nineteenth embodiments, its detailed description will be omitted.

In the display apparatus according to the twenty first embodiment, after a predetermined time elapses after an image signal is input to the image forming apparatus, image formation in the image forming device is stopped. In order to stop the image formation in the image forming device, that is, in order to enter a power save mode or the like in the display apparatus, a signal indicating an image display time in the image forming device or a signal indicating stop of the image formation in the image forming device is added to the image signal.

An example of the image signal according to the twenty first embodiment is the same as that shown in Fig. 18B, and "TIME" which is data indicating an image display time which is a signal indicating the image display time in the image display apparatus is added to the image signal according to the sixteenth embodiment shown in Fig. 18A. Further, in the controller 18, the same process or operation as that in the ninth embodiment as described above is performed. In this way, in the display apparatus according to the twenty first embodiment, after the predetermined time elapses after the image signal is input to the image forming apparatus, image formation in the image forming device is stopped. That is, since the display apparatus proceeds to the power save mode or the like after the predetermined time, a problem such as power waste in the display apparatus does not occur.

The display apparatuses according to the twelfth to fifteenth embodiments as described above may be applied to the display apparatuses the sixteenth to twenty first embodiments as described above. The display apparatuses in these cases correspond to the display apparatuses 3A to 3D according to the present disclosure.

Hereinbefore, the present disclosure has been described on the basis of the preferred embodiments, but the present disclosure is not limited thereto. The configurations or structures of the display apparatus (head mounted display) and the image display apparatus according to the embodiments are only examples, which may be appropriately modified. For example, a surface relay type hologram (see U.S. Patent Application Publication No. 20040062505A1) may be arranged. In the optical device 320, the diffraction grating element may be configured by a transmissive diffraction grating element, or any one of the first deflecting section and the second deflecting section may be configured by a reflective diffraction grating element and the other one thereof may be configured by a transmissive diffraction grating element. Further, the diffraction grating element may be also configured by a reflective blazed diffraction grating element.

The dimmer may be detachably installed in an area where light of the optical device is output. In this way, in order to detachably install the dimmer, for example, the dimmer may be installed in the optical device using beads made of a transparent plastic, which may be connected to a control circuit (for example, included in the controller 18 for controlling the image forming device) for controlling the light transmittance of the dimmer through a connector and a wire.

The configurations or structures of the moving device, the rotating device, the liquid lens and the liquid prism according to the sixteenth to twenty first embodiments are only examples, which may be appropriately modified. For example, the display apparatus according to the sixteenth embodiment and the display apparatus according to the twenty

first embodiment may be combined.

The optical device 112 or 254 may be configured by the liquid lens so that the focused the optical device 112 or 254 matches with the point "A" in Fig. 14, that is, the focal distance of the optical system 112 or 254 is changed. Fig. 39 is a cross-sectional view schematically illustrating such a liquid lens, and Fig. 40 is a plan view thereof. Here, the liquid lens is configured by a Fresnel lens in which ring-shaped lens chambers are concentrically arranged.

That is, the liquid lens includes (A) a housing which includes a so-called endless outer wall member 79 which does not have an end portion, a top plate 75 which is installed on the top of the outer wall member 79, and a bottom plate 76 which is installed on the bottom of the outer wall member 79, and (B) (N-1) partition wall members 77 which do not have an end portion and are concentrically arranged to the outer wall member 79. The outer appearance of the housing is a circular form. Further, the liquid lens includes (N-1) annular lens chambers and a central lens chamber surrounded by the (N-1)-th partition wall member 77. Here, in the shown example, N = 3. Respective chambers 78 ($78_1$, $78_2$ and $78_3$) are occupied by the first liquid 65 and the second liquid 66 which form the liquid lens.

The first lens chamber (annular lens chamber) $78_1$ is configured by the outer wall member 79, the first partition wall member 77, the top plate 75 and the bottom plate 76. Further, a first electrode (hereinafter, simply referred to as a "first electrode 81") which forms the liquid lens is installed on an inner surface of the portion of the top plate 75 which forms the first lens chamber $78_1$, a second electrode (hereinafter, simply referred to as a "second electrode 82") which forms the liquid lens is installed on an inner surface of the portion of the outer wall member 79 which forms the first lens chamber $78_1$, and a third electrode (hereinafter, simply referred to as a "third electrode 83") which forms the liquid lens is installed on an inner surface of the portion of the first partition wall member 77 which forms the first lens chamber $78_1$.

Further, the (n+1)-th lens chamber $78_{(n+1)}$ includes the n-th (here, n = 1, 2, ..., N-2) partition wall member 77, the (n+1)-th partition wall member 77, the top plate 75 and the bottom plate 76. Further, the first electrode 81 is installed on the inner surface of the portion of the top plate 75 which forms the (n+1)-th lens chamber $78_{(n+1)}$, the second electrode 82 is installed on the inner surface of the portion of the n-th partition wall member 77 which forms the (n+1)-th lens chamber $78_{(n+1)}$, and the third electrode 83 is installed on the inner surface of the portion of the (n+1)-th partition wall member 77 which forms the (n+1)-th lens chamber $78_{(n+1)}$.

Further, the first electrode 81 is installed on the inner surface of the portion of the top plate 75 which forms the central lens chamber $78_3$ corresponding to the N-th lens chamber $78_N$, and the third electrode 83 is installed on the inner surface of the portion of the (N-1)-th partition wall member 77 which forms the central lens chamber $78_3$.

In the shown example, the first electrode 81 is installed in each lens chamber, but one sheet of first electrode 81 may be installed in the inner surface of the top plate 75.

In the liquid lens, on at least each front surface of the outer wall member 79 and the partition wall member 77 where the interface between the first liquid 65 and the second liquid 66 is disposed, in a similar way to the eighteenth embodiment, the water repellent treatment is performed. Light is incident through the bottom plate 76, and is output through the top plate 75. In the respective lens chambers $78_1$, $78_2$ and $78_3$, by setting a voltage to be applied to the second electrode 82 and a voltage to be applied to the third electrode 83 to different values, the optical power of the liquid lens is changed. Further, in the respective lens chambers $78_1$, $78_2$ and $78_3$, by setting the voltage to be applied to the second electrode 82 and the voltage to be applied to the third electrode 83 to the different values, the entire liquid lens is configured as a Fresnel lens.

Further, the image display apparatuses according to the first to twenty first embodiments may be modified as follows.

For example, Fig. 41 is a conceptual diagram illustrating an image display apparatus according to a modification example of the display apparatus according to the third embodiment. As shown in the figure, on the surface of the first substrate 701 which does not face the first diffraction grating member 330, a light shielding member 721 for preventing light from being leaked outside the light guide plate 321 to reduce light usage efficiency is installed.

Further, for example, Fig. 42 is a conceptual diagram illustrating an image display apparatus according to another modification example of the display apparatus according to the third embodiment. As shown in the figure, a protection substrate 720 is set to have approximately the same length as that of the light guide plate 321, and the protection substrate 720 is fixed to the light guide plate 321 by the sealing member 722. The sealing member 722 may be arranged on the outer edge portion of the protection substrate 720. Further, on the surface of the protection substrate 720 which does not face the first diffraction grating member 330, the light shielding member 721 for preventing light from being leaked outside the light guide plate 321 to reduce light usage efficiency is installed. The dimmer 700 is disposed between the light guide plate 321 and an observer.

Further, for example, Fig. 43 is a conceptual diagram illustrating an image display apparatus according to still another modification example of the display apparatus according to the third embodiment. As shown in the figure, the second substrate 703 of the dimmer 700 is set to have approximately the same length as that of the light guide plate 321, and the second substrate 703 of the dimmer 700 is fixed to the light guide plate 321 by the sealing member 722. The sealing member 722 may be arranged on the outer edge portion of the second substrate 703. Further, on the surface of the second substrate 703 which does not face the first diffraction grating member 330, the light shielding member

721 for preventing light from being leaked outside the light guide plate 321 to reduce in light usage efficiency is installed.

Further, for example, Fig. 44 is a schematic diagram illustrating parts of the optical device and the dimmer in the display apparatus according to the first embodiment or the third embodiment, when seen from the front. As shown in the figure, the dimmer 700 may be disposed in the projected image of the second deflecting section 140 or 340. Here, on a part of the optical device 120 or 320 which faces the dimmer 700, for example, an explanatory note or closed caption relating to images which is synchronized with the images may be displayed, or a variety of explanations relating to observation objects, or explanation notes for their content, progress, background or the like, in plays or Kabukis, Nohs, Noh farces, operas, concerts, ballets, various plays, amusement parks, art museums, sightseeing areas, tourist resorts, visitor information may be displayed.

The present disclosure may be implemented as the following configurations.

[1] A display apparatus including: (i) a spectacle type frame which is mounted on a head portion of an observer; and (ii) an image display apparatus which is installed in the frame, wherein the image display apparatus includes (A) an image forming device, and (B) an optical device which allows light output from the image forming device to be incident thereon, to be guided therein, and to be output therefrom, wherein a dimmer which adjusts the amount of external light incident from the outside is disposed in an area of the optical device where the light is output, wherein the dimmer includes a first transparent substrate and a second transparent substrate which faces the first substrate, a first electrode which is mounted on the first substrate, a second electrode which is mounted on the second substrate, and an electrolyte which is sealed between the first substrate and the second substrate and contains metal ions, wherein the first electrode includes a conductive material of a fine line shape, and wherein the second electrode includes a transparent electrode layer.

[2] The display apparatus according to [1], wherein the first substrate is disposed closer to an observer side than the second substrate.

[3] The display apparatus according to [2], wherein the first electrode includes nanowires.

[4] The display apparatus according to [3], wherein the average diameter of the nanowires is 1 μm or less.

[5] The display apparatus according to any one of [1] to [4], wherein the first electrode includes silver.

[6] The display apparatus according to any one of [1] to [5], wherein the second electrode is not patterned in an effective area of the dimmer.

[7] The display apparatus according to any one of [1] to [6], wherein the metal ions include silver ions, and wherein the electrolyte includes at least one type of salt selected from a group including LiX, NaX and KX (here, X indicates a fluorine atom, a chlorine atom, a bromine atom or an iodine atom).

[8] The display apparatus according to any one of [1] to [7], wherein coloring and decoloring of the dimmer occurs by precipitation of metal on the second electrode and dissolution of the metal in the electrolyte, based on application of voltages to the first electrode and the second electrode.

[9] The display apparatus according to anyone of [1] to [8], further including: an illumination sensor (environment illumination measuring sensor) which measures the intensity of illumination of an environment where the display apparatus is disposed, wherein light transmittance of the dimmer is controlled on the basis of a measurement result of the illumination sensor (environment illumination measuring sensor).

[10] The display apparatus according to any one of [1] to [8], further including: an illumination sensor (environment illumination measuring sensor) which measures the intensity of illumination of an environment where the display apparatus is disposed, wherein brightness of an image formed by the image forming device is controlled on the basis of a measurement result of the illumination sensor (environment illumination measuring sensor).

[11] The display apparatus according to any one of [1] to [10], further including: a second illumination sensor (transmitted light illumination measuring sensor) which measures the intensity of illumination based on light which passes through the dimmer from the external environment, wherein light transmittance of the dimmer is controlled on the basis of a measurement result of the second illumination sensor (transmitted light illumination measuring sensor).

[12] The display apparatus according to any one of [1] to [10], further including: a second illumination sensor (transmitted light illumination measuring sensor) which measures the intensity of illumination based on light which passes through the dimmer from the external environment, wherein brightness of an image formed by the image forming device is controlled on the basis of a measurement result of the second illumination sensor (transmitted light illumination measuring sensor).

[13] The display apparatus according to [11] or [12],
wherein the second illumination sensor (transmitted light illumination measuring sensor) is disposed closer to an observer side than the optical device.

[14] The display apparatus according to any one of [9] to [13], wherein the highest light transmittance of the dimmer is 50% or more, and the lowest light transmittance of the dimmer is 30% or less.

[15] The display apparatus according to any one of [9] to [14], wherein when the measurement result of the illumination sensor (environment illumination measuring sensor) is equal to or greater than a predetermined value, the light

transmittance of the dimmer is equal to or smaller than a predetermined value.

[16] The display apparatus according to any one of [9] to [14], wherein when the measurement result of the illumination sensor (environment illumination measuring sensor) is equal to or smaller than a predetermined value, the light transmittance of the dimmer is equal to or greater than a predetermined value.

[17] The display apparatus according to any one of [11] to [13], wherein when the measurement result of the second illumination sensor (transmitted light illumination measuring sensor) is equal to or greater than a predetermined value, the light transmittance of the dimmer is equal to or smaller than a predetermined value.

[18] The display apparatus according to any one of [11] to [13], wherein when the measurement result of the second illumination sensor (transmitted light illumination measuring sensor) is equal to or smaller than a predetermined value, the light transmittance of the dimmer is equal to or greater than a predetermined value.

[19] The display apparatus according to any one of [1] to [18], wherein the dimmer is detachably disposed in the area of the optical device where the light is output.

[20] The display apparatus according to any one of [1] to [19], wherein the optical device includes (a) a light guide plate which allows incident light to be propagated therein by total reflection, and to be then output therefrom, (b) a first deflecting section which deflects light incident on the light guide plate so that the light incident on the light guide plate is totally reflected inside the light guide plate, and (c) a second deflecting section which deflects the light propagated inside the light guide plate by total reflection over a plurality of times to allow the light propagated inside the light guide plate by total reflection to be output from the light guide plate.

[21] The display apparatus according to [20], wherein the second deflecting section is disposed in a projected image of the dimmer.

[22] A display apparatus including: an image forming device; an optical device; a dimmer; and an illumination sensor, wherein the optical device guides light output from the image forming device, wherein the dimmer adjusts the amount of external light incident on the optical device from the outside according to a measurement result of the illumination sensor, and wherein the illumination sensor measures the amount of external light which passes through the dimmer.

The present disclosure contains subject matter related to that disclosed in Japanese Priority Patent Application JP 2011-133913 filed in the Japan Patent Office on June 16, 2011.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

**1.** A display apparatus comprising:

(i) a spectacle type frame (10) which is configured to be mounted on a head portion of an observer; and
(ii) an image display apparatus (100) which is installed in the frame,

wherein the image display apparatus includes (A) an image forming device (111), and (B) an optical device (120) which is configured to allow light output from the image forming device to be incident thereon, to be guided therein, and to be output therefrom,
wherein a dimmer (700) which is configured to adjust the amount of external light incident from the outside is disposed in an area of the optical device where the light is output,
wherein the dimmer includes a first transparent substrate (701) and a second transparent substrate (703) which faces the first substrate, a first electrode (702) which is mounted on the first substrate, a second electrode (704) which is mounted on the second substrate, and an electrolyte (705) which is sealed between the first substrate and the second substrate and contains metal ions,
wherein the first electrode includes a conductive material of a fine line shape, and
wherein the second electrode includes a transparent electrode layer.

**2.** The display apparatus according to claim 1,
wherein the first substrate is disposed closer to an observer side than the second substrate.

**3.** The display apparatus according to claim 2,
wherein the first electrode includes nanowires.

**4.** The display apparatus according to claim 3,
wherein the average diameter of the nanowires is 1 μm or less.

**5.** The display apparatus according to claim 1,
wherein the first electrode includes silver.

**6.** The display apparatus according to claim 1,
wherein the second electrode is not patterned in an effective area of the dimmer.

**7.** The display apparatus according to claim 1,
wherein the metal ions include silver ions, and
wherein the electrolyte includes at least one type of salt selected from a group including LiX, NaX and KX (here, X indicates a fluorine atom, a chlorine atom, a bromine atom or an iodine atom).

**8.** The display apparatus according to claim 1,
wherein coloring and decoloring of the dimmer occurs by precipitation of metal on the second electrode and dissolution of the metal in the electrolyte, based on application of voltages to the first electrode and the second electrode.

**9.** The display apparatus according to claim 1, further comprising:

an illumination sensor which measures the intensity of illumination of an environment where the display apparatus is disposed,
wherein light transmittance of the dimmer is controlled on the basis of a measurement result of the illumination sensor.

**10.** The display apparatus according to claim 1, further comprising:

an illumination sensor which measures the intensity of illumination of an environment where the display apparatus is disposed,
wherein brightness of an image formed by the image forming device is controlled on the basis of a measurement result of the illumination sensor.

**11.** The display apparatus according to claim 1, further comprising:

a second illumination sensor which measures the intensity of illumination based on light which passes through the dimmer from an external environment,
wherein light transmittance of the dimmer is controlled on the basis of a measurement result of the second illumination sensor.

**12.** The display apparatus according to claim 1, further comprising:

a second illumination sensor which measures the intensity of illumination based on light which passes through the dimmer from an external environment,
wherein brightness of an image formed by the image forming device is controlled on the basis of a measurement result of the second illumination sensor.

**13.** The display apparatus according to claim 11,
wherein the second illumination sensor is disposed closer to an observer side than the optical device.

**14.** The display apparatus according to claim 9,
wherein the highest light transmittance of the dimmer is 50% or more, and the lowest light transmittance of the dimmer is 30% or less.

**15.** The display apparatus according to claim 9,
wherein when the measurement result of the illumination sensor is equal to or greater than a predetermined value,

the light transmittance of the dimmer is equal to or smaller than a predetermined value.

## Patentansprüche

**1.** Anzeigevorrichtung, umfassend:

(i) ein Gestell vom Brillentyp (10), das ausgestaltet ist, um an einem Kopfabschnitt eines Betrachters angebracht zu werden; und
(ii) eine Bildanzeigevorrichtung (100), die in dem Gestell installiert ist,

wobei die Bildanzeigevorrichtung (A) eine Bilderzeugungseinrichtung (111) und (B) eine optische Einrichtung (120) einschließt, die ausgestaltet ist, um zuzulassen, dass die Lichtausgabe aus der Bilderzeugungseinrichtung darauf einfällt, darin geführt wird und daraus ausgegeben wird,
wobei ein Dimmer (700), der ausgestaltet ist, um die Menge an Außenlicht anzupassen, die von der Außenseite aus einfällt, in einem Bereich der optischen Einrichtung angeordnet ist, in dem das Licht ausgegeben wird,
wobei der Dimmer ein erstes transparentes Substrat (701) und ein zweites transparentes Substrat (703), das zu dem ersten Substrat weist, eine erste Elektrode (702), die auf dem ersten Substrat montiert ist, eine zweite Elektrode (704), die auf dem zweiten Substrat montiert ist, und einen Elektrolyten (705) einschließt, der zwischen dem ersten Substrat und dem zweiten Substrat eingesiegelt ist und Metallionen enthält,
wobei die erste Elektrode ein leitfähiges Material mit einer feinen Linienform einschließt, und
wobei die zweite Elektrode eine transparente Elektrodenschicht einschließt.

**2.** Anzeigevorrichtung nach Anspruch 1,
wobei das erste Substrat näher an einer Betrachterseite angeordnet ist als das zweite Substrat.

**3.** Anzeigevorrichtung nach Anspruch 2, wobei die erste Elektrode Nanodrähte einschließt.

**4.** Anzeigevorrichtung nach Anspruch 3,
wobei der durchschnittliche Durchmesser der Nanodrähte 1 $\mu$m oder weniger ist.

**5.** Anzeigevorrichtung nach Anspruch 1, wobei die erste Elektrode Silber einschließt.

**6.** Anzeigevorrichtung nach Anspruch 1,
wobei die zweite Elektrode in einem effektiven Bereich des Dimmers nicht strukturiert ist.

**7.** Anzeigevorrichtung nach Anspruch 1,
wobei die Metallionen Silberionen einschließen, und
wobei der Elektrolyt mindestens einen Typ von Salz ausgewählt aus einer Gruppe einschließt, die LiX, NaX und KX einschließt (wobei X hier ein Fluoratom, ein Chloratom, ein Bromatom oder ein Iodatom bedeutet).

**8.** Anzeigevorrichtung nach Anspruch 1,
wobei Färben und Entfärben des Dimmers durch Ausfällung von Metall an der zweiten Elektrode und Auflösung des Metalls in dem Elektrolyten erfolgt, basierend auf dem Anlegen von Spannungen an die erste Elektrode und die zweite Elektrode.

**9.** Anzeigevorrichtung nach Anspruch 1, ferner umfassend:

einen Beleuchtungssensor, der die Intensität der Beleuchtung einer Umgebung misst, wo die Anzeigevorrichtung angeordnet ist,
wobei die Lichtdurchlässigkeit des Dimmers basierend auf einem Messergebnis des Beleuchtungssensors gesteuert wird.

**10.** Anzeigevorrichtung nach Anspruch 1, ferner umfassend:

einen Beleuchtungssensor, der die Intensität der Beleuchtung einer Umgebung misst, wo die Anzeigevorrichtung angeordnet ist,
wobei die Helligkeit eines durch die Bilderzeugungseinrichtung erzeugten Bildes basierend auf einem Messergebnis des Beleuchtungssensors gesteuert wird.

**11.** Anzeigevorrichtung nach Anspruch 1, ferner umfassend:

einen zweiten Beleuchtungssensor, der die Intensität der Beleuchtung basierend auf Licht misst, welches von einer Außenumgebung durch den Dimmer gelangt,
wobei die Lichtdurchlässigkeit des Dimmers basierend auf einem Messergebnis des zweiten Beleuchtungssensors gesteuert wird.

**12.** Anzeigevorrichtung nach Anspruch 1, ferner umfassend:

einen zweiten Beleuchtungssensor, der die Intensität der Beleuchtung basierend auf Licht misst, welches von einer Außenumgebung durch den Dimmer gelangt,
wobei die Helligkeit eines durch die Bilderzeugungseinrichtung erzeugten Bildes basierend auf einem Messergebnis des zweiten Beleuchtungssensors gesteuert wird.

**13.** Anzeigevorrichtung nach Anspruch 11,
wobei der zweite Beleuchtungssensor näher an einer Betrachterseite angeordnet ist als die optische Einrichtung.

**14.** Anzeigevorrichtung nach Anspruch 9,
wobei die höchste Lichtdurchlässigkeit des Dimmers 50 % oder mehr beträgt, und die geringste Lichtdurchlässigkeit des Dimmers 30 % oder weniger beträgt.

**15.** Anzeigevorrichtung nach Anspruch 9,
wobei die Lichtdurchlässigkeit des Dimmers gleich einem vorbestimmten Wert oder kleiner als dieser ist, wenn das Messergebnis des Beleuchtungssensors gleich einem vorbestimmten Wert oder größer als dieser ist.

## Revendications

**1.** Appareil d'affichage comprenant :

(i) une monture de type lunettes (10) qui est configurée pour être montée sur une partie de tête d'un observateur ; et
(ii) un appareil d'affichage d'image (100) qui est installé dans la monture,

dans lequel l'appareil d'affichage d'image comprend (A) un dispositif de formation d'image (111) et (B) un dispositif optique (120) qui est configuré pour permettre à une sortie de lumière depuis le dispositif de formation d'image d'être incidente sur ce dernier, d'être guidée dans ce dernier, et d'être transmise depuis ce dernier,
dans lequel un gradateur de lumière (700) qui est configuré pour ajuster la quantité de lumière externe incidente depuis l'extérieur est disposé dans une zone du dispositif optique lorsque la lumière est sortie,
dans lequel le gradateur de lumière comprend un premier substrat transparent (701) et un second substrat transparent (703) qui fait face au premier substrat, une première électrode (702) qui est montée sur le premier substrat, une seconde électrode (704) qui est montée sur le second substrat et un électrolyte (705) qui est tenu de façon étanche entre le premier substrat et le second substrat et contient des ions métalliques,
dans lequel la première électrode comprend un matériau conducteur d'une forme de ligne fine, et
dans lequel la seconde électrode comprend une couche d'électrode transparente.

**2.** Appareil d'affichage selon la revendication 1,
dans lequel le premier substrat est disposé plus près d'un côté observateur que le second substrat.

**3.** Appareil d'affichage selon la revendication 2,
dans lequel la première électrode comprend des nanofils.

**4.** Appareil d'affichage selon la revendication 3,
dans lequel le diamètre moyen des nanofils est égal ou inférieur à 1 $\mu$m.

**5.** Appareil d'affichage selon la revendication 1,

dans lequel la première électrode comprend de l’argent.

6. Appareil d’affichage selon la revendication 1,
dans lequel la seconde électrode n’est pas modélisée dans une zone efficace du gradateur de lumière.

7. Appareil d’affichage selon la revendication 1,
dans lequel les ions métalliques comprennent des ions d’argent et
dans lequel l’électrolyte comprend au moins un type de sel sélectionné dans un groupe comprenant le LiX, le NaX et KX (ici, X indique un atome de fluor, un atome de chlore, un atome de brome ou un atome d’iode).

8. Appareil d’affichage selon la revendication 1,
dans lequel la coloration et la décoloration du gradateur de lumière se produisent par précipitation d’un métal sur la seconde électrode et dissolution du métal dans l’électrolyte, en se basant sur une application de tensions à la première électrode et à la seconde électrode.

9. Appareil d’affichage selon la revendication 1, comprenant en outre :

un capteur d’éclairage qui mesure l’intensité d’éclairage d’un environnement dans lequel le dispositif d’affichage est disposé,
dans lequel un facteur de transmission de la lumière du gradateur de lumière est commandé sur la base d’un résultat de mesure du capteur d’éclairage.

10. Appareil d’affichage selon la revendication 1, comprenant en outre :

un capteur d’éclairage qui mesure l’intensité d’éclairage d’un environnement dans lequel l’appareild’affichage est disposé,
dans lequel la luminosité d’une image formée par le dispositif de formation d’image est commandée sur la base d’un résultat de mesure du capteur d’éclairage.

11. Appareil d’affichage selon la revendication 1, comprenant en outre :

un second capteur d’éclairage qui mesure l’intensité d’éclairage en se basant sur une lumière qui passe à travers le gradateur de lumière en provenance d’un environnement externe,
dans lequel un facteur de transmission de la lumière du gradateur de lumière est commandé sur la base d’un résultat de mesure du second capteur d’éclairage.

12. Appareil d’affichage selon la revendication 1, comprenant en outre :

un second capteur d’éclairage qui mesure l’intensité d’éclairage en se basant sur une lumière qui passe à travers le gradateur de lumière en provenance d’un environnement externe,
dans lequel la luminosité d’une image formée par le dispositif de formation d’image est commandée sur la base d’un résultat de mesure du second capteur d’éclairage.

13. Appareil d’affichage selon la revendication 11,
dans lequel le second capteur d’éclairage est disposé plus près d’un côté observateur que le dispositif optique.

14. Appareil d’affichage selon la revendication 9,
dans lequel le facteur de transmission de la lumière le plus élevé du gradateur de lumière est égal ou supérieur à 50 % et le facteur de transmission de la lumière le plus bas du gradateur de lumière est égal ou inférieur à 30 %.

15. Appareil d’affichage selon la revendication 9,
dans lequel, lorsque le résultat de mesure du capteur d’éclairage est égal ou supérieur à une valeur prédéterminée, le facteur de transmission de la lumière du gradateur de lumière est égal ou inférieur à une valeur prédéterminée.

*FIG.1*
FIRST EMBODIMENT

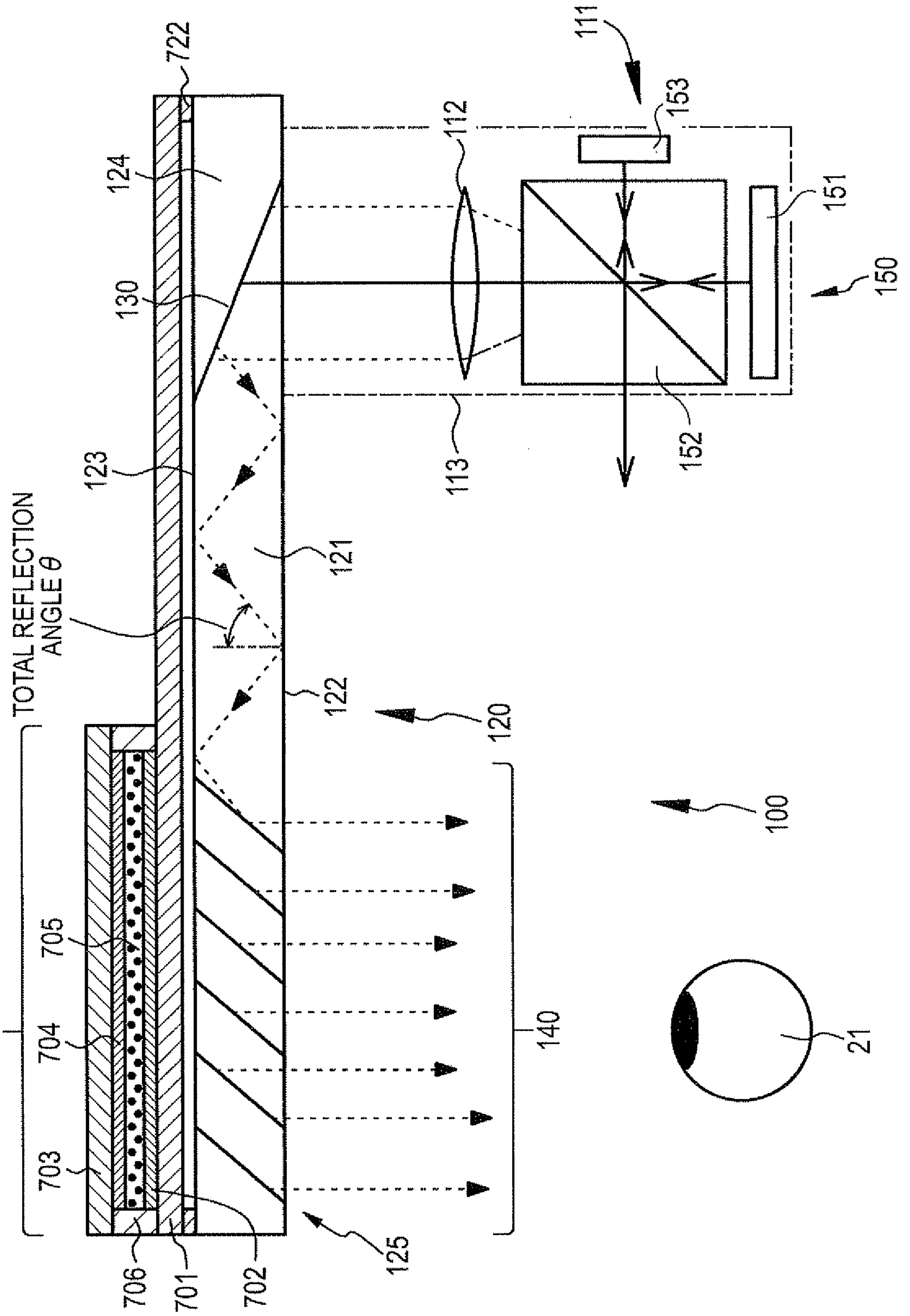

FIG.2

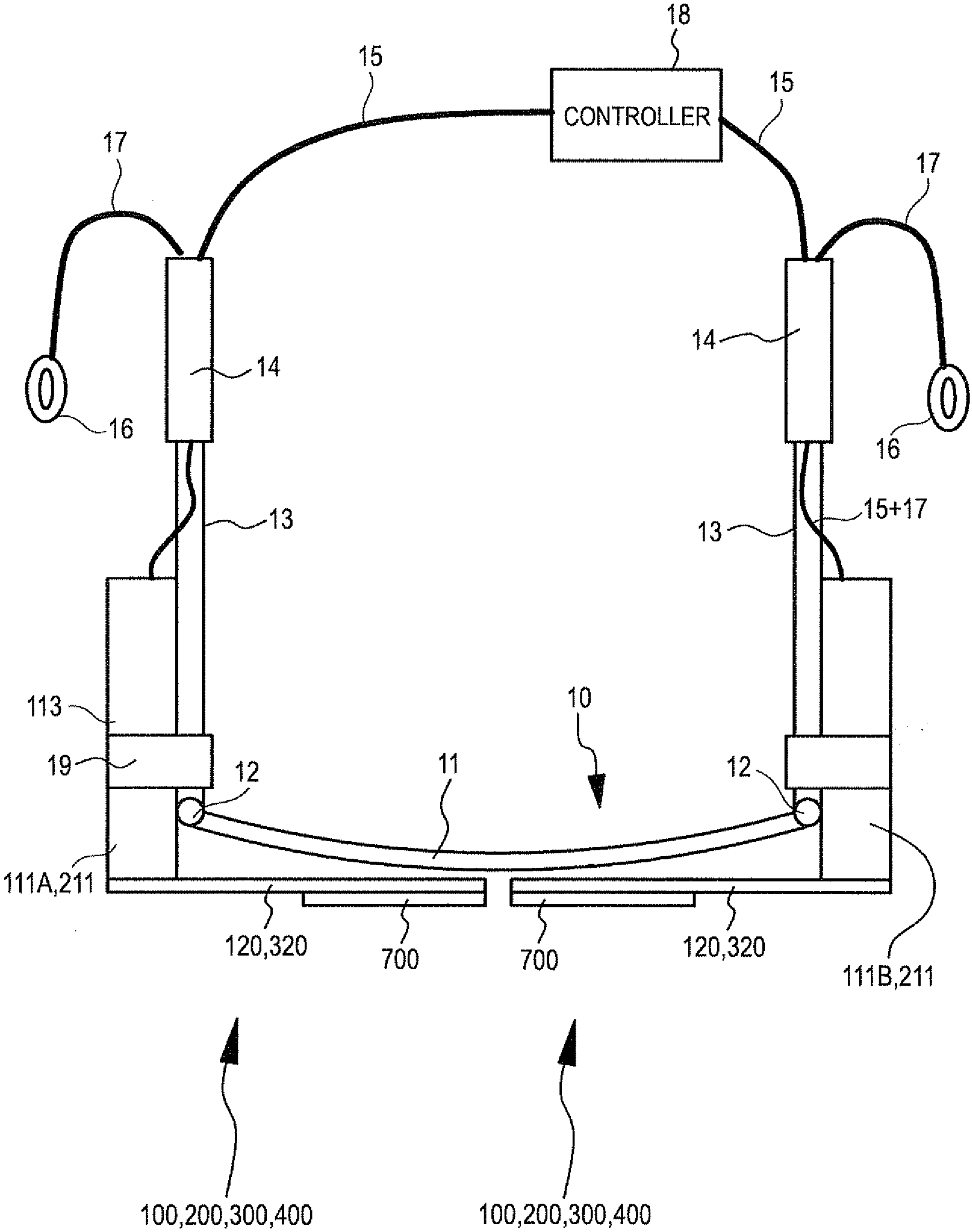
18
CONTROLLER
15
15
17
17
14
14
16
16
13
13
15+17
113
19
12
12
11
10
111A,211
111B,211
120,320
120,320
700
700
100,200,300,400
100,200,300,400

FIG.3A

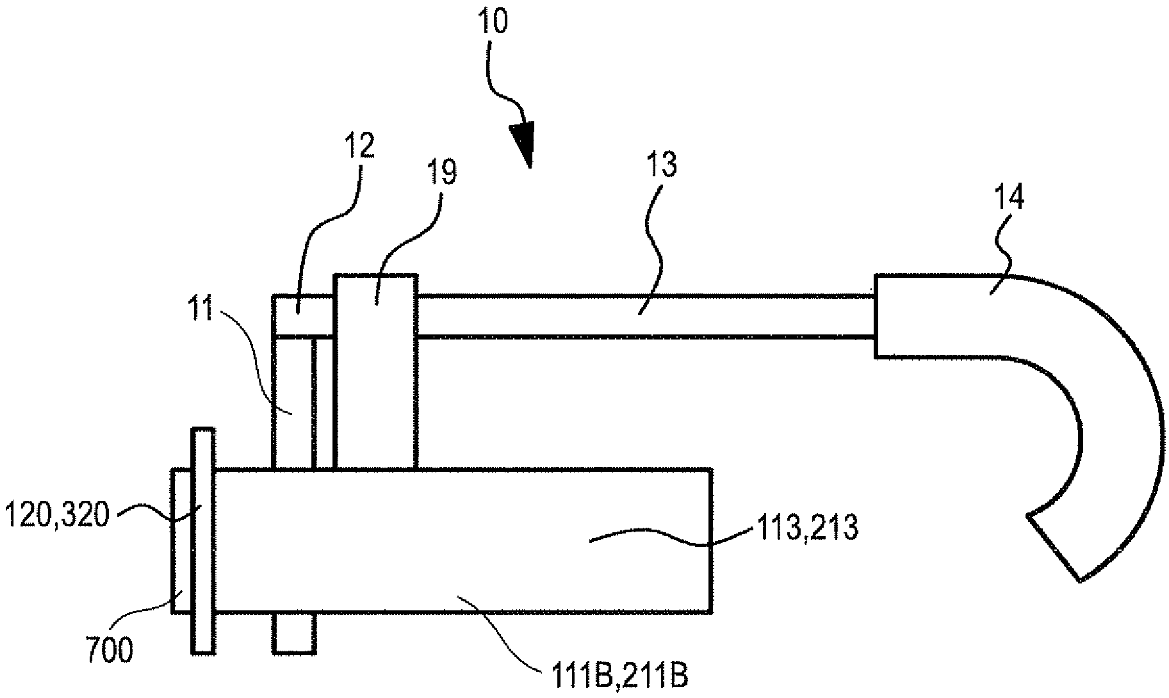
10
12
19
13
14
11
120,320
113,213
700
111B,211B

FIG.3B

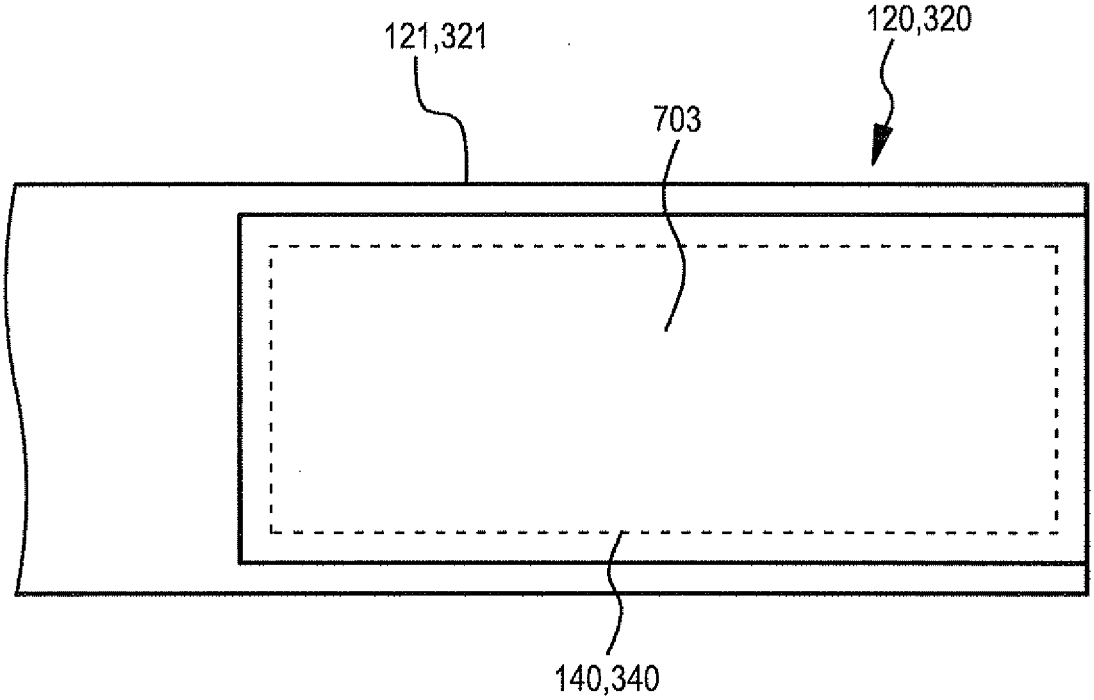
121,321
120,320
703
140,340

FIG.4A

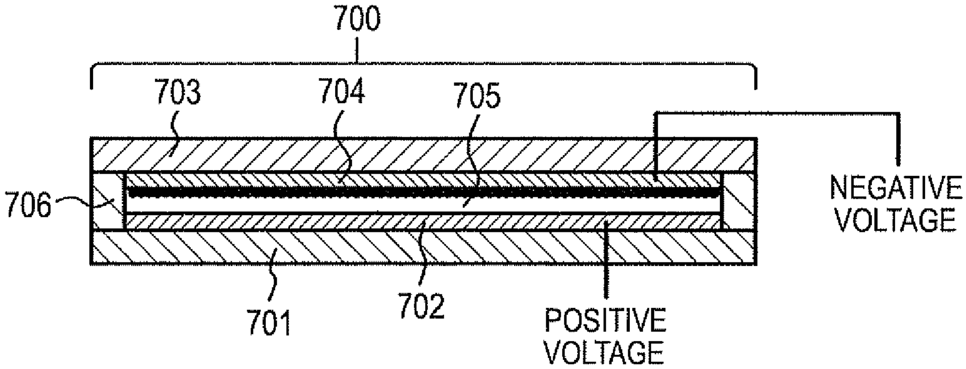


FIG.4B

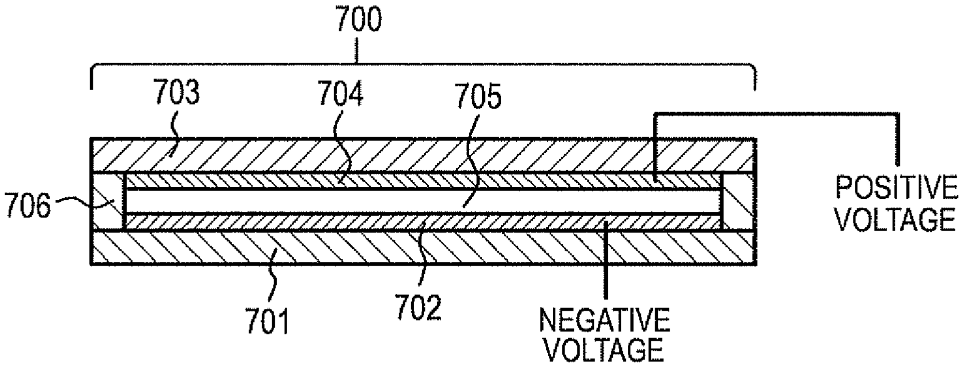


FIG.4C

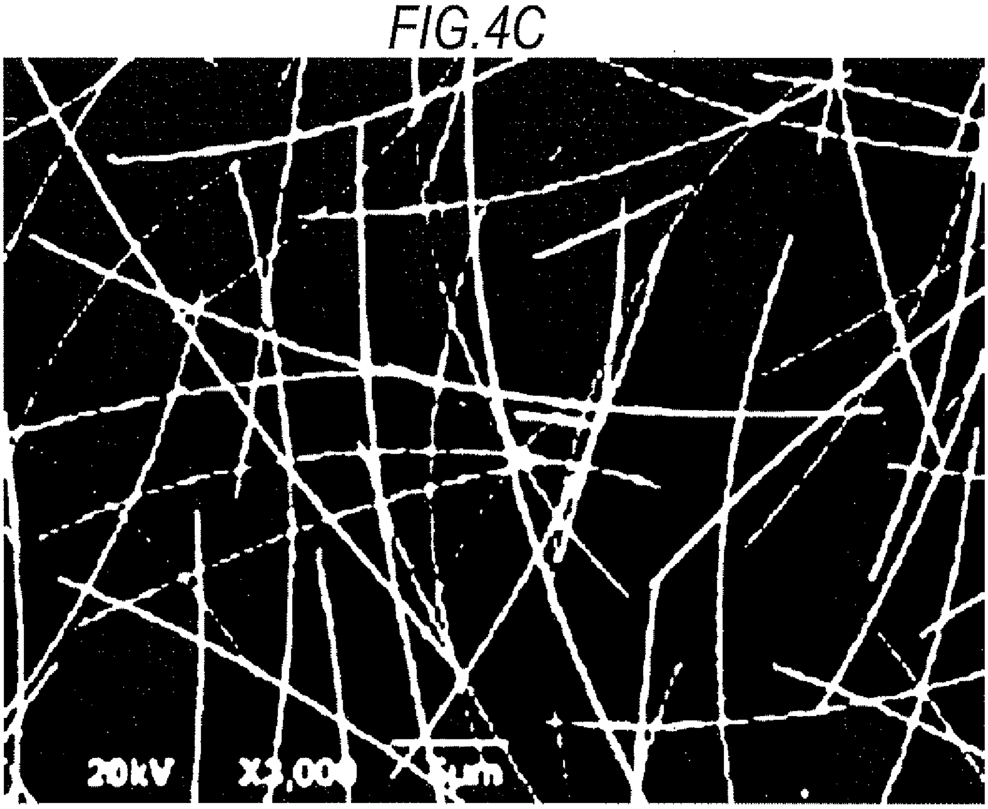

FIG.5
SECOND EMBODIMENT

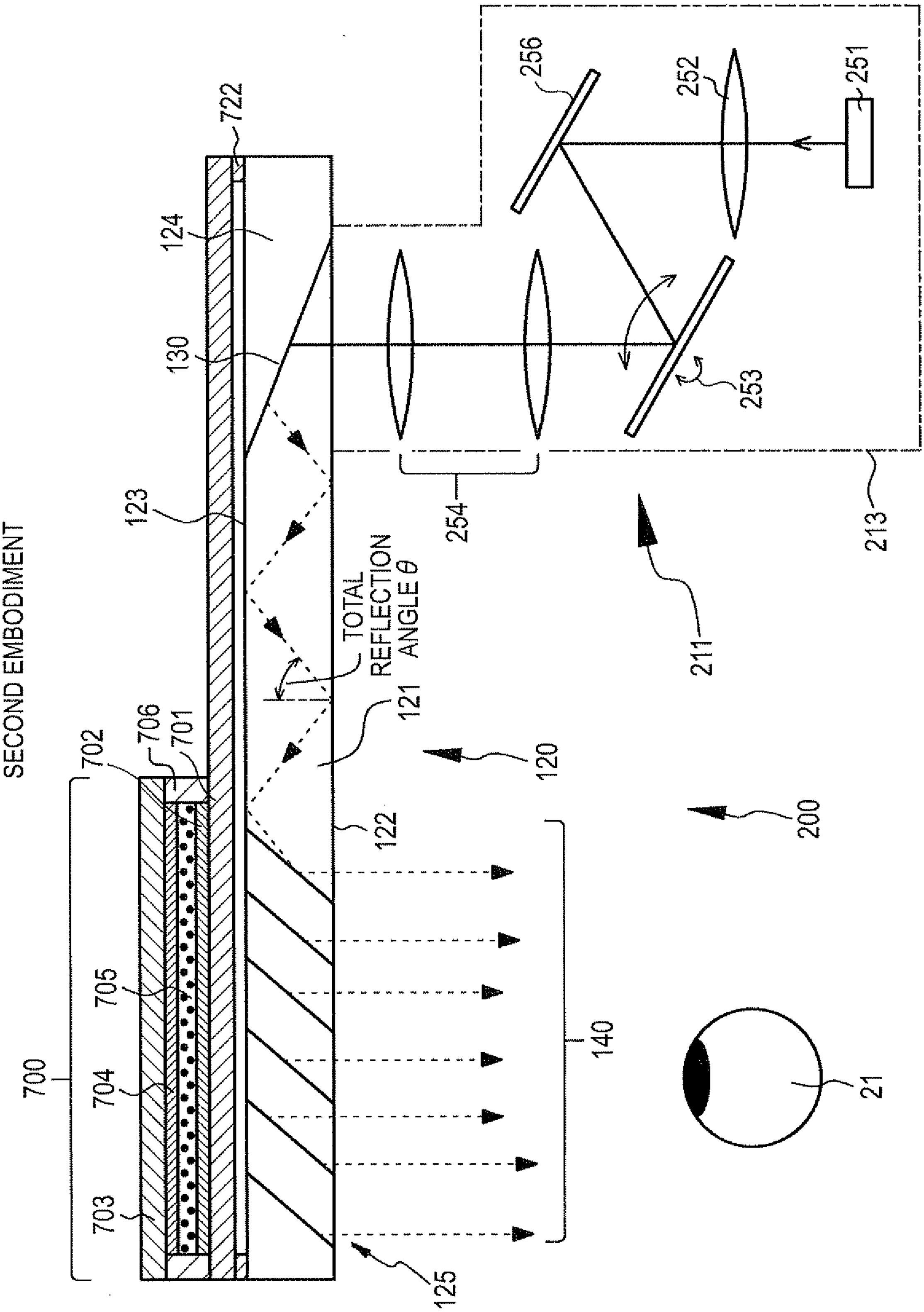

FIG.6
THIRD EMBODIMENT

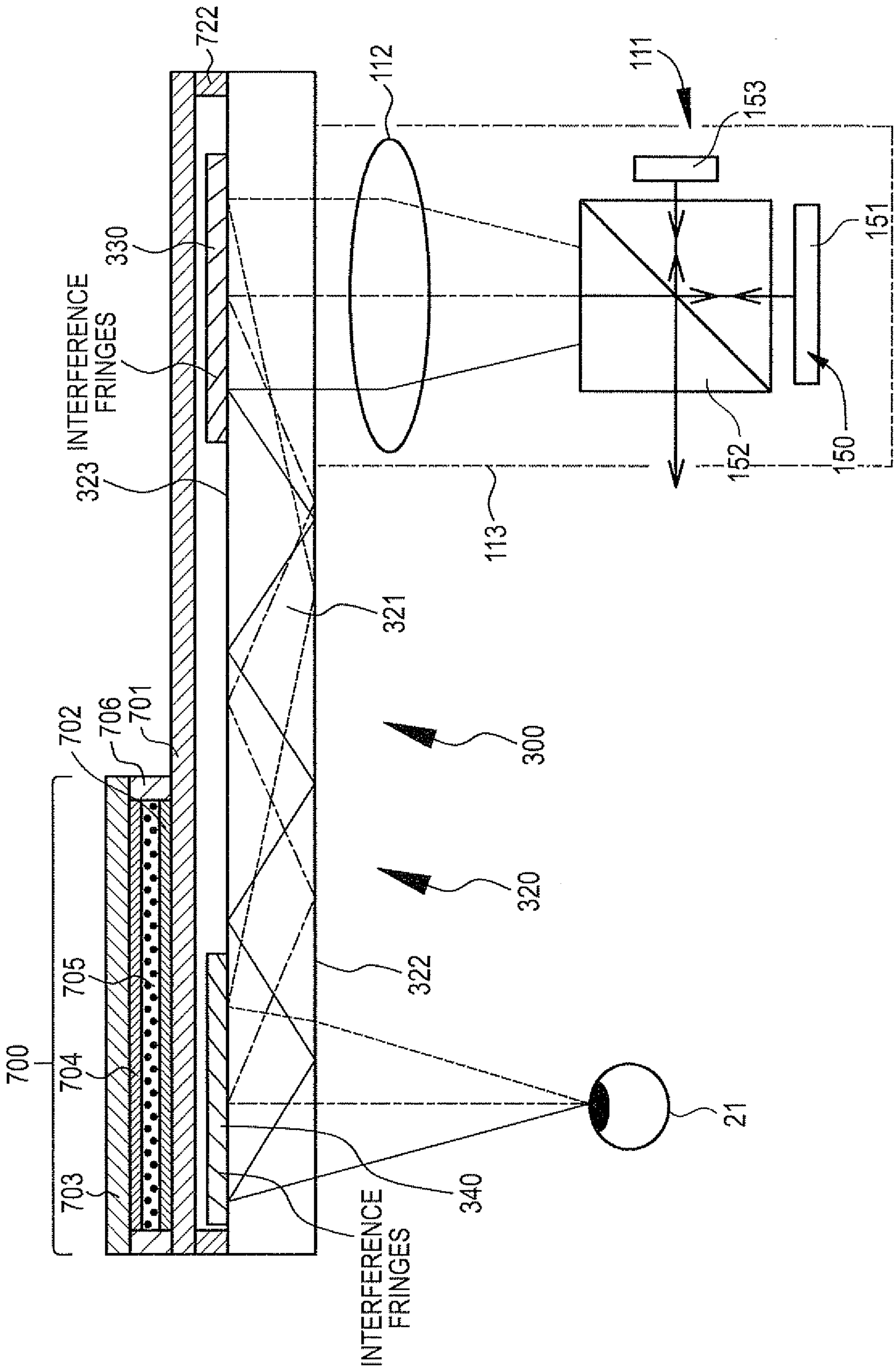

FIG.7

REFLECTIVE VOLUME HOLOGRAM DIFFRACTION GRATING

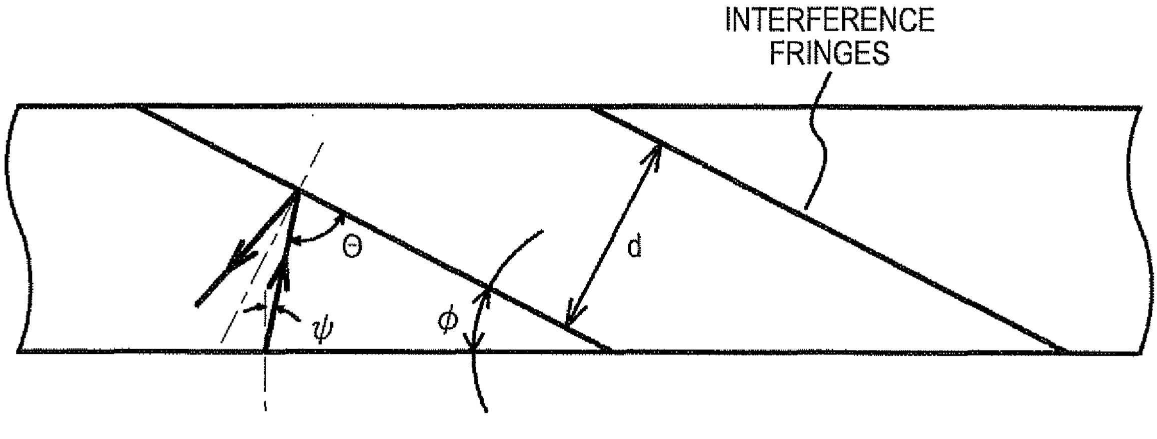

*FIG.8*
FOURTH EMBODIMENT

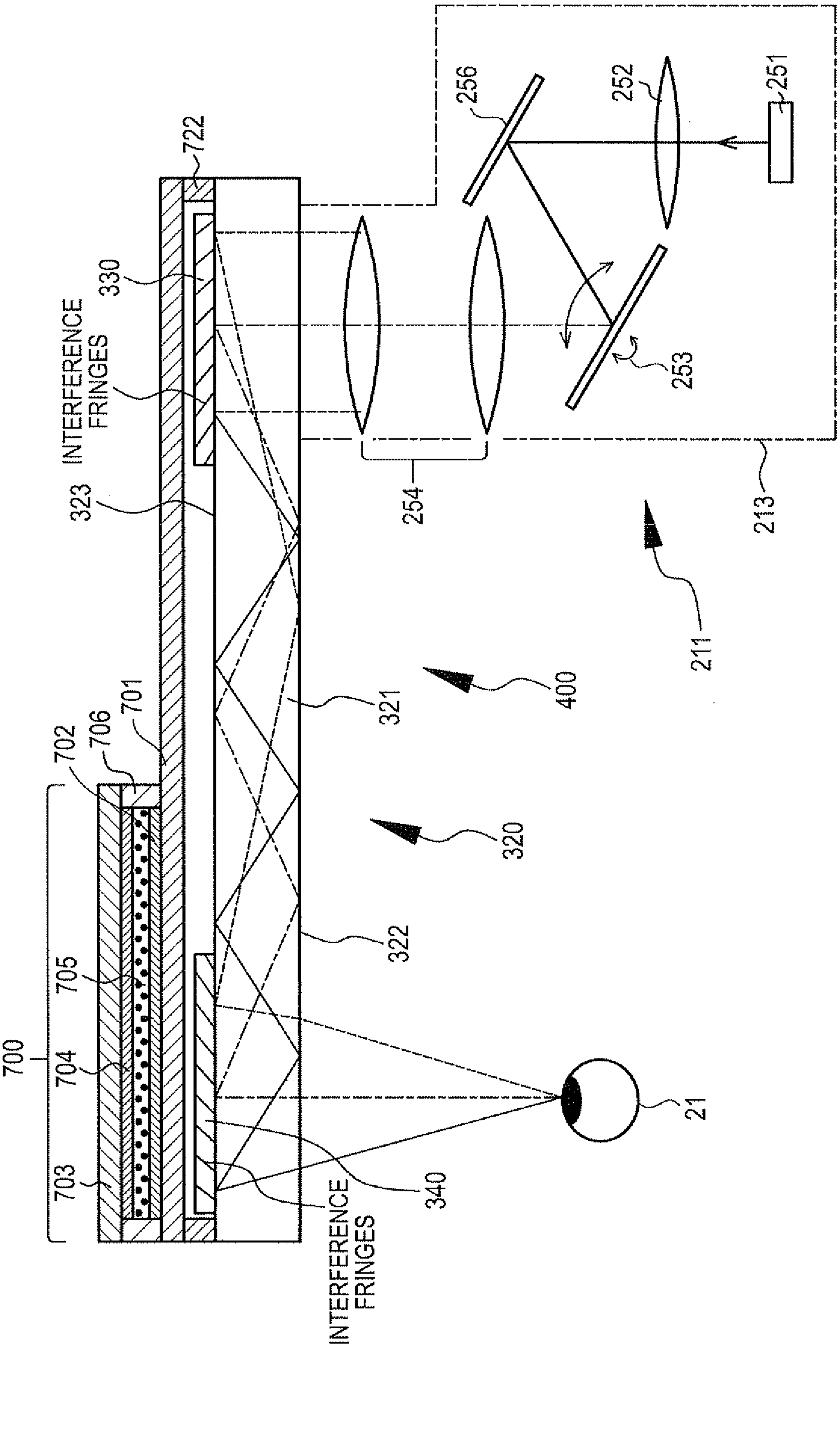

FIG.9

FIFTH EMBODIMENT

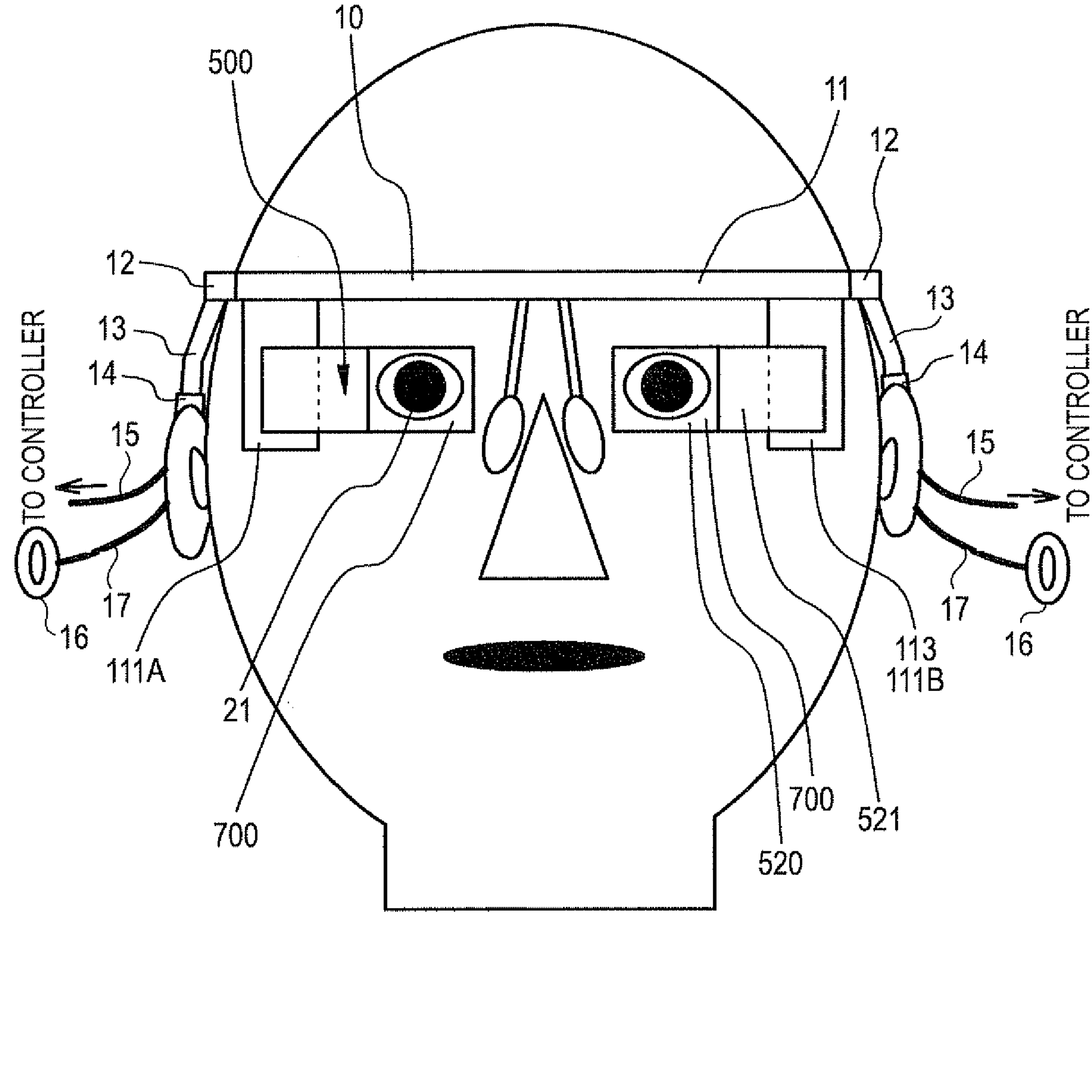

FIG.10

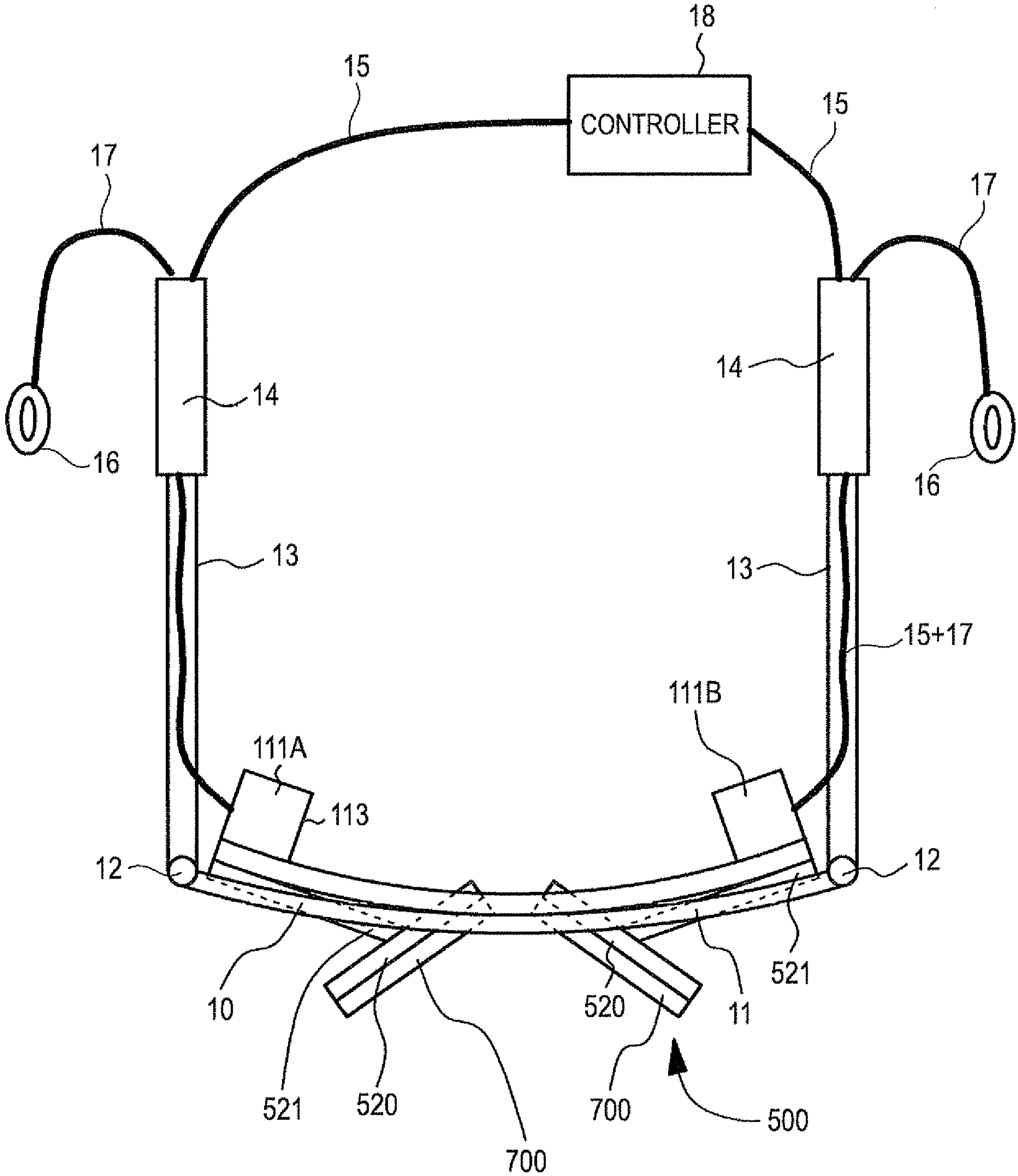
18
CONTROLLER
15
15
17
17
14
14
16
16
13
13
15+17
111B
111A
113
12
12
10
521
520
700
700
520
11
521
500

FIG.11A

SIXTH EMBODIMENT

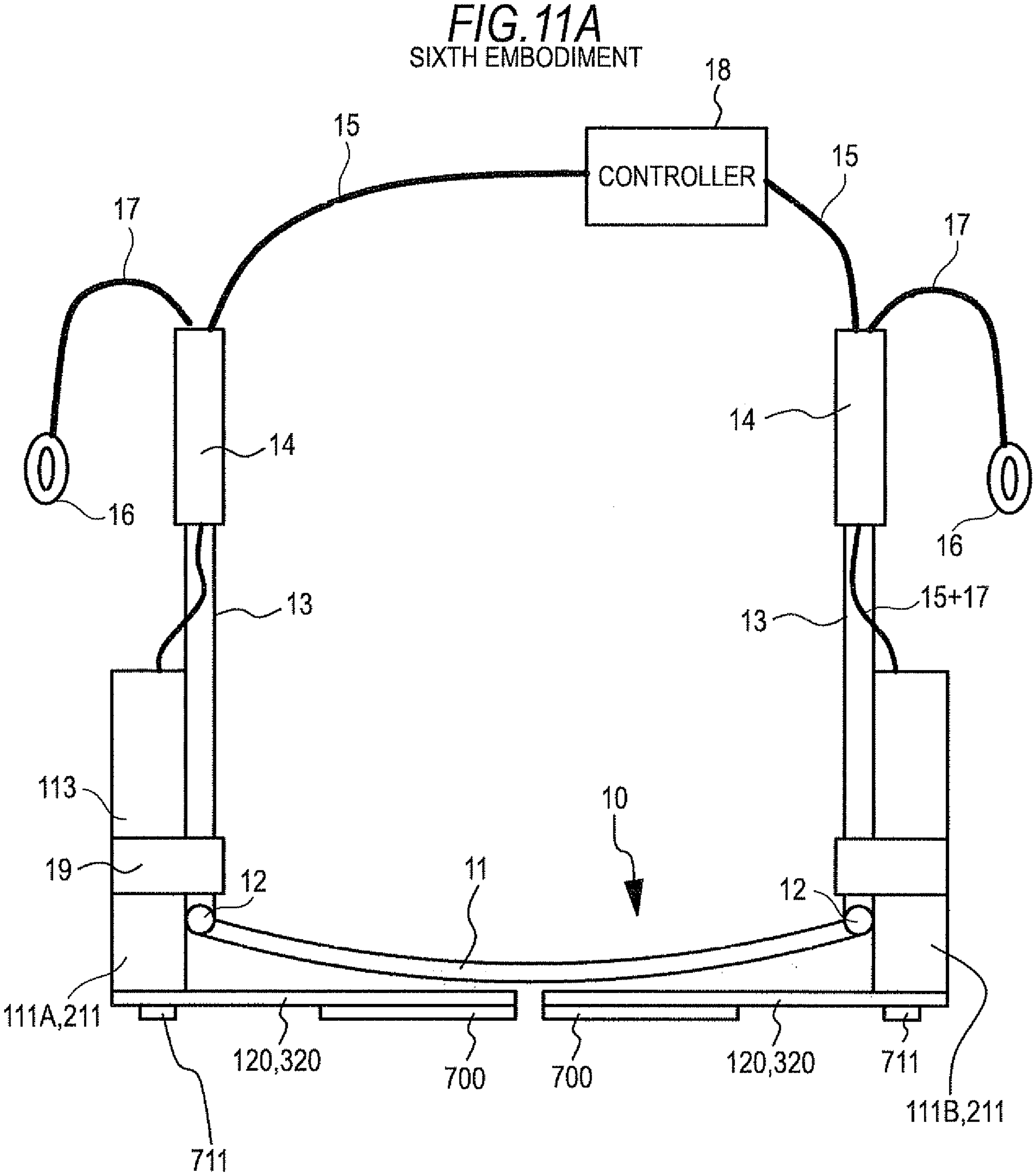


FIG.11B

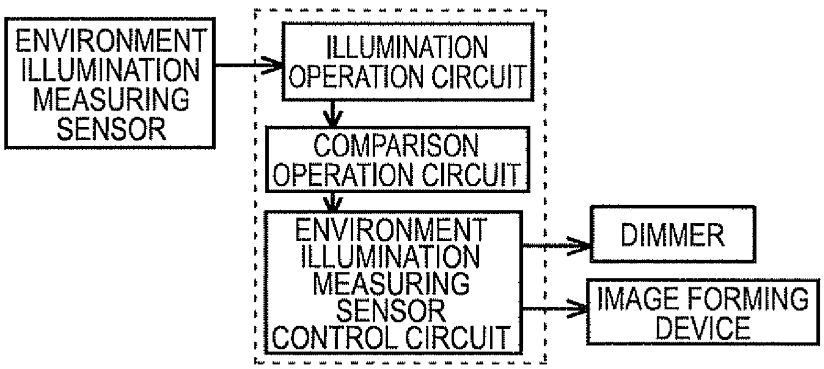

FIG.12A

SEVENTH EMBODIMENT

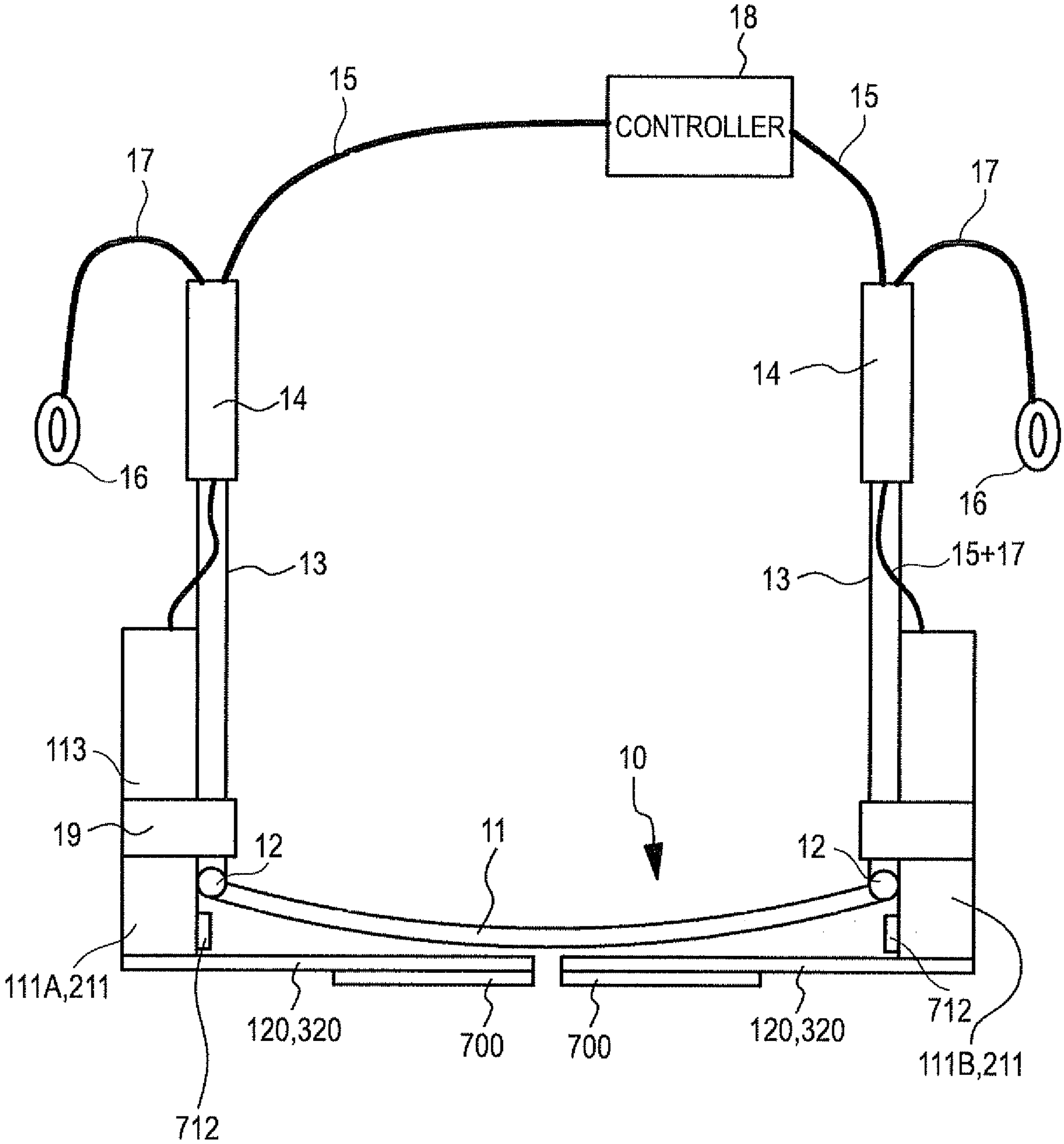


FIG.12B

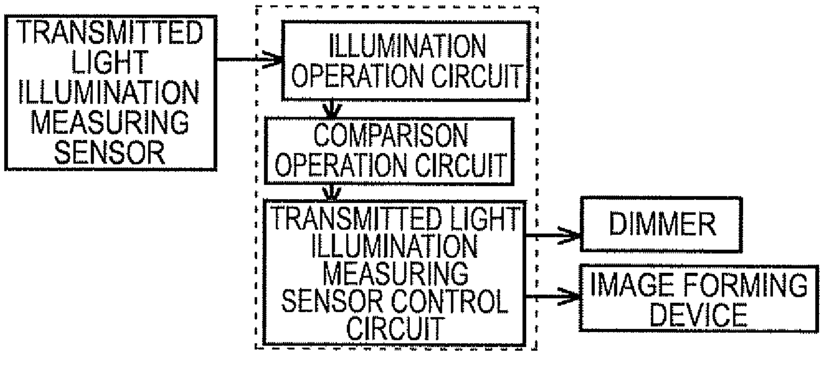

FIG.13

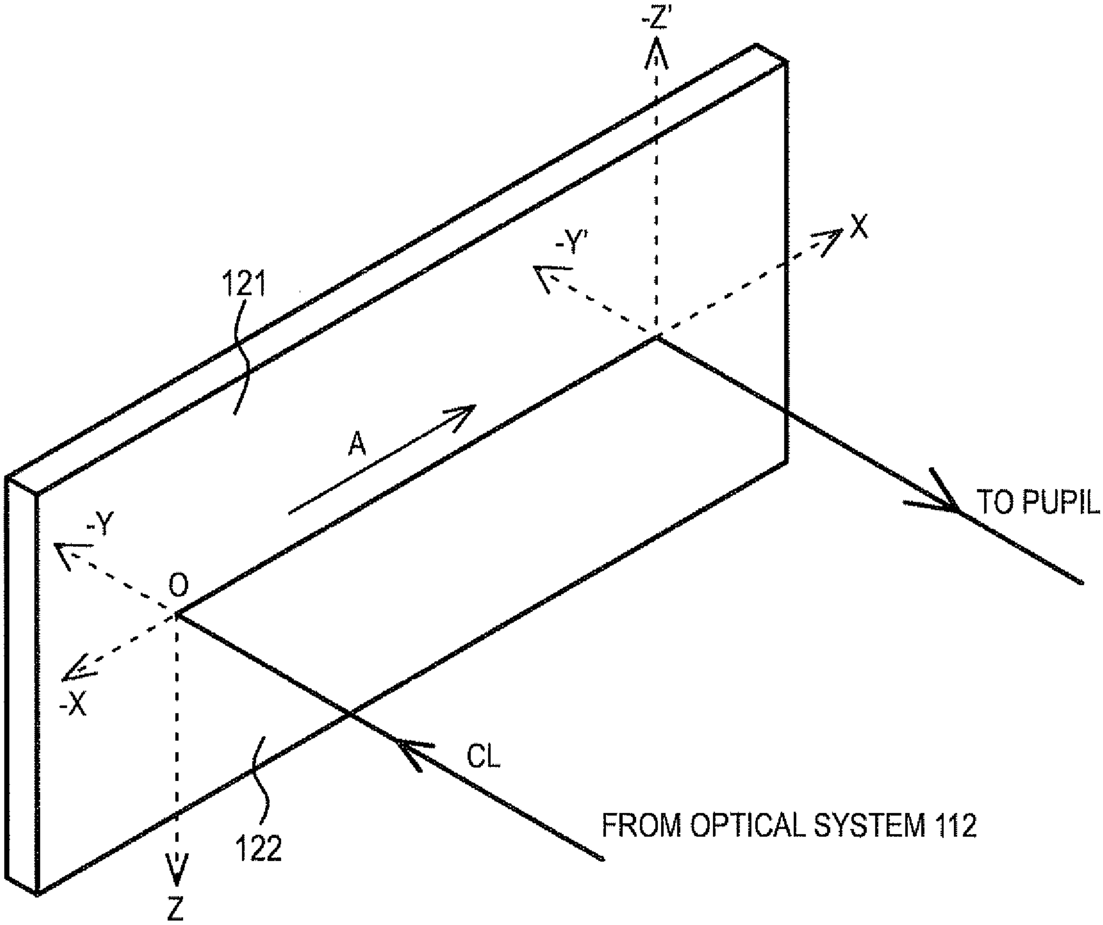

FIG.14

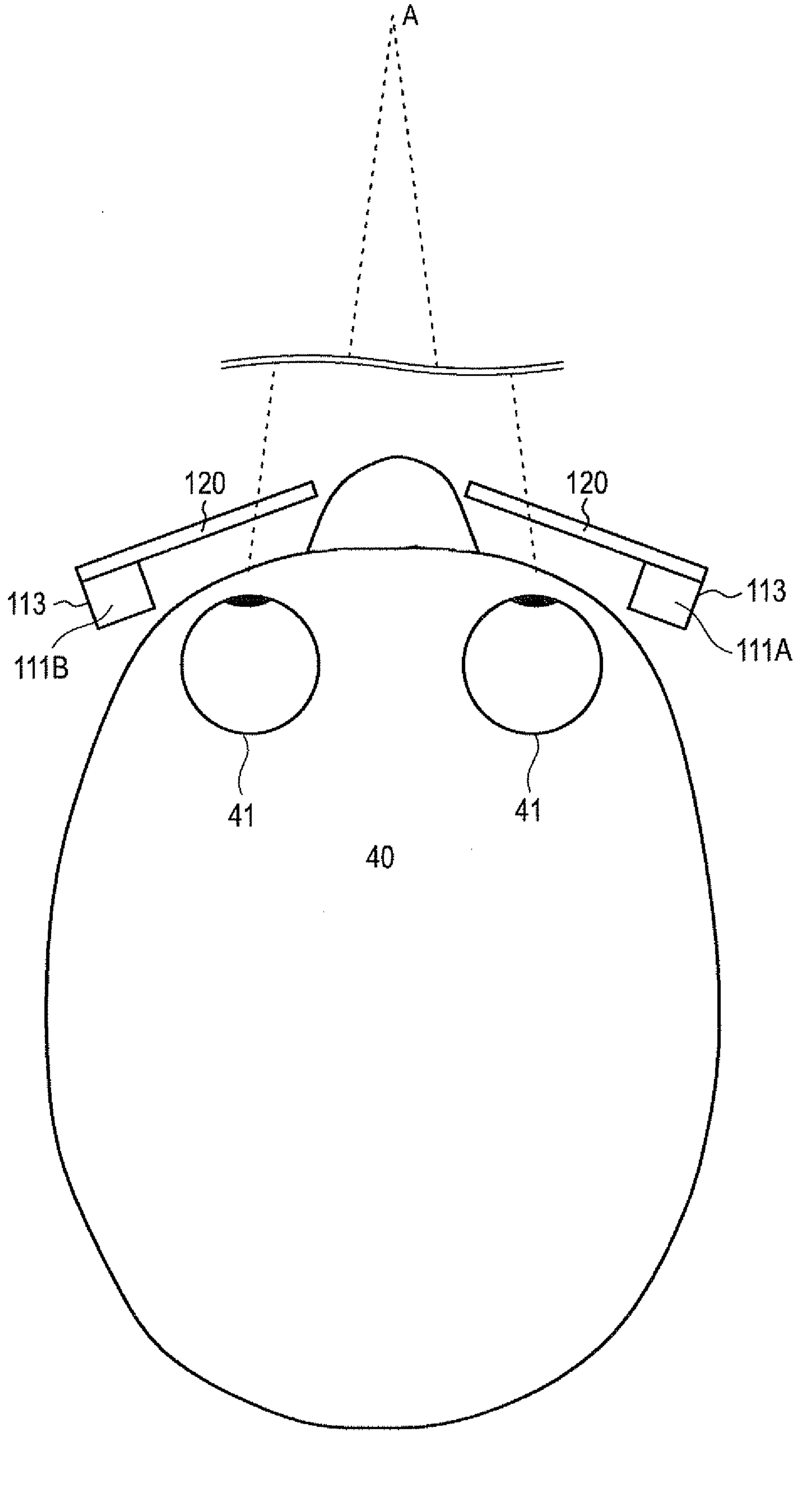

FIG.15

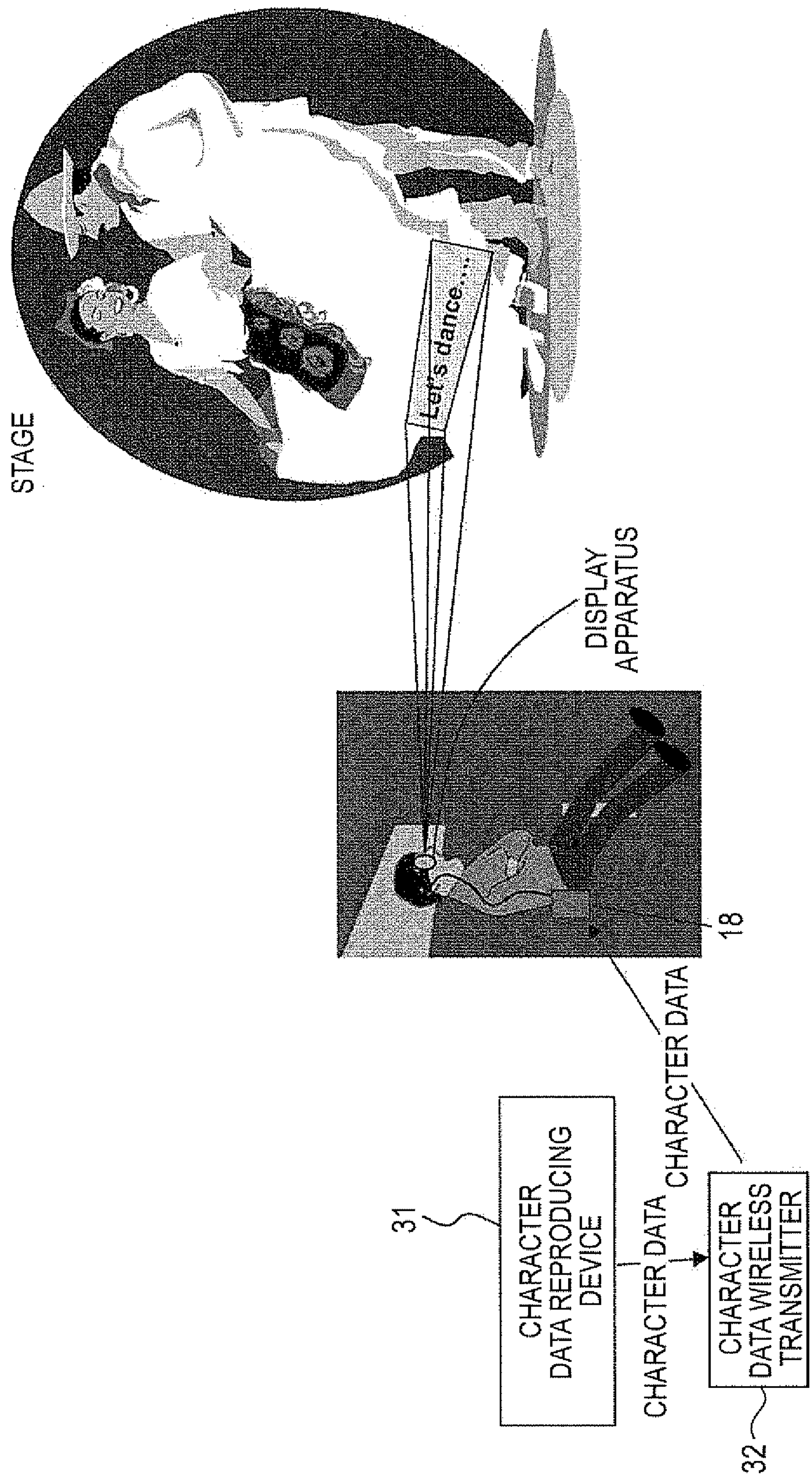
STAGE
Let's dance.....
DISPLAY APPARATUS
18
CHARACTER DATA
CHARACTER DATA
31
CHARACTER DATA REPRODUCING DEVICE
CHARACTER DATA
CHARACTER DATA WIRELESS TRANSMITTER
32

FIG.16

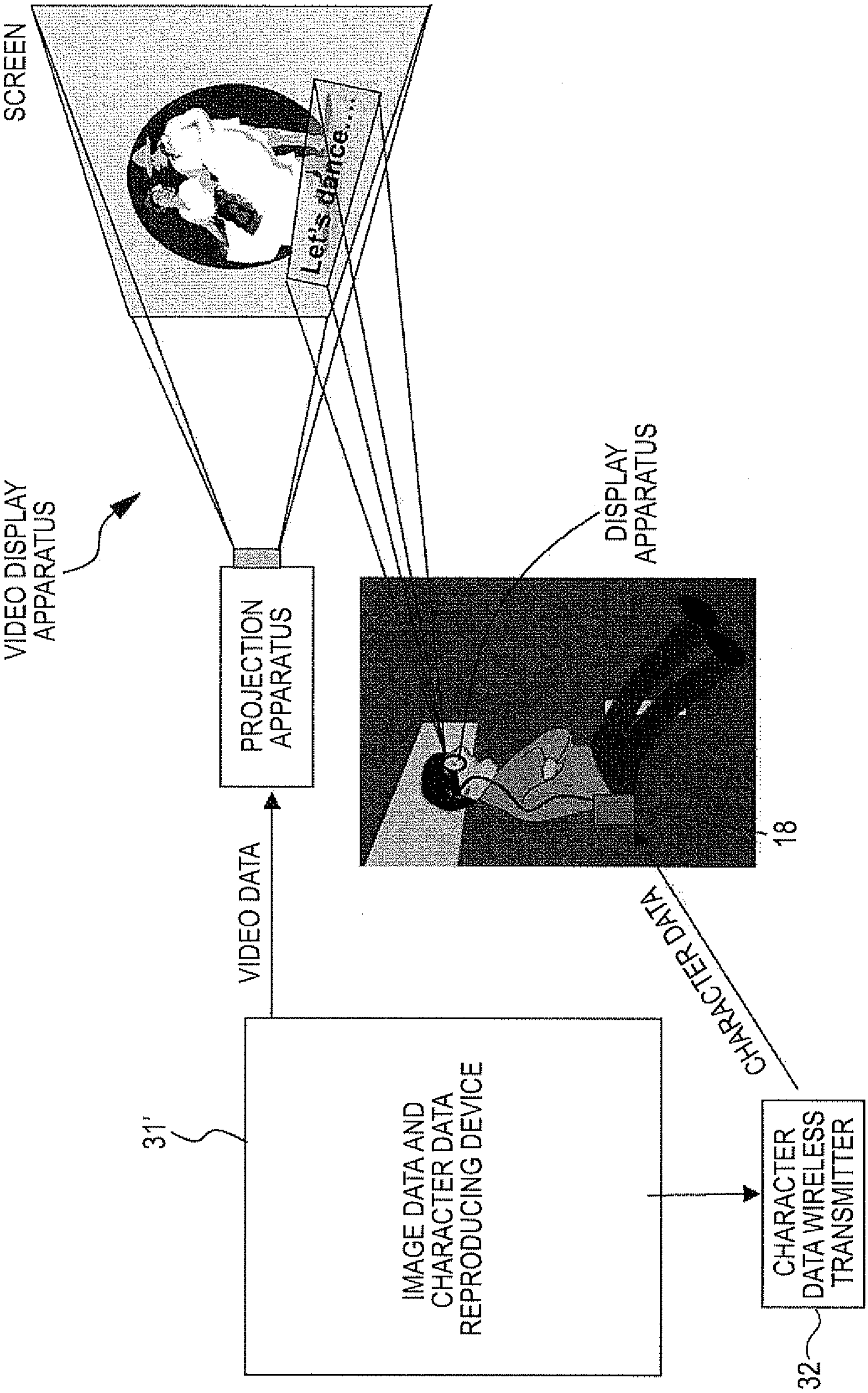
SCREEN
Let's dance....
VIDEO DISPLAY APPARATUS
PROJECTION APPARATUS
DISPLAY APPARATUS
18
VIDEO DATA
CHARACTER DATA
31'
IMAGE DATA AND CHARACTER DATA REPRODUCING DEVICE
CHARACTER DATA WIRELESS TRANSMITTER
32

FIG.17

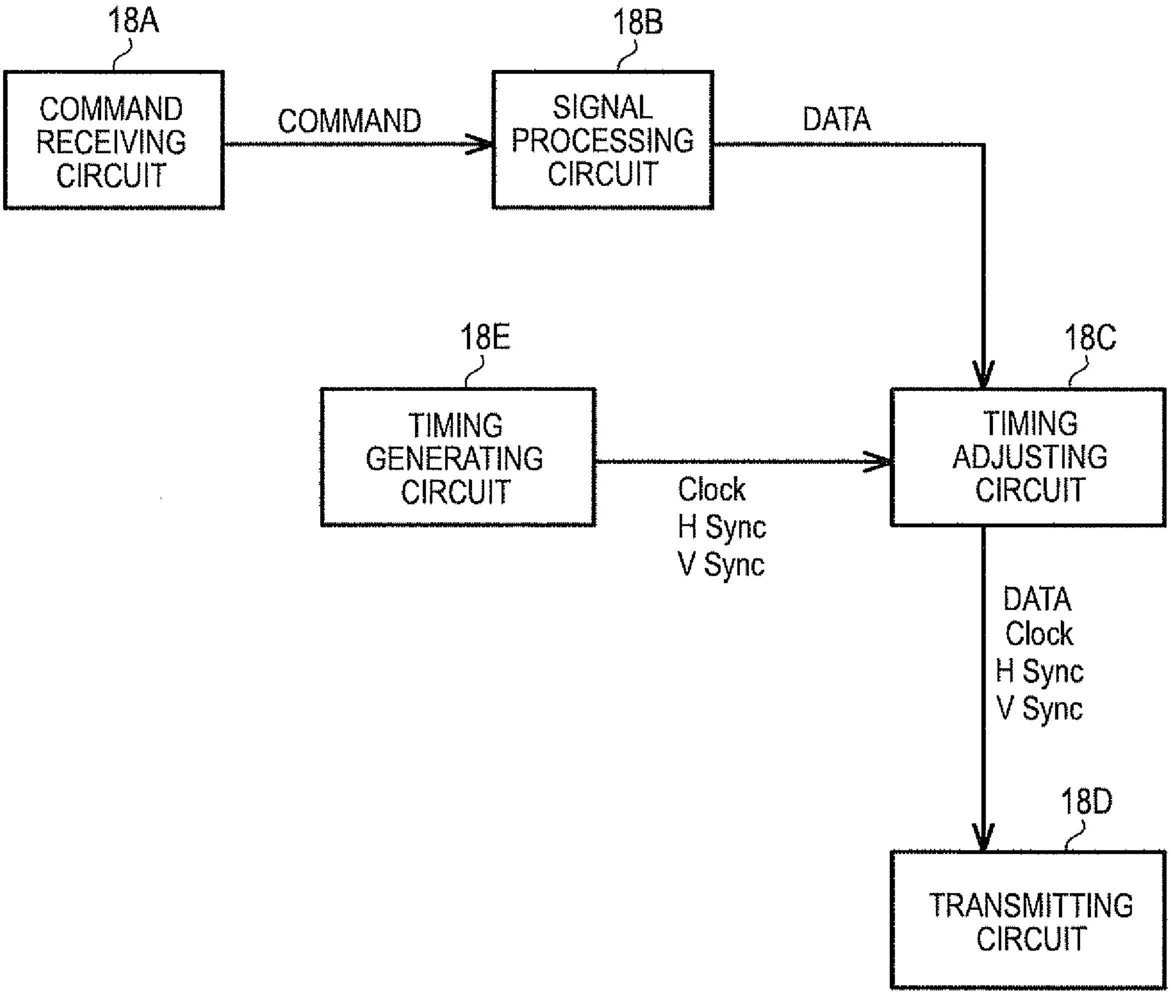


FIG.18A

| | | | | | | |
|---|---|---|---|---|---|---|
| SYNC | MSG_ID | LENG | POS_X | POS_Y | DATA · · · | FSC |

FIG.18B

| | | | | | | | |
|---|---|---|---|---|---|---|---|
| SYNC | MSG_ID | LENG | POS_X | POS_Y | TIME | DATA · · · | FSC |

FIG.19A

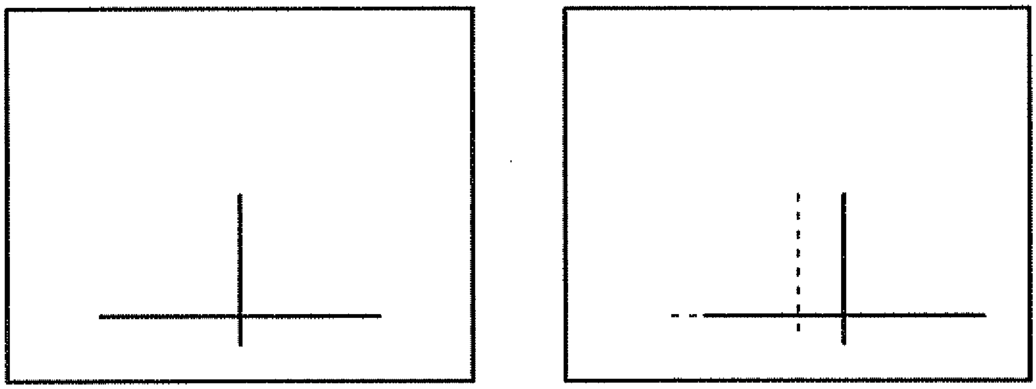

FIG.19B

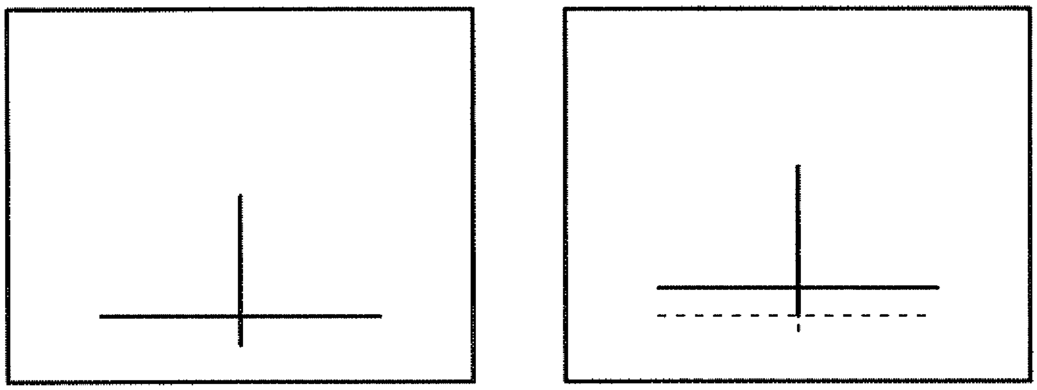

FIG.19C

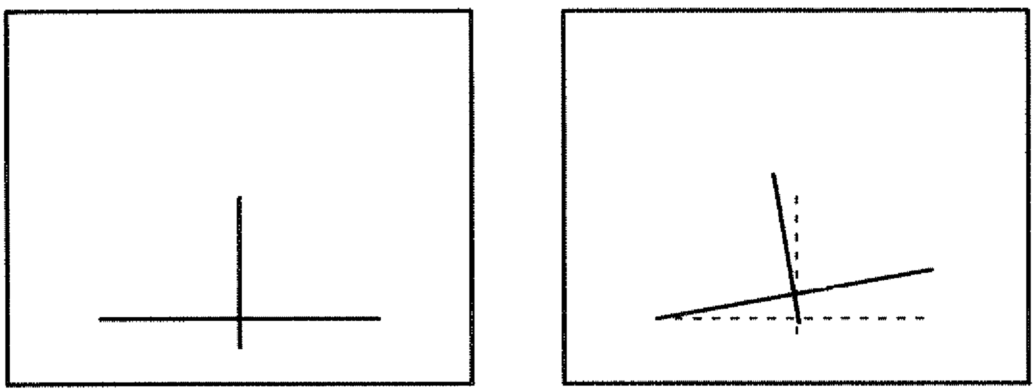

FIG.20A

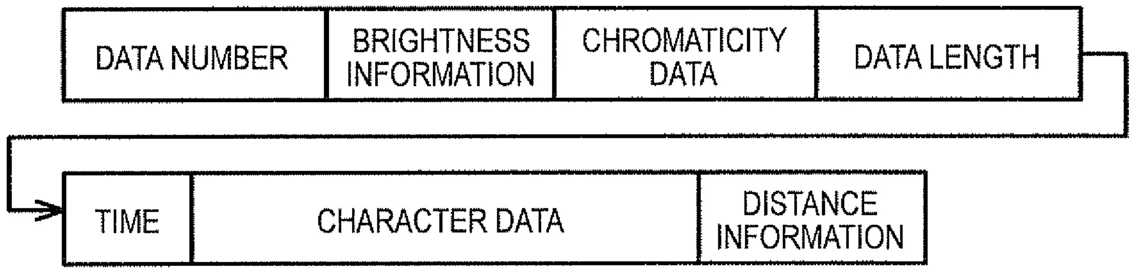


FIG.20B

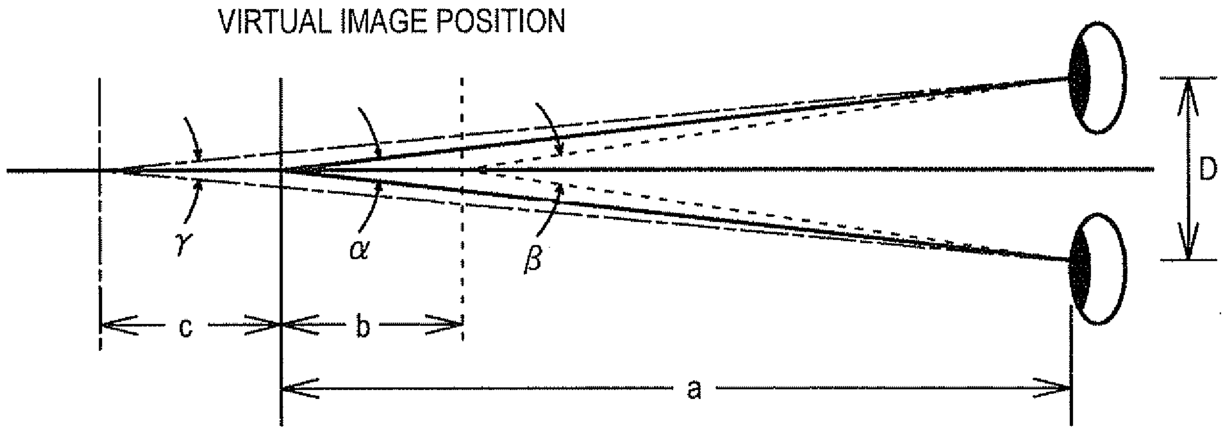

FIG.21A

TENTH EMBODIMENT

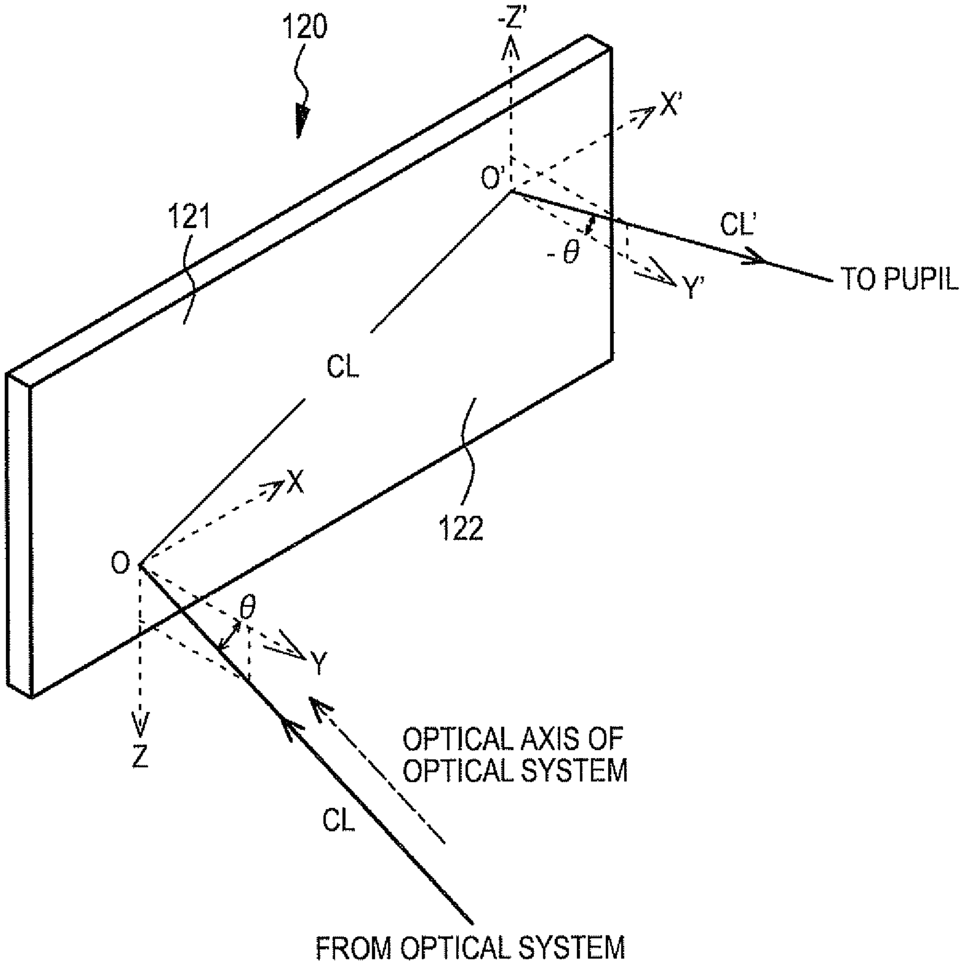


FIG.21B

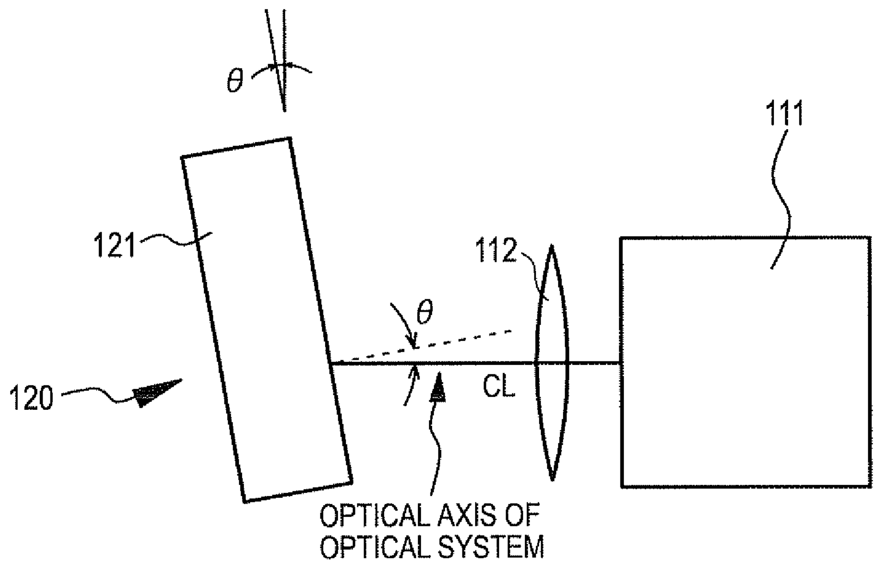

*FIG.22*

TENTH EMBODIMENT

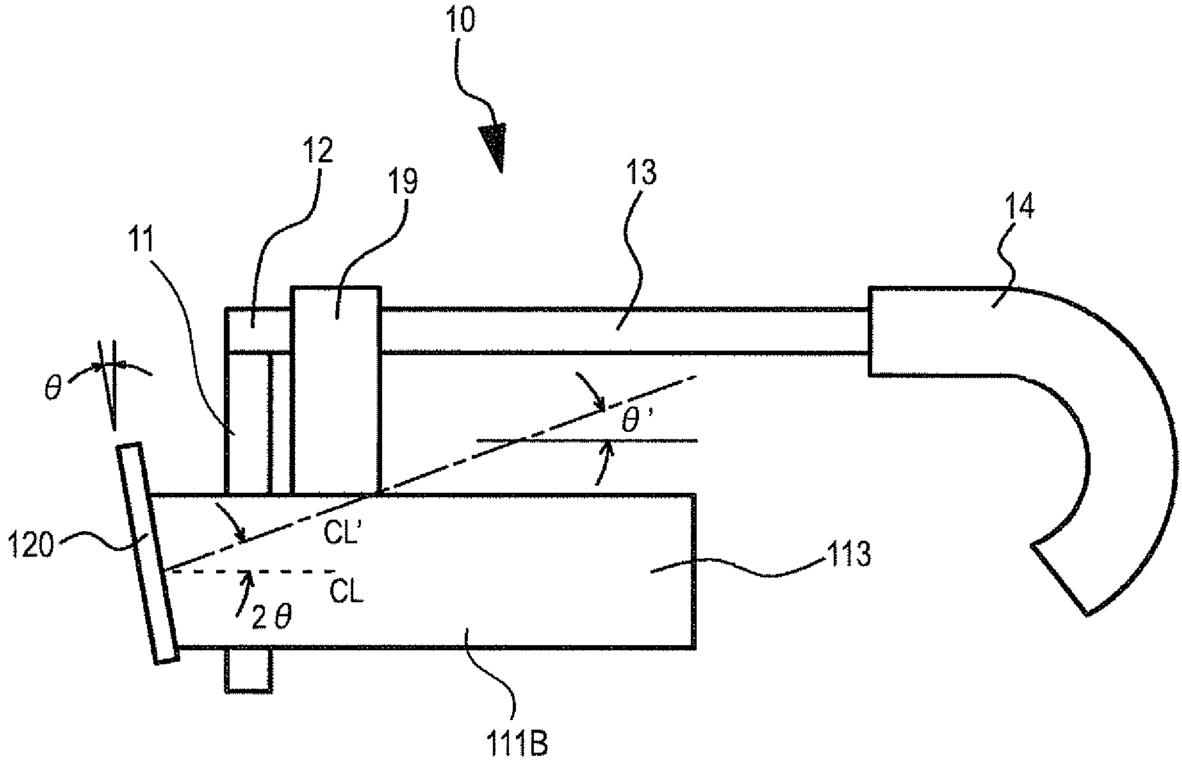

ELEVENTH EMBODIMENT

FIG.23A

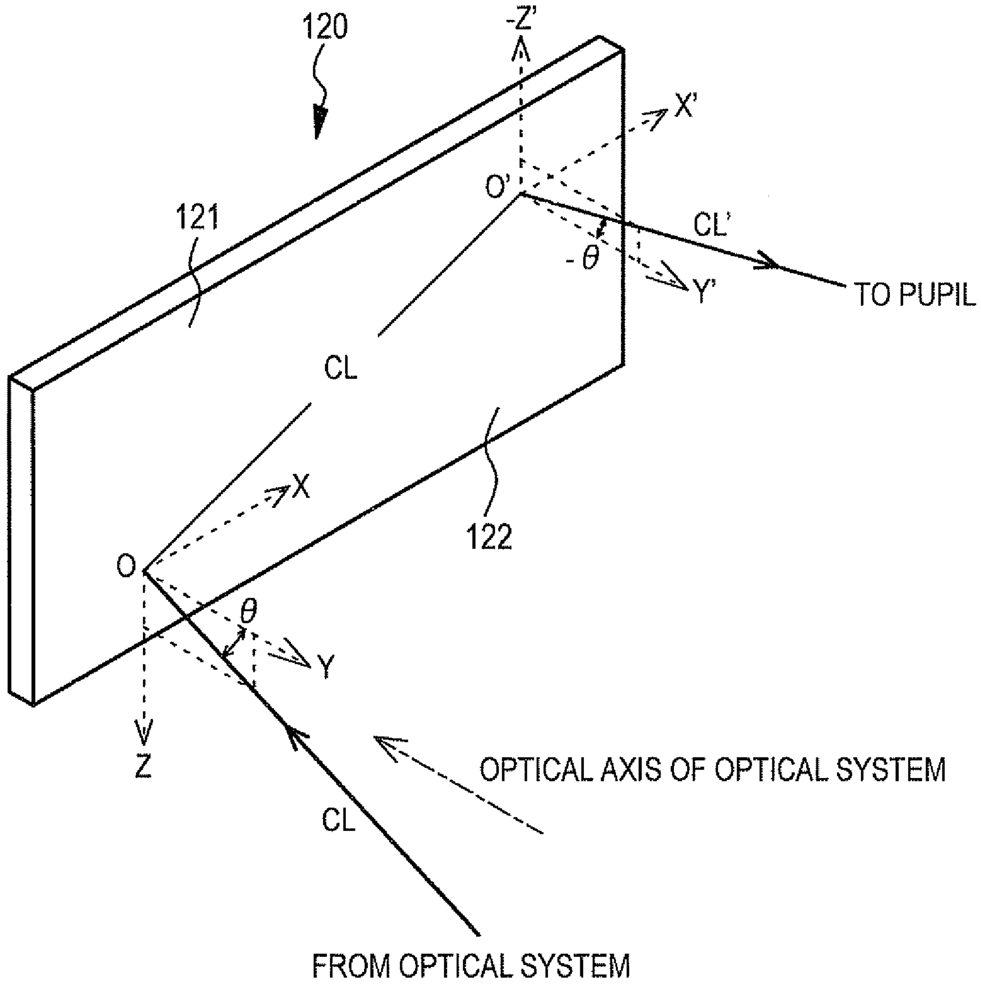


FIG.23B

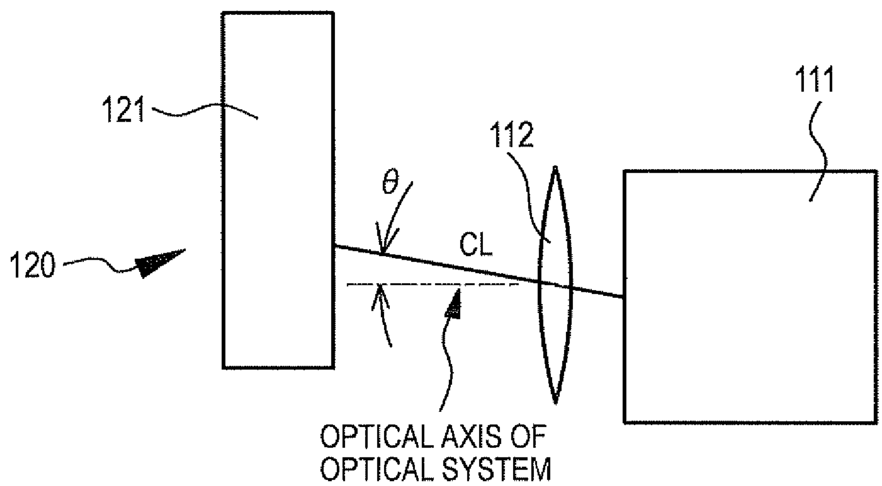

FIG.24

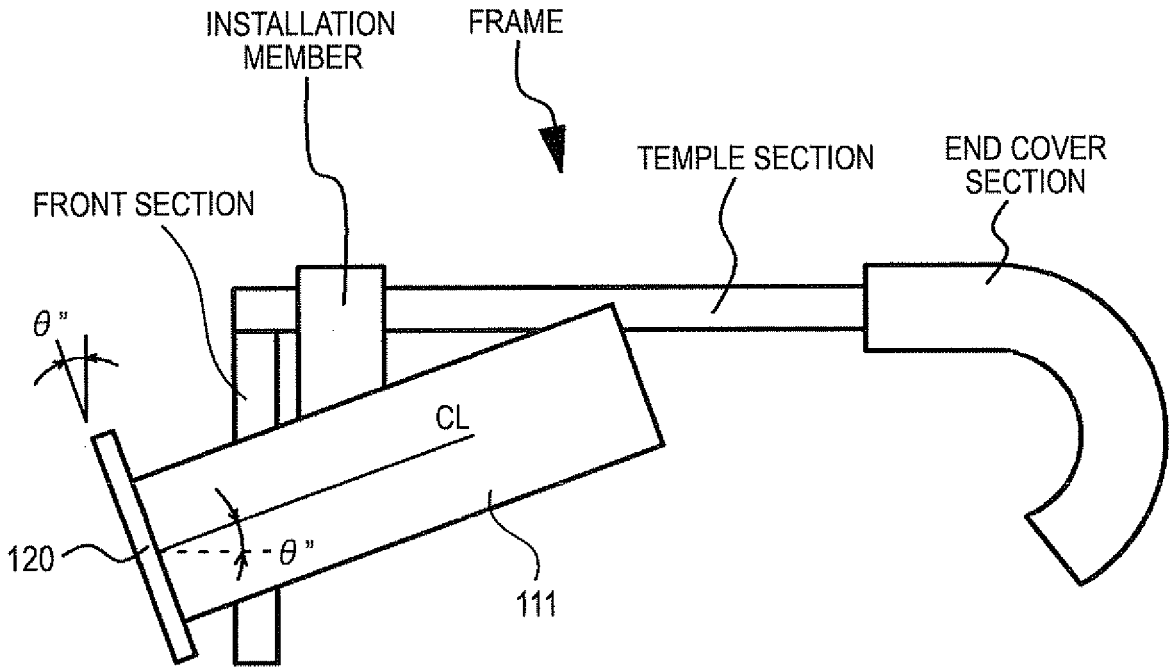
INSTALLATION MEMBER
FRAME
TEMPLE SECTION
END COVER SECTION
FRONT SECTION
θ"
CL
120
θ"
111

FIG.25

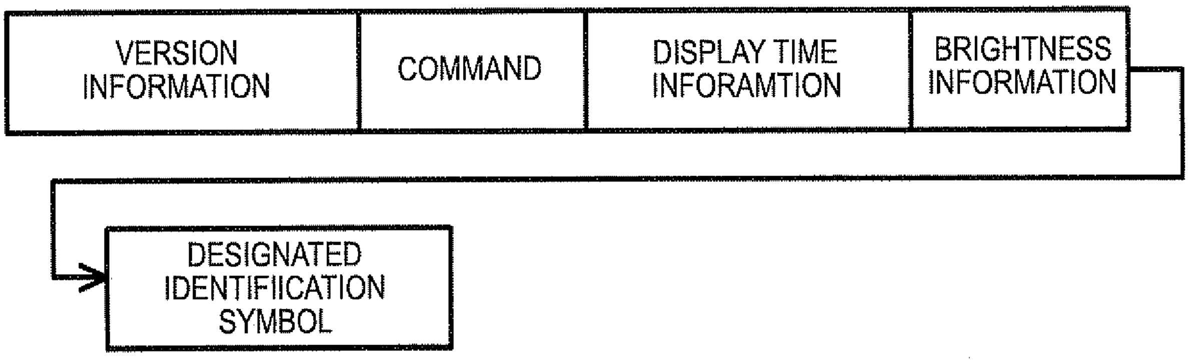
VERSION INFORMATION
COMMAND
DISPLAY TIME INFORAMTION
BRIGHTNESS INFORMATION
DESIGNATED IDENTIFIICATION SYMBOL

FIG.26A

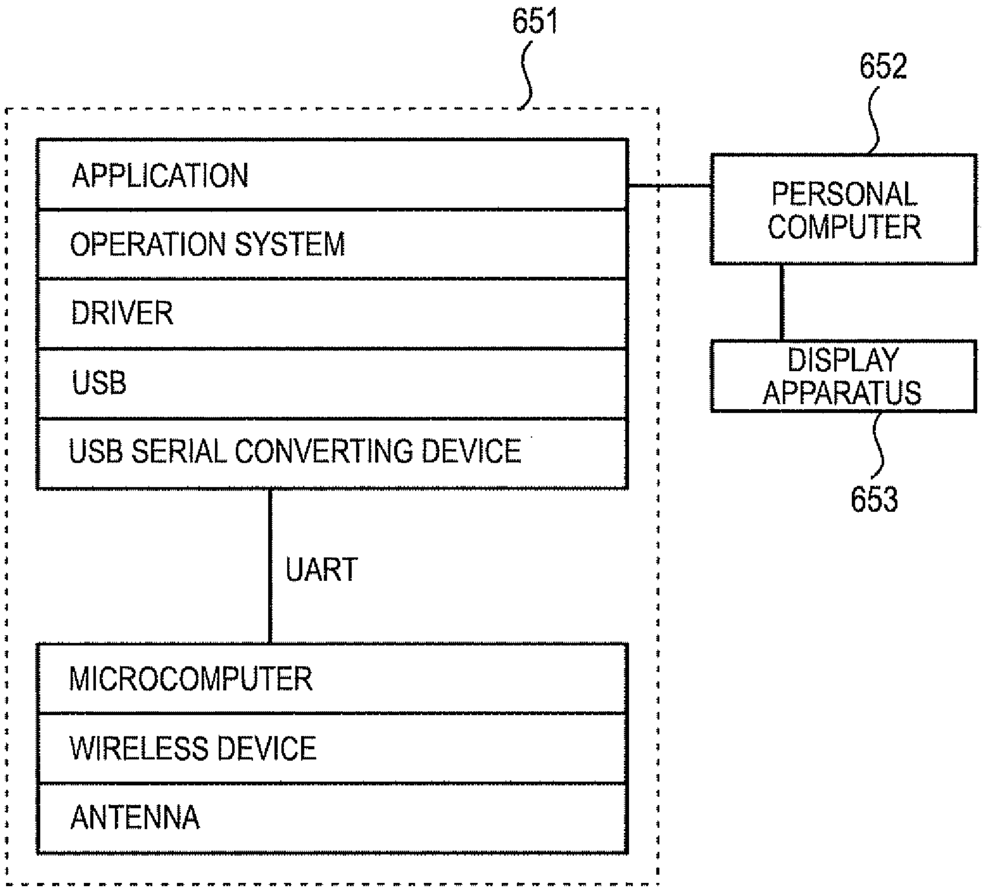


FIG.26B

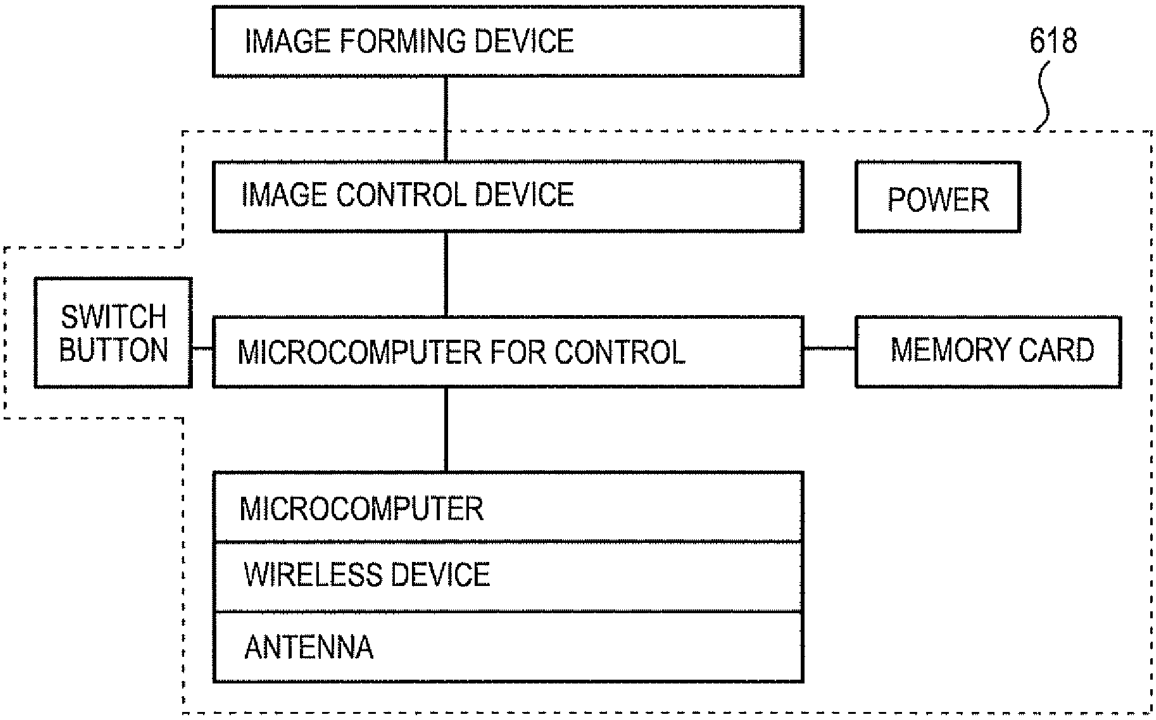

FIG.27

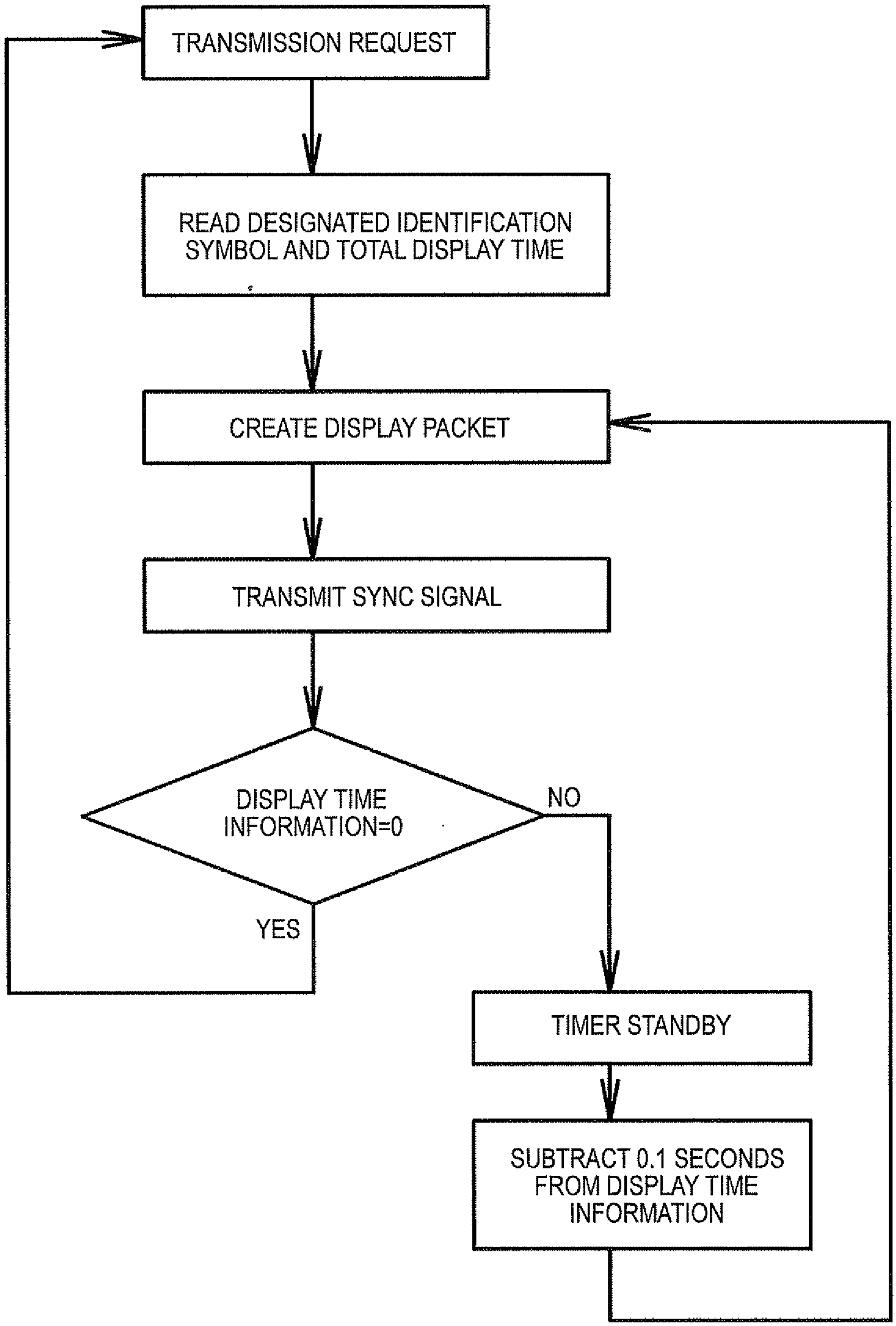
TRANSMISSION REQUEST
READ DESIGNATED IDENTIFICATION SYMBOL AND TOTAL DISPLAY TIME
CREATE DISPLAY PACKET
TRANSMIT SYNC SIGNAL
DISPLAY TIME INFORMATION=0
NO
YES
TIMER STANDBY
SUBTRACT 0.1 SECONDS FROM DISPLAY TIME INFORMATION

FIG.28

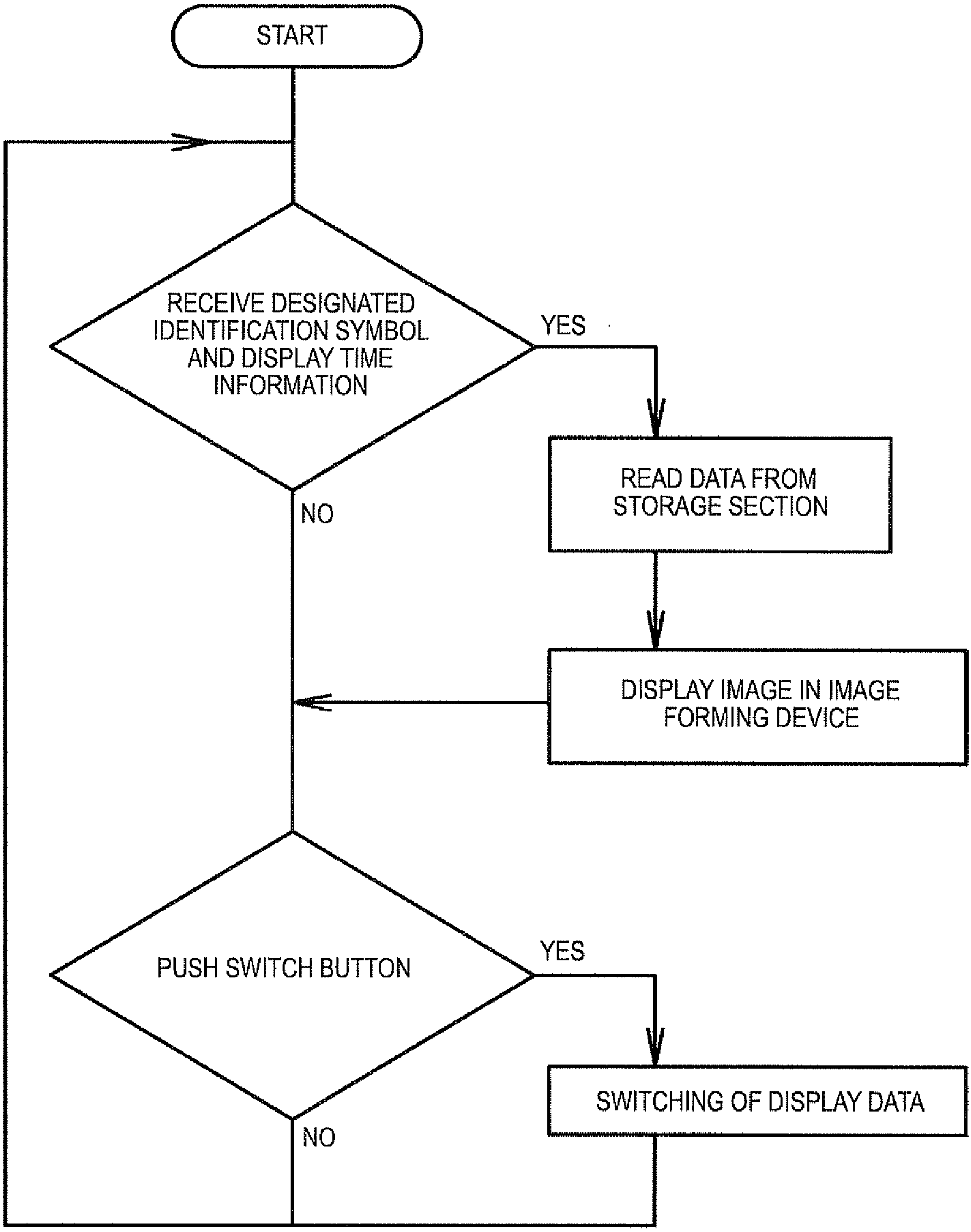
START
RECEIVE DESIGNATED IDENTIFICATION SYMBOL AND DISPLAY TIME INFORMATION
YES
NO
READ DATA FROM STORAGE SECTION
DISPLAY IMAGE IN IMAGE FORMING DEVICE
PUSH SWITCH BUTTON
YES
NO
SWITCHING OF DISPLAY DATA

FIG.29A

| DESIGNATED IDENTIFICATION SYMBOL | TOTAL DISPLAY TIME | BRIGHTNESS INFORMATION | DATA |
|---|---|---|---|
| 01 | 10 | 60 | AAAAAAAAAA |
| 02 | 20 | 60 | BBBBBBBBBB |
| 03 | 15 | 80 | CCCCCCCCCC |
| 04 | 20 | 50 | DDDDDDDDDD |

FIG.29B

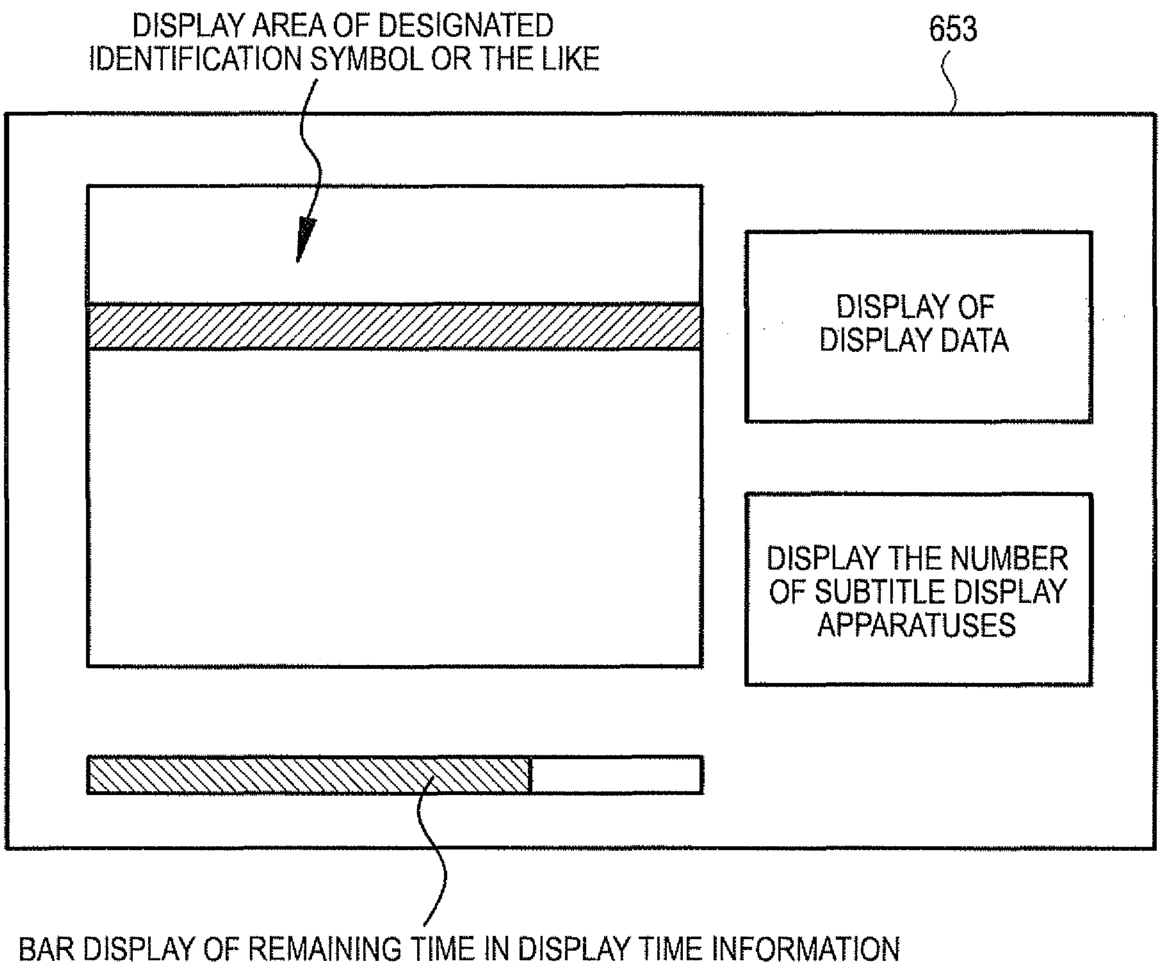

SIXTEENTH EMBODIMENT

FIG.30A

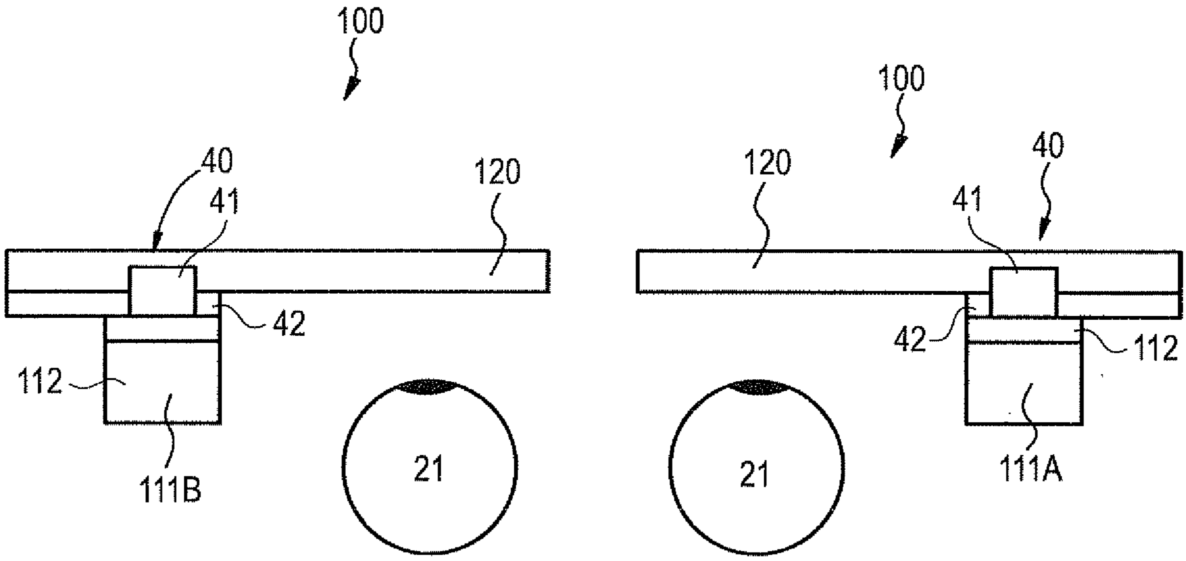


FIG.30B

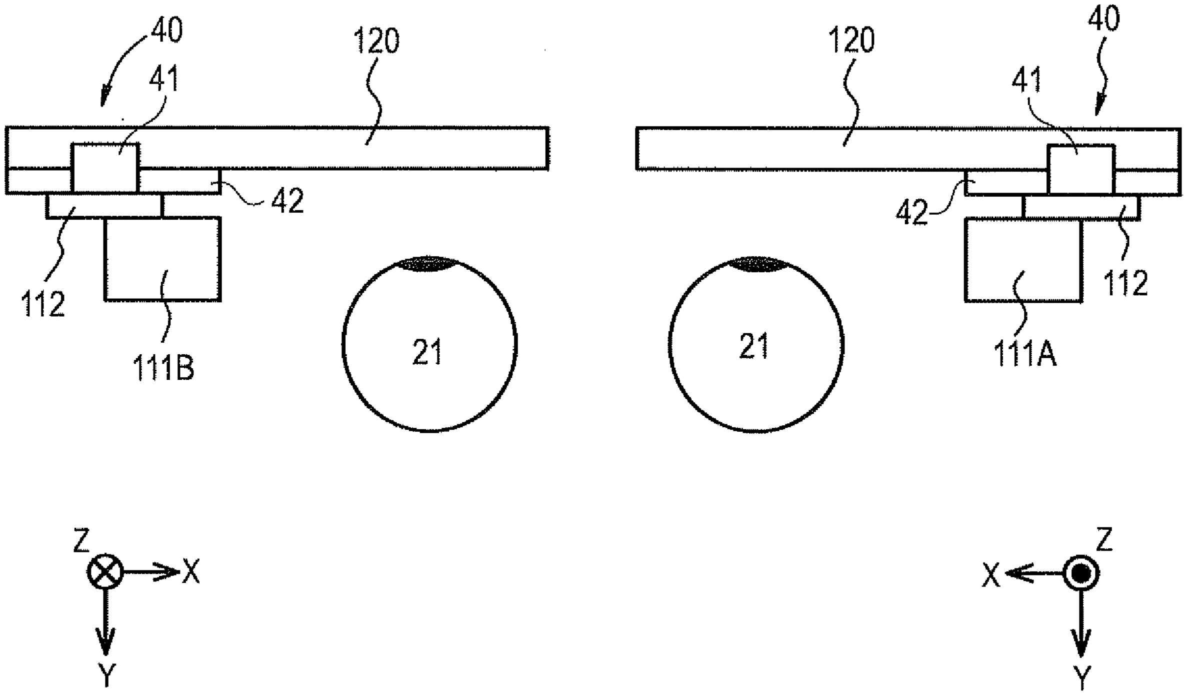

FIG.31

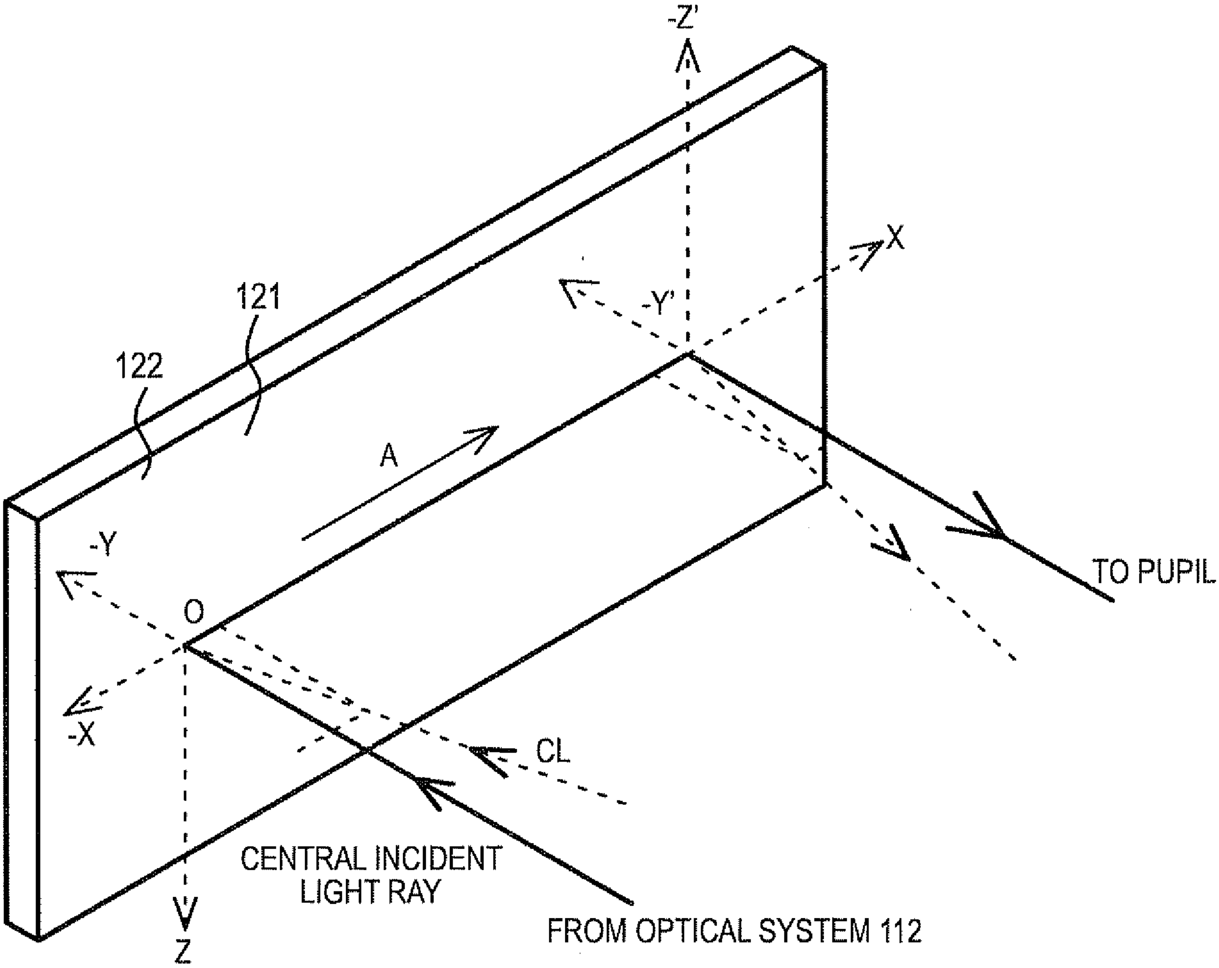
-Z'
X
-Y'
121
122
A
-Y
O
TO PUPIL
-X
CL
CENTRAL INCIDENT
LIGHT RAY
Z
FROM OPTICAL SYSTEM 112

SEVENTEENTH EMBODIMENT

FIG.32A

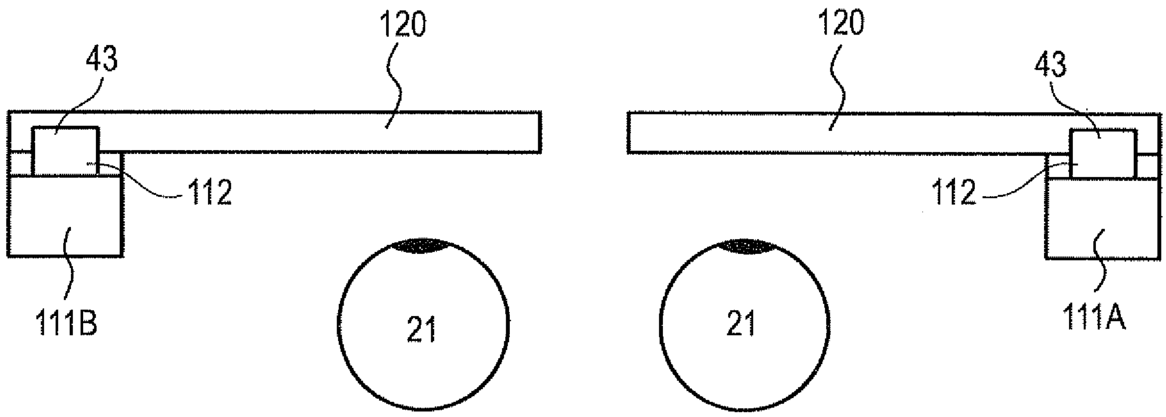


FIG.32B

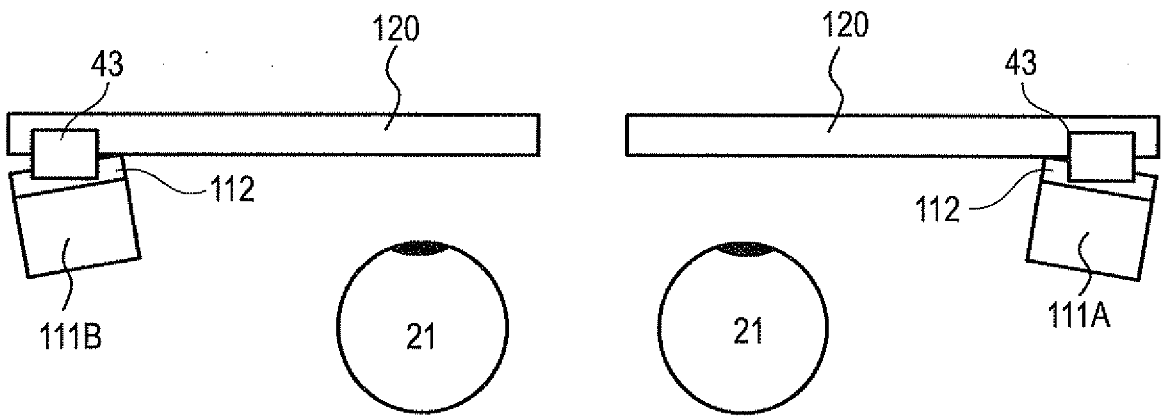

[PRINCIPLE DIAGRAM]

FIG.33A

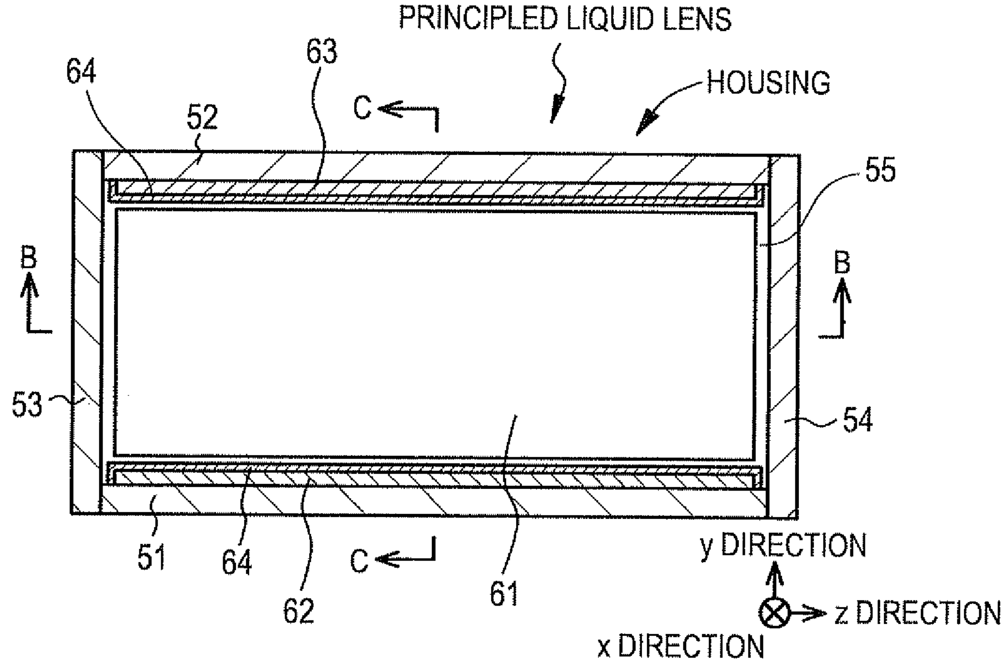


FIG.33B

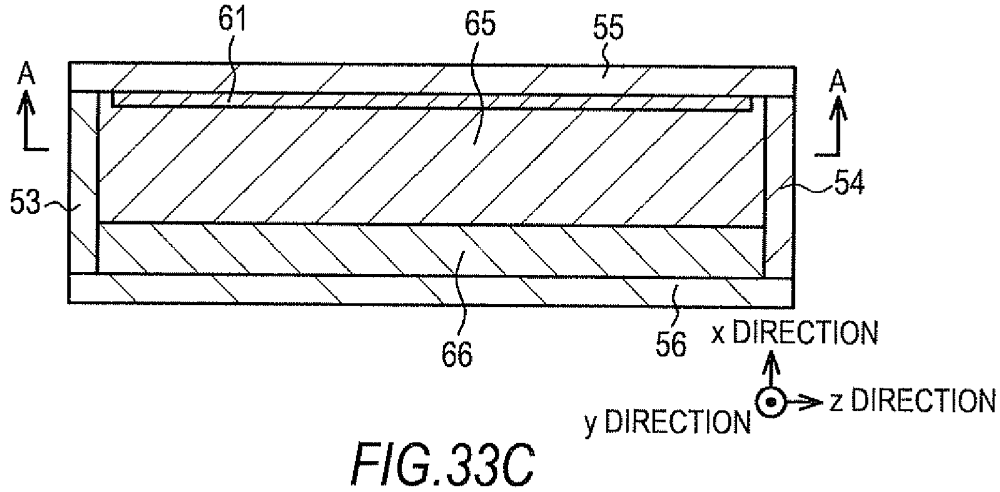


FIG.33C

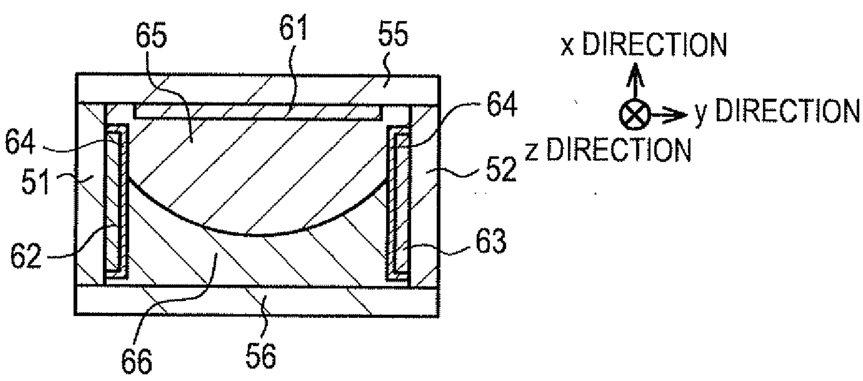

FIG.34A

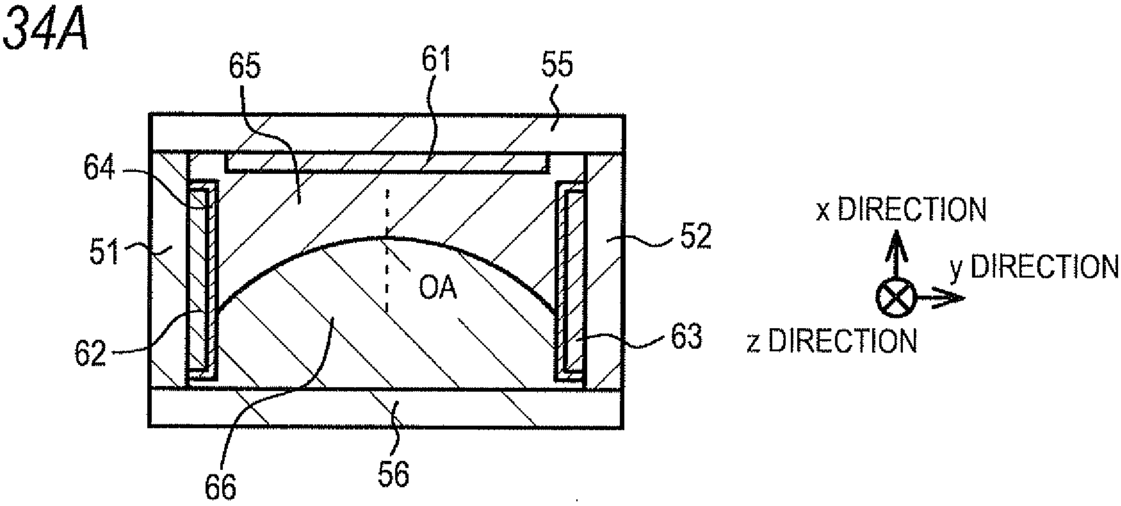


FIG.34B

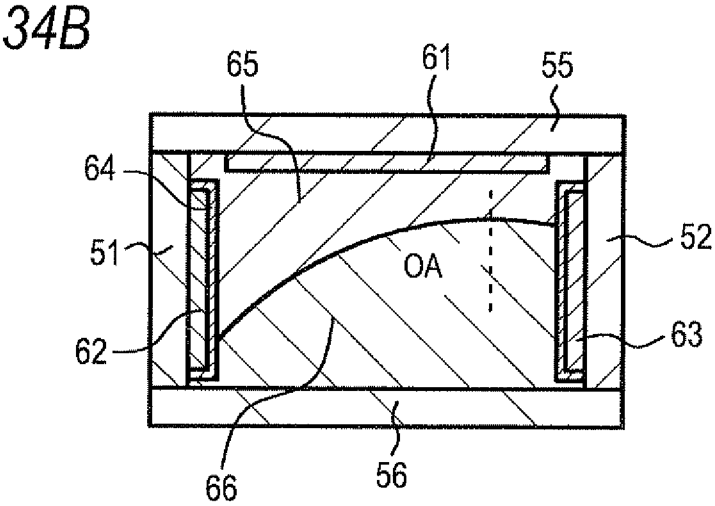


FIG.34C

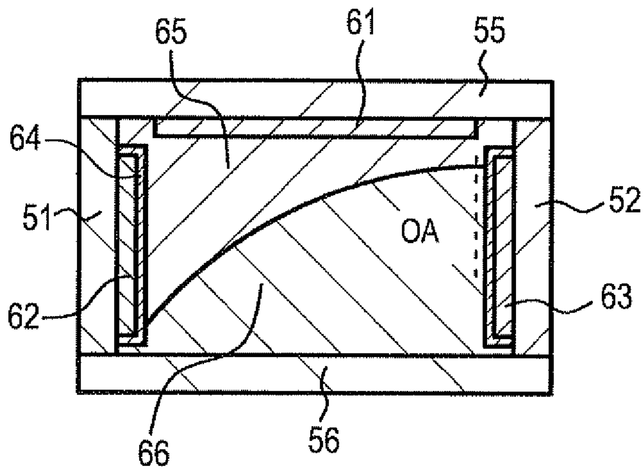

FIG.35

[EIGHTEENTH EMBODIMENT]

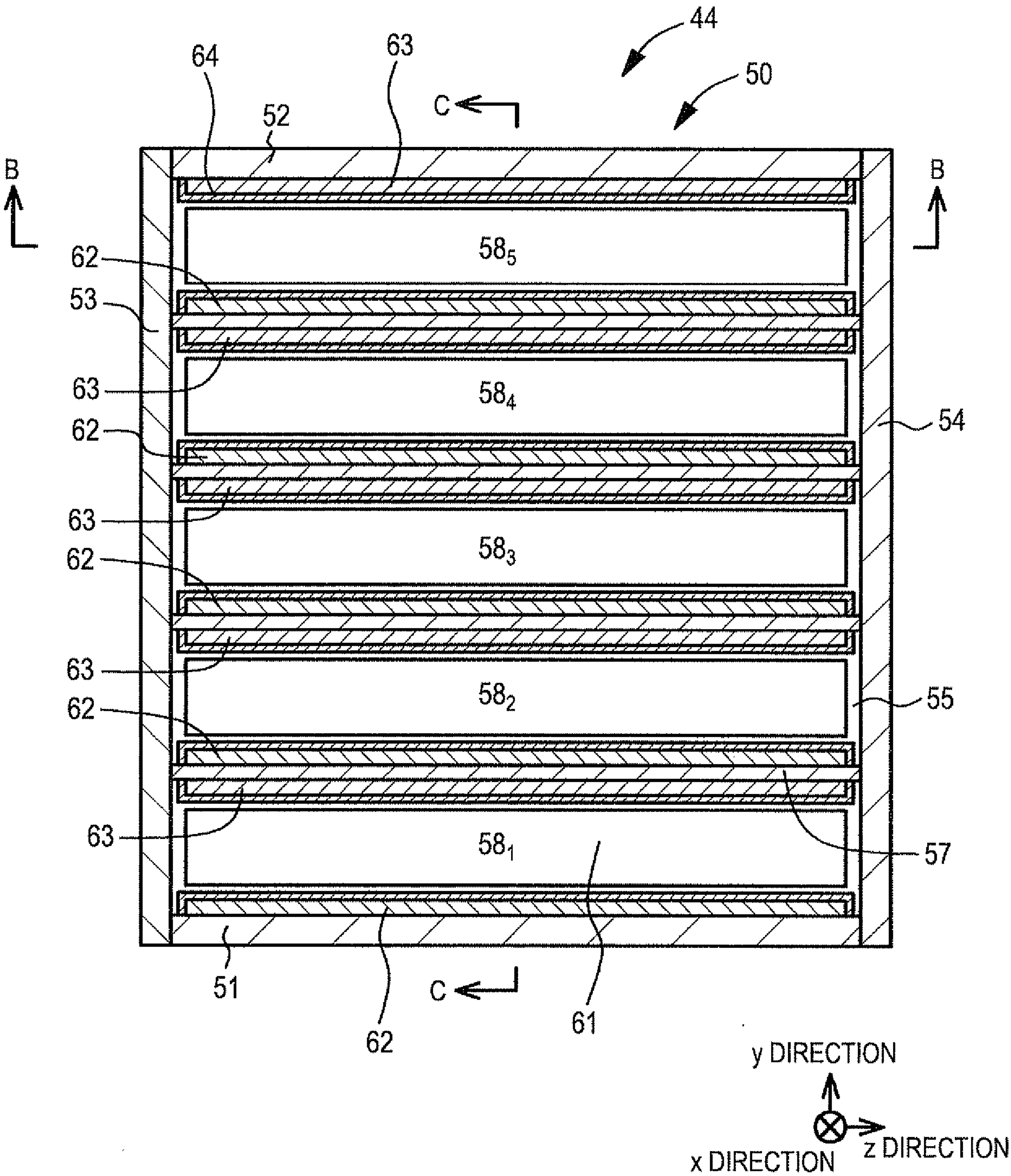

FIG.36A

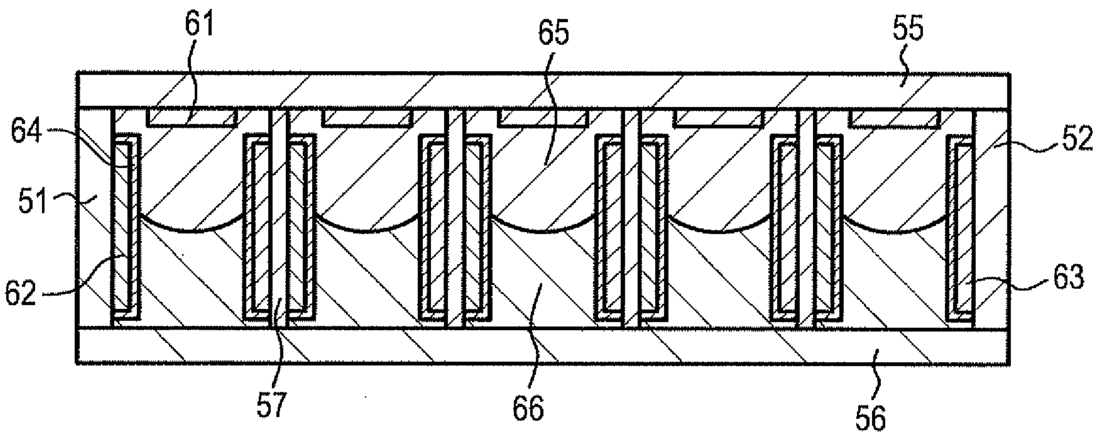


FIG.36B

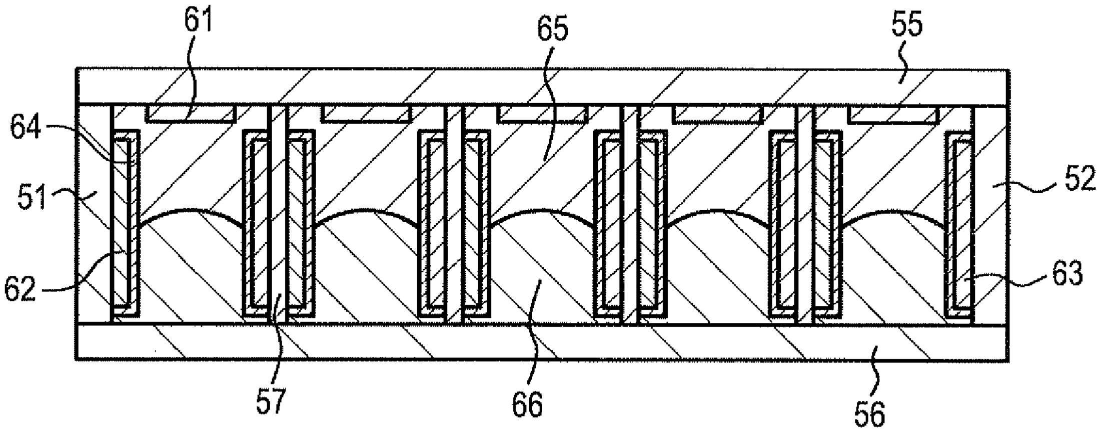


FIG.36C

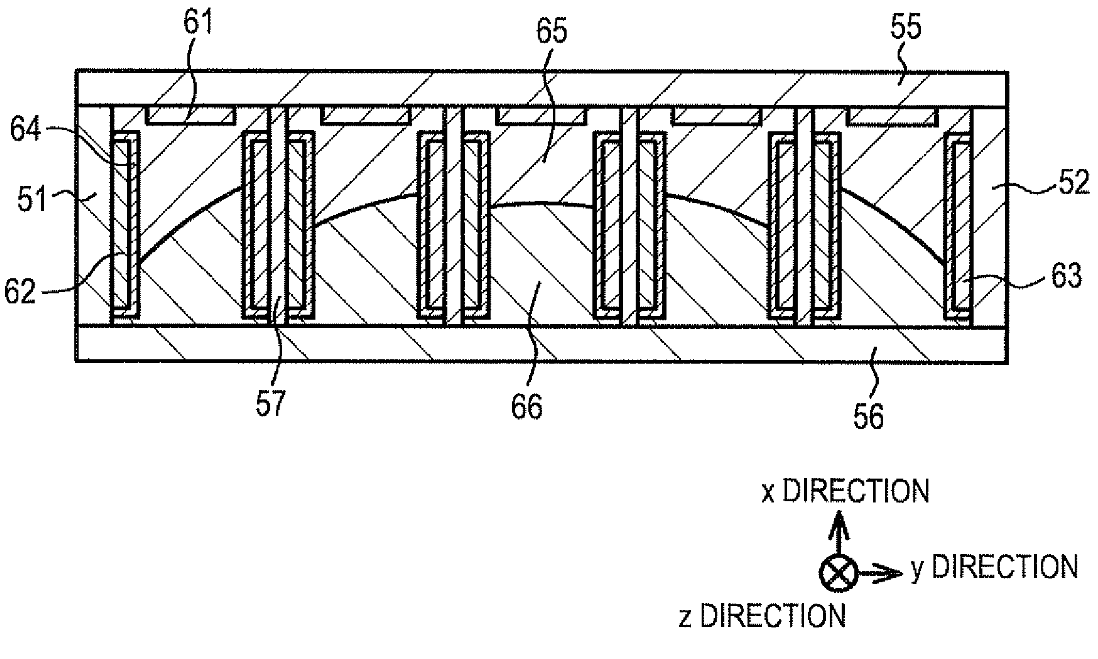

FIG.37A

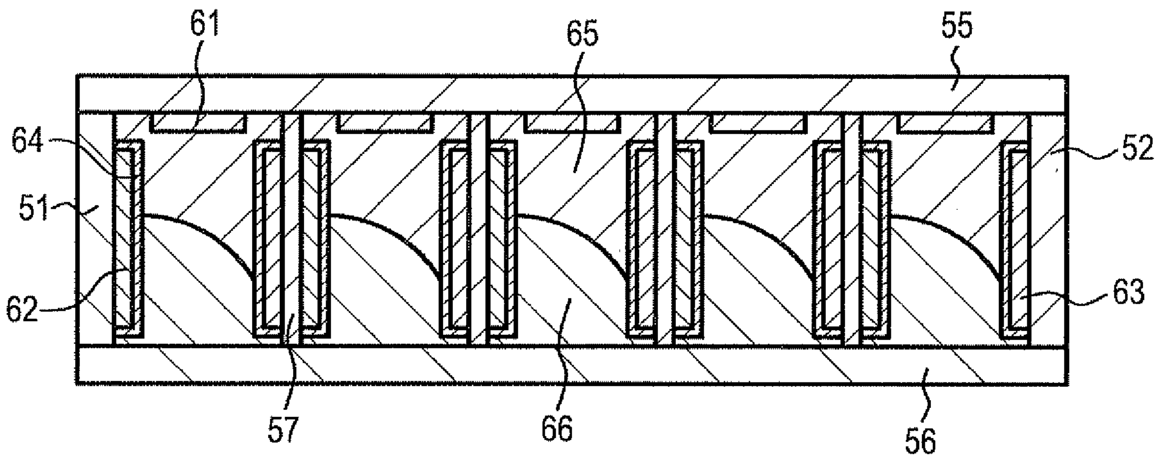


FIG.37B

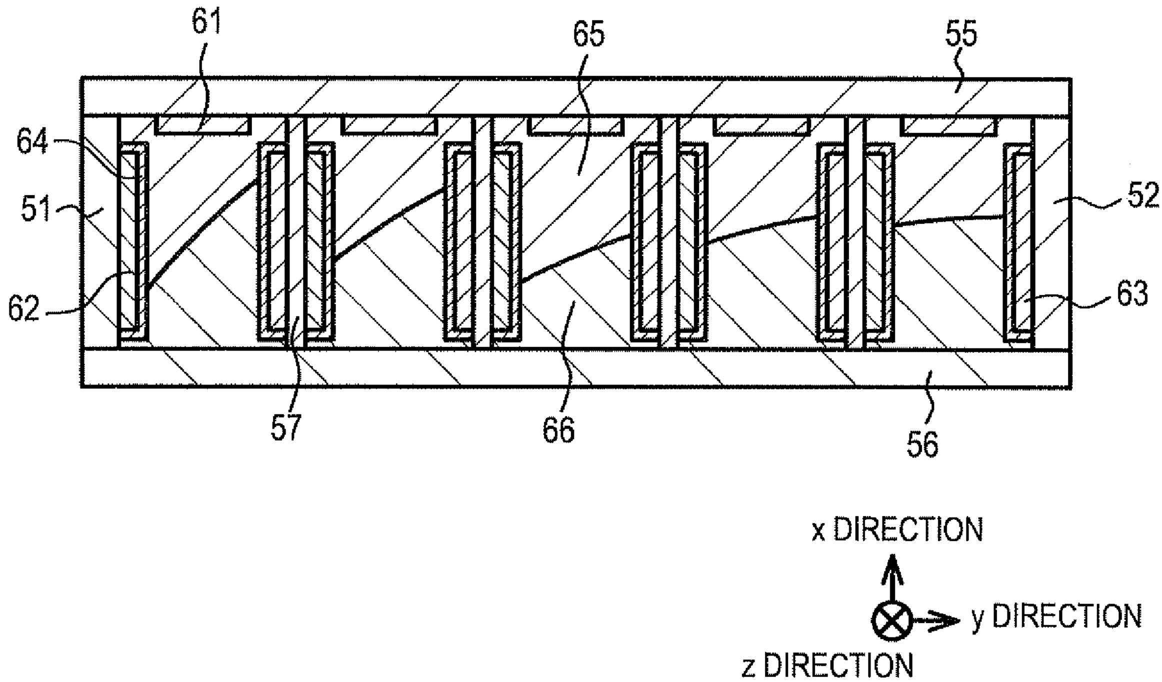

FIG.38

NINETEENTH EMBODIMENT

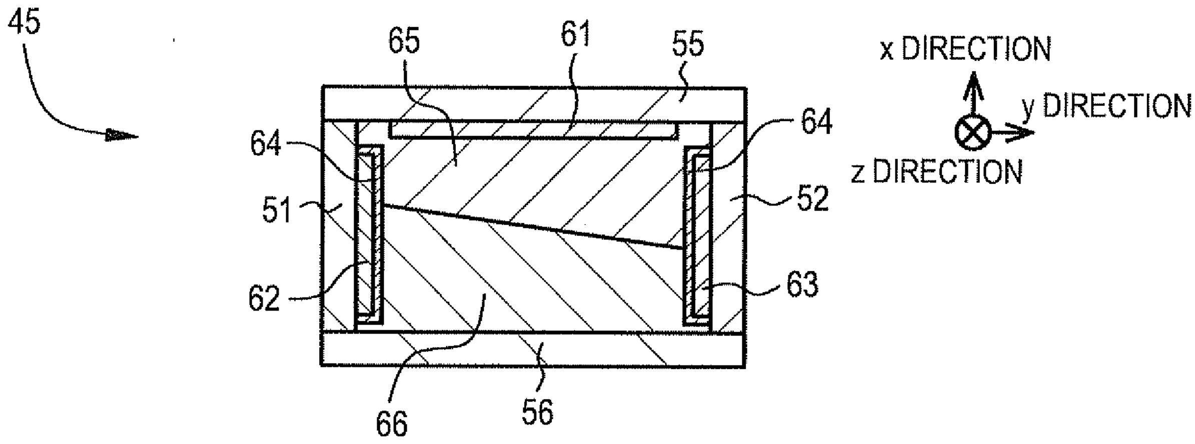


FIG.39

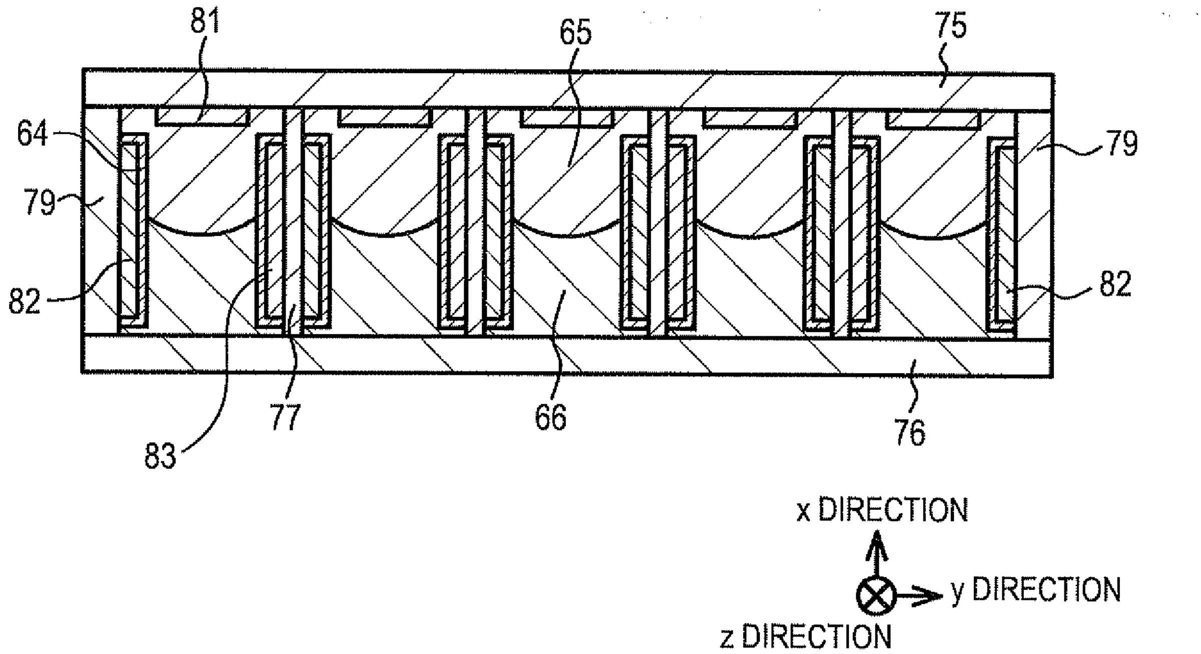

FIG.40

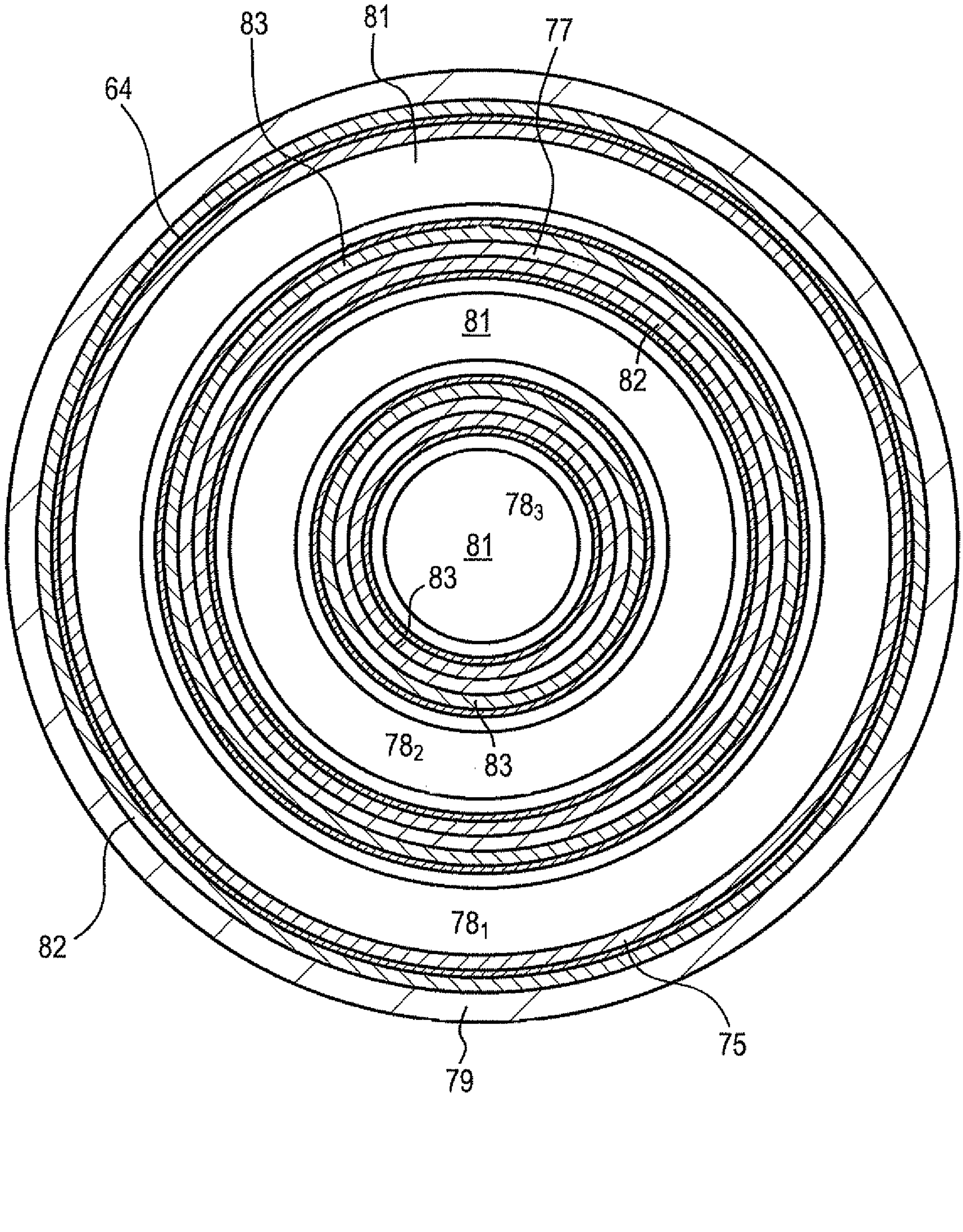

FIG.41

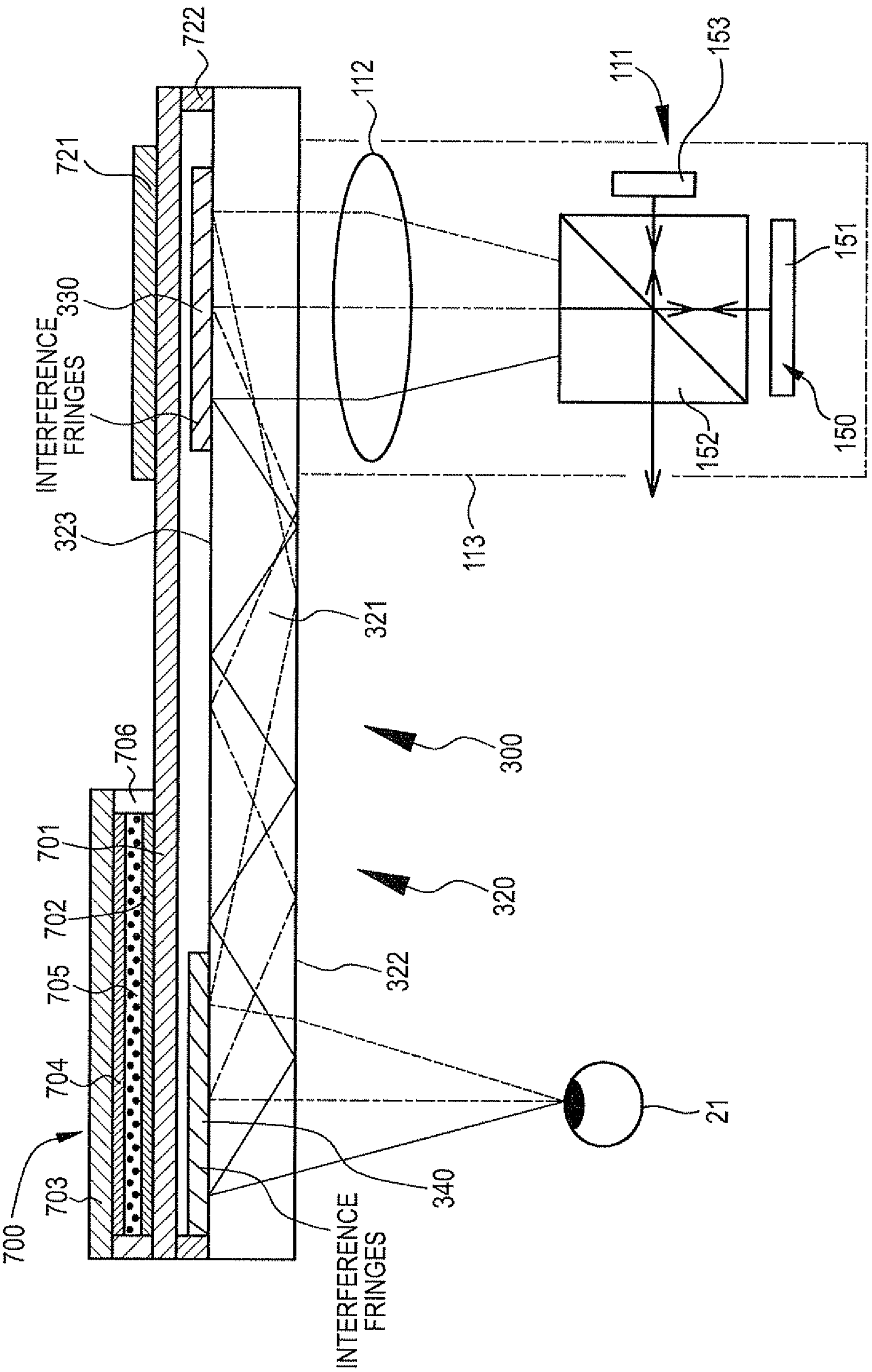
722
721
112
111
153
330
INTERFERENCE FRINGES
151
150
152
323
113
321
706
300
701
320
702
705
322
704
21
700
703
340
INTERFERENCE FRINGES

FIG. 42

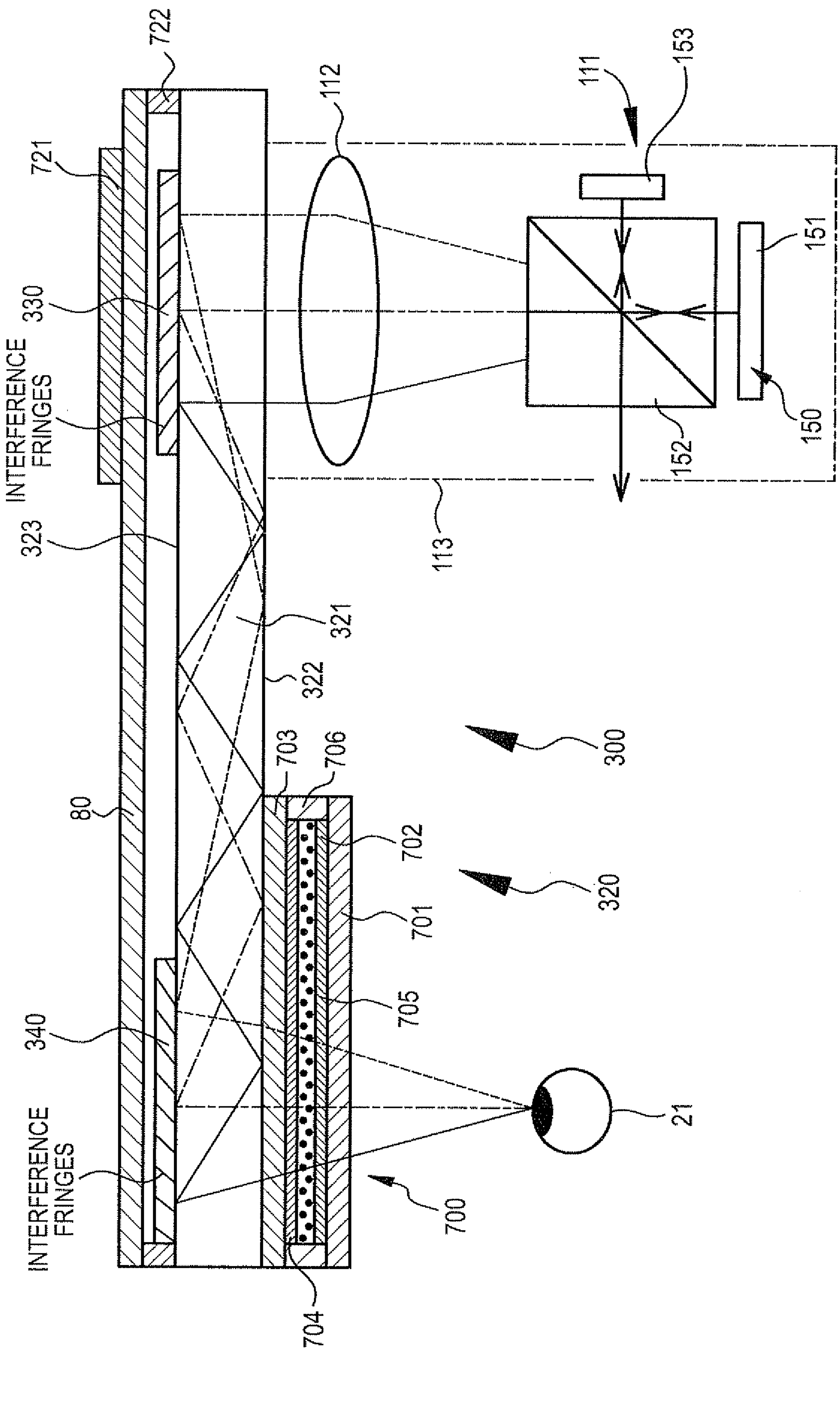

722
721
330
INTERFERENCE FRINGES
323
80
340
INTERFERENCE FRINGES
112
111
153
151
152
150
113
321
322
300
703
706
702
320
701
705
21
700
704

FIG.43

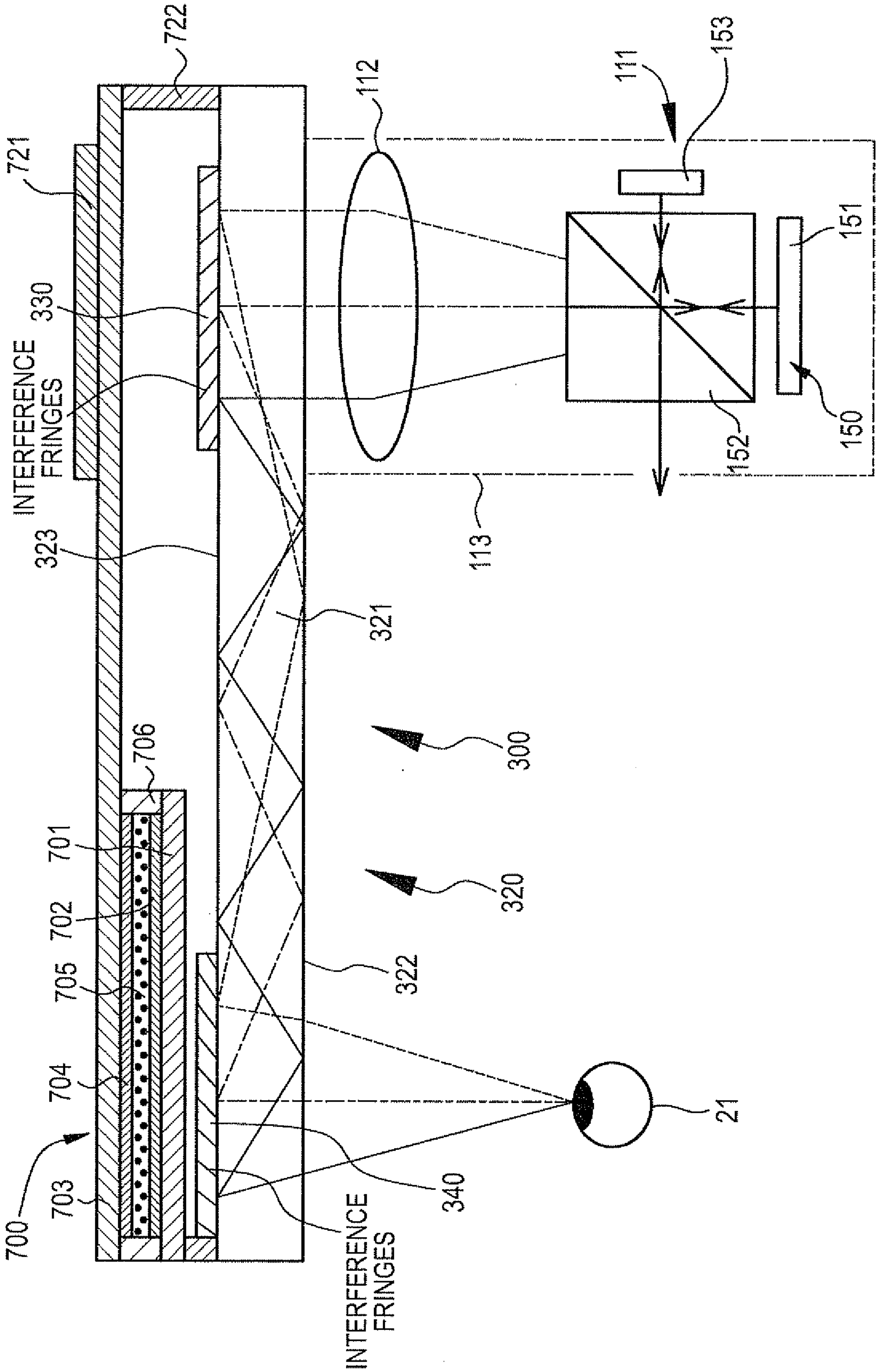
722
721
112
111
153
151
150
152
113
330
INTERFERENCE FRINGES
323
321
300
320
322
706
701
702
705
704
703
700
340
21
INTERFERENCE FRINGES

FIG.44

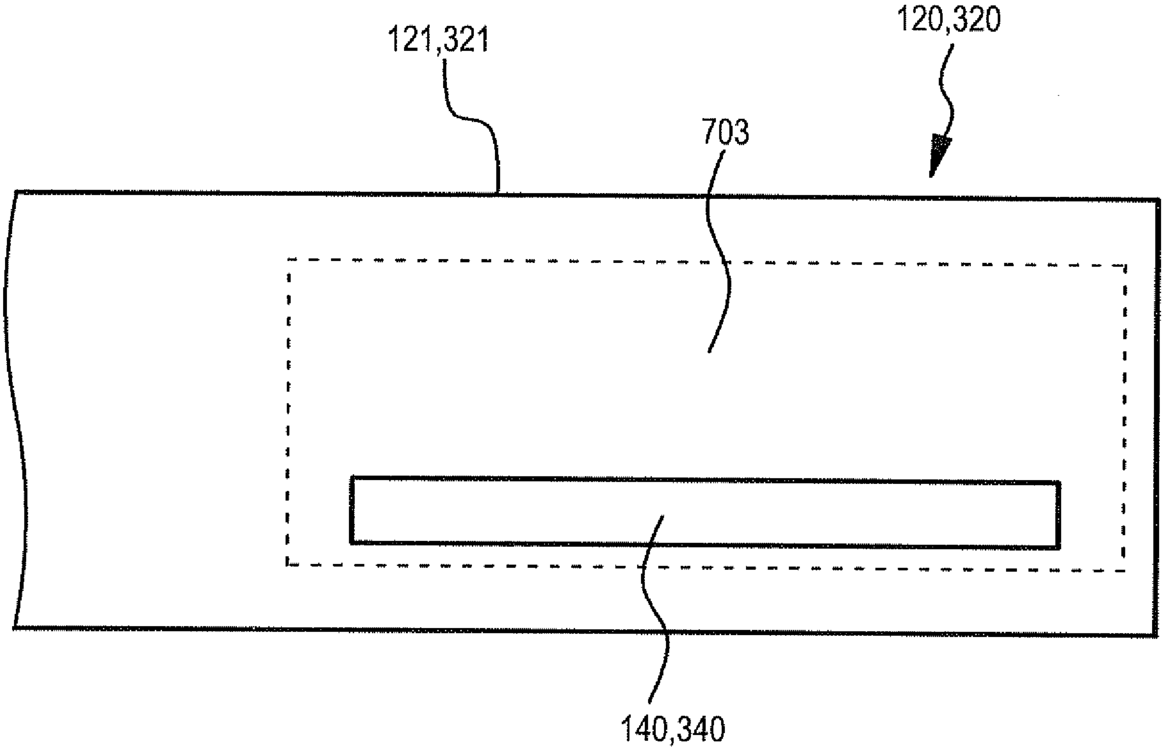

FIG.45

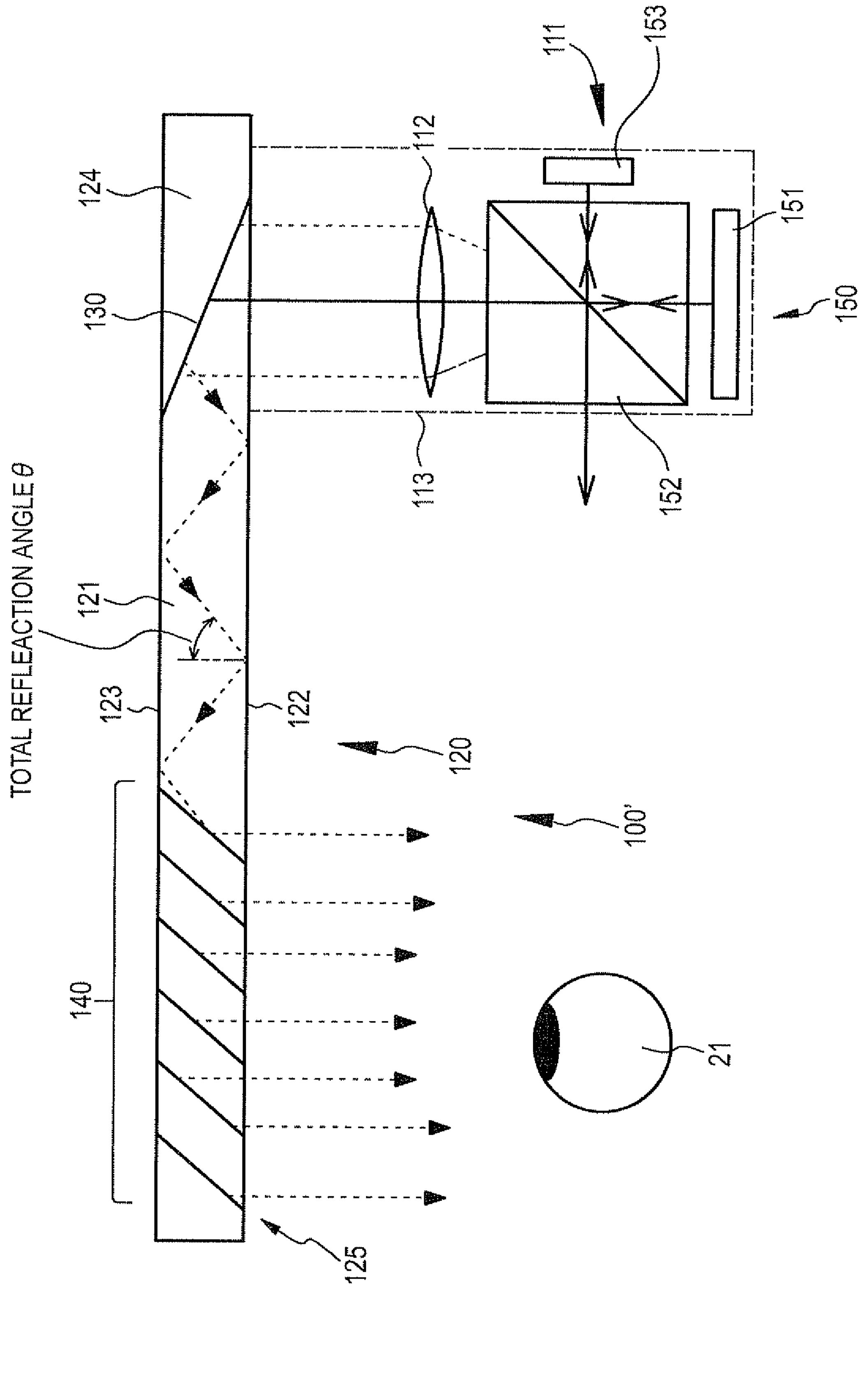
111
153
112
124
151
130
150
113
152
TOTAL REFLEACTION ANGLE θ
121
123
122
120
100'
140
21
125

FIG.46

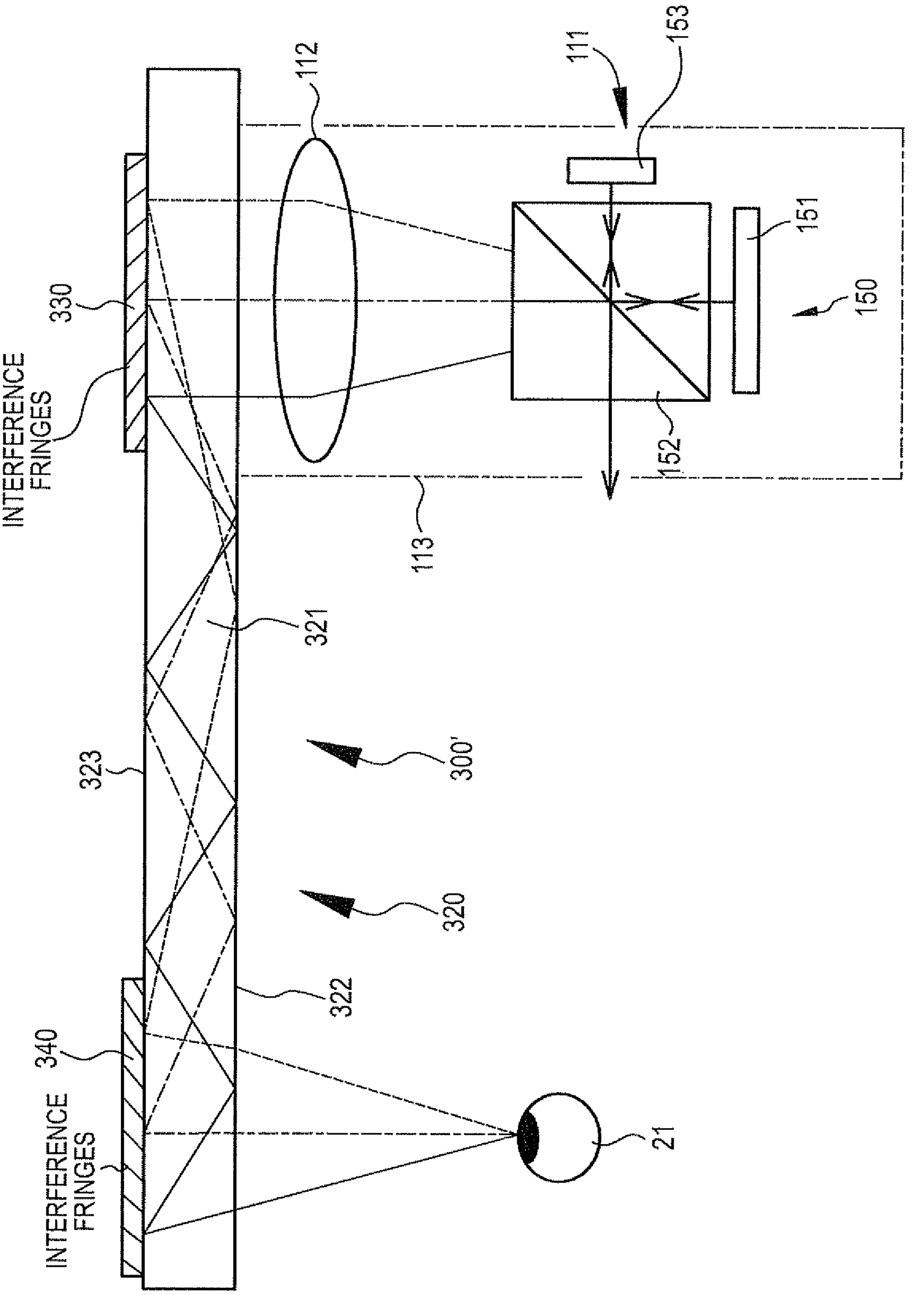
111
112
113
150
151
152
153
330
INTERFERENCE FRINGES
321
323
300'
320
322
340
INTERFERENCE FRINGES
21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006162767 A
- JP 2007094175 A
- JP 2004101197 A
- US 2007159673 A1
- JP 3744984 B
- JP 2005521099 A
- US 20040062505 A1
- JP 2011133913 A